# EUROPEAN PATENT APPLICATION

(11) **EP 4 604 302 A1**
(43) Date of publication of application: **20.08.2025**
(21) Application number: 23925671.2
(22) Date of filing: 03.03.2023
(51) Int. Cl.: H01M 50/50

(54) **BATTERY CELL, BATTERY, ELECTRIC DEVICE, AND ASSEMBLY METHOD FOR BATTERY CELL**

(71) Applicant: Contemporary Amperex Technology (Hong Kong) Limited, Hong Kong (HK)
(72) Inventor: LIN, Wenfa, Ningde, Fujian 352100 (CN); LUO, Weijie, Ningde, Fujian 352100 (CN); TANG, Minghao, Ningde, Fujian 352100 (CN); ZHANG, Shengwu, Ningde, Fujian 352100 (CN)
(74) Representative: Ran, Handong
(86) International application number: PCT/CN2023/079678
(87) International publication number: WO 2024/182945

(57) **Abstract**

A battery cell, a battery, an electric device, and an assembly method for a battery cell. The battery cell comprises: a case assembly, which comprises a case and first post terminals, wherein the case comprises a case body and a case cover, the case body having an opening, the case cover covering the opening, and the case body being provided with the first post terminals; and a battery cell assembly, which comprises an active substance coating portion and electrically conductive portions, wherein the active substance coating portion is accommodated in the case body, and the electrically conductive portions are electrically connected to the active substance coating portion and the first post terminals. The present application can reduce the probability of cracking occurring at a weld joint between the case body and the case cover during use of the battery, thereby improving the reliability of the battery cell.

## Description

### TECHNICAL FIELD

The present application relates to the field of battery technology, and in particular, to a battery cell, a battery, an electric device, and a method for assembling a battery cell.

### BACKGROUND

In recent years, new energy vehicles have developed by leaps and bounds. In the field of electric vehicles, batteries, as the power source of electric vehicles, play an irreplaceable and important role. How to improve the reliability of battery cells is an urgent problem to be solved.

### SUMMARY

The embodiments of the present application provide a battery cell, a battery, an electric device, and a method for assembling a battery cell, which are beneficial to improving the reliability of battery cells.

In a first aspect, the embodiments of the present application provide a battery cell, including: a housing assembly, including a housing and a first post terminal, where the housing includes a housing body and a housing cover, the housing body is provided with an opening, the opening is lidded with the housing cover, and the housing body is provided with the first post terminal; and a battery cell assembly, including an active substance-coated part and a conductive part, where the active substance-coated part is accommodated in the housing body, and the conductive part electrically connects the active substance-coated part to the first post terminal.

In the above technical solution, in the battery, since the first post terminals of any adjacent battery cells are connected to each other, when the battery vibrates or deforms, the first post terminals of any adjacent battery cells will be pulled by each other. At this time, since the first post terminals are arranged on the housing body, the force applied to the first post terminals will be preferentially transmitted to the housing body, rather than directly acting on the housing cover. Such a configuration increases the transmission distance of the force to the weld seam between the housing body and the housing cover and reduces the stress at the weld seam between the housing body and the housing cover since the housing body will first deform, thus effectively reducing the probability of cracking at the weld seams of the housing body and the housing cover during the use of the battery and improving the reliability of the battery cells.

In some embodiments, the first post terminal is provided with an accommodating part, and at least a part of the conductive part is accommodated in the accommodating part.

In the above technical solution, the arrangement of the accommodating part in the first post terminal can reduce the weight of the first post terminal to a certain extent, so as to improve the gravimetric energy density of the battery cell and the battery. Also, by accommodating at least a part of the conductive part in the accommodating part to occupy the space in the first post terminal, the space occupied by the conductive part in the housing can be reduced, and in the case of given dimensions of the housing, some space can be saved in the housing to accommodate a larger active substance-coated part, thereby improving the volumetric energy density of the battery cell. In addition, the accommodation of at least a part of the conductive part in the accommodating part can reduce the space occupied by the battery cell, so as to accommodate a greater number of battery cells in a battery of a given volume and improve the volumetric energy density of the battery. Moreover, the accommodation of at least a part of the conductive part in the accommodating part can reduce the redundancy of the conductive part in the housing to a certain extent, reduce the probability of short circuit between the conductive part and the active substance-coated part, and reduce the probability of short circuit of the battery cell assembly, thus further improving the working reliability and stability of the battery cell and the battery. The accommodation of at least a part of the conductive part in the accommodating part of the first post terminal may also facilitate the connection of the conductive part to the first post terminal.

In some embodiments, the accommodating part is provided with a first accommodating groove, the surface of the first post terminal on the side proximal to the active substance-coated part is a post terminal inner end surface, an opening of the first accommodating groove is formed on the post terminal inner end surface, and at least a part of the conductive part is accommodated in the first accommodating groove.

In the above technical solution, the provision of the first accommodating groove on the first post terminal can reduce the weight of the first post terminal to a certain extent, so as to improve the gravimetric energy density of the battery cell and the battery. Since the opening of the first accommodating groove is formed on the post terminal inner end surface and the post terminal inner end surface is the surface of the first post terminal on the side proximal to the active substance-coated part, the first accommodating groove may be open toward the active substance-coated part, thereby facilitating the conductive part to extend into the first accommodating groove and improving the assembly efficiency. Also, since the first accommodating groove faces toward the active substance-coated part, the first accommodating groove may also serve as a buffering and temporary storage structure for the electrolyte, such that more electrolyte can be accommodated in the housing. Since the electrolyte will be consumed during the charging and discharging process of the battery cell, a greater amount of electrolyte can prolong the service life of the battery cell. It is also due to the fact that the first accommodating groove faces toward the active substance-coated part, that the first accommodating groove can serve as an accommodating and buffering structure for gases produced in the battery cell assembly, reducing the expansion of the battery cell and improving the reliability and stability of the battery cell. In addition, as the first accommodating groove is located on the inner side of the post terminal, external foreign matters and impurities can hardly enter the first accommodating groove, thereby reducing the impact of external foreign matters and impurities on the battery cell assembly, ensuring the working stability and reliability of the battery cell assembly, and further improving the stability and reliability of the battery cell and the battery. Moreover, the location of the first accommodating groove on the inner side of the post terminal and the accommodation of at least a part of the conductive part in the first accommodating groove will facilitate the limitation of the conductive part inside the post terminal and facilitate the connection of the conductive part to the first post terminal.

In some embodiments, the housing is provided with a mounting hole, and the first post terminal is mounted in the mounting hole; in the axial direction of the first post terminal, the depth H1 of the first accommodating groove is greater than or equal to the minimum distance H2 from the post terminal inner end surface to the mounting hole.

In the above technical solution, since the depth of the first accommodating groove in the axial direction of the first post terminal is greater than or equal to the minimum distance from the post terminal inner end surface to the mounting hole, the volume of the first post terminal can be fully utilized, such that the first accommodating groove has a greater depth, which is conducive to accommodating more conductive parts, thereby reducing the space occupied by the conductive parts in the housing to a greater extent, further improving the energy density of the battery cell, and further reducing the redundancy of the conductive parts in the housing. Also, due to the greater depth, the first accommodating groove can accommodate the gas produced by the battery cell assembly to ensure the reliability and stability of the battery cell, and can also accommodate more electrolyte to ensure the service life of the battery cell.

In some embodiments, the accommodating part includes a first end wall and a first side wall, the first end wall is located on the side of the first side wall distal to the active substance-coated part, the first end wall and the first side wall define, in an enclosing manner, the first accommodating groove, and the electrical connection position between the conductive part and the first post terminal is located on the first end wall and/or the first side wall.

In the above technical solution, setting the electrical connection position between the conductive part and the first post terminal on at least one of the first end wall and the first side wall will provide the first accommodating groove with the functionality of accommodating at least a part of the conductive part as well as the functionality of achieving the electrical connection to the conductive part, thereby simplifying the structure of the first post terminal, facilitating the processing of the first post terminal, simplifying the structure of the conductive part, reducing the redundancy of the conductive part, and reducing the cost of the conductive part. Moreover, utilizing the wall of the first accommodating groove to achieve the electrical connection to the conductive part may allow a relatively greater area of the electrical connection between the conductive part and the first post terminal, which not only reduces the difficulty of electrical connection, but also improves the reliability and stability of the electrical connection, thereby improving the performance of the battery cell. When the electrical connection position between the conductive part and the first post terminal is located on the first end wall, it may be convenient to connect the conductive part and the first end wall from the exterior.

In some embodiments, the first end wall is provided with a first recess, and at least a part of the electrical connection position between the conductive part and the first end wall is located in the first recess.

In the above technical solution, arranging the first recess on the first end wall may achieve the pre-positioning of the conductive part via the first recess, which is beneficial to accurately finding the position to achieve the electrical connection and improving manufacture efficiency. Also, by providing the first recess on the first end wall, the wall thickness of the part of the first end wall can be partially reduced, which is not only conducive to the welding of the electrical connection, but also conducive to reducing the weight of the first post terminal and improving the gravimetric energy density of the battery cell.

In some embodiments, the first post terminal is provided with a first groove, the surface of the first post terminal on the side distal to the active substance-coated part is a post terminal outer end surface, and an opening of the first groove is formed on the post terminal outer end surface.

In the above technical solution, arranging the first groove on the first post terminal can further reduce the weight of the first post terminal, such that the gravimetric energy density of the battery cell and the battery can be improved. Also, the first groove is located on the outer side of the first post terminal, which allows the accommodation and mounting of structural components electrically connecting various battery cells of the battery in the first groove, so as to make full use of the space in the first post terminal, thereby improving the space utilization and volumetric energy density of the battery. In addition, since the first post terminal is provided with both the first accommodating groove and the first groove, the first groove is located on the side of the first accommodating groove distal to the active substance-coated part, and the first groove is open in a direction away from the first accommodating groove, it is conducive to electrically connect the conductive part to the wall of the first accommodating groove through the first groove from the outside of the first post terminal. For example, it is conducive to externally welding the first post terminal to the conductive part through the first groove, which facilitates processing and manufacture of the battery cell and can save processing and manufacturing costs.

In some embodiments, the housing assembly further includes a groove cover, and the groove cover is arranged on the first post terminal and closes the opening of the first groove.

In the above technical solution, arranging the groove cover may facilitate the electrical connection between adjacent battery cells in the battery, and since the electrical connection position between the battery cells is separated from the electrical connection between the conductive part and the first post terminal by the first groove, and there is less interference between the two, which can further improve the stability and reliability of the battery cells. Meanwhile, the groove cover can also prevent foreign matters from entering the first groove, thereby reducing the interference of foreign matters with the battery cell assembly and further improving the reliability and stability of the battery cell.

In some embodiments, the accommodating part is provided with a second accommodating groove, the surface of the first post terminal on the side distal to the active substance-coated part is a post terminal outer end surface, an opening of the second accommodating groove is formed on the post terminal outer end surface, the second accommodating groove is in communication with the interior of the housing through a first perforation, and the conductive part is arranged in the first perforation in a penetrating manner and is at least partially accommodated in the second accommodating groove.

In the above technical solution, the arrangement of the second accommodating groove on the first post terminal can reduce the weight of the first post terminal to a certain extent, so as to improve the gravimetric energy density of the battery cell and the battery. Also, since the opening of the second accommodating groove is formed in the post terminal outer end surface, and the post terminal outer end surface is the surface of the first post terminal on the side distal to the active substance-coated part, the second accommodating groove can be opened in a direction away from the active substance-coated part. In this way, when at least a part of the conductive part is accommodated in the second accommodating groove, the storage or sorting of the conductive part or operations on the electrical connection between the conductive part and the first post terminal can be easily achieved through the opening of the second accommodating groove, thereby reducing difficulties in producing the battery cell and improving the manufacture efficiency of the battery cell. In addition, since the second accommodating groove is in communication with the interior of the housing through the first perforation, the second accommodating groove may also serve as a buffering and temporary storage structure for the electrolyte, such that more electrolyte can be accommodated in the housing. Since the electrolyte will be consumed during the charging and discharging process of the battery cell, a greater amount of electrolyte can prolong the service life of the battery cell. It is also due to the fact that the second accommodating groove is in communication with the housing through the first perforation, that the second accommodating groove may also serve as an accommodating and buffering structure for gas generated inside the battery cell assembly, thereby reducing the expansion of the battery cell and improving the reliability and stability of the battery cell.

In some embodiments, the electrical connection position between the conductive part and the first post terminal is located on a wall of the first perforation formed in the accommodating part.

In the above technical solution, when the electrical connection position between the conductive part and the first post terminal is arranged on the wall of the first perforation, the electrical connection operation between the conductive part and the first post terminal may be performed through the second accommodating groove. Also, the electrical connection position between the conductive part and the first post terminal can achieve the sealing of the first perforation to save sealing costs and reduce electrolyte leakage.

In some embodiments, the accommodating part includes a second end wall and a second side wall, the second end wall is located on the side of the second side wall proximal to the active substance-coated part, the second end wall and the second side wall define, in an enclosing manner, the second accommodating groove, the first perforation is formed in the second end wall, and the electrical connection position between the conductive part and the first post terminal is located on the second end wall and/or the second side wall.

In the above technical solution, setting the electrical connection position between the conductive part and the first post terminal on at least one of the second end wall and the second side wall will provide the second accommodating groove with the functionality of accommodating at least a part of the conductive part and provide the wall of the second accommodating groove with the functionality of achieving the electrical connection to the conductive part, thereby simplifying the structure of the first post terminal and facilitating the processing of the first post terminal. In addition, forming the first perforation in the second end wall will facilitate the extension of the conductive part into the second accommodating groove through the first perforation, which may simplify the structure of the conductive part, reduce the redundancy of the conductive part, and reduce the cost of the conductive part. Furthermore, the opening direction of the second accommodating groove makes it easy to perform the electrical connection operation between the conductive part and the wall of the second accommodating groove through the opening of the second accommodating groove, thereby reducing the difficulties in the electrical connection. Moreover, utilizing the wall of the second accommodating groove to achieve the electrical connection to the conductive part may allow a relatively greater area of the electrical connection between the conductive part and the first post terminal, thereby improving the reliability and stability of the electrical connection and improving the performance of the battery cell.

In some embodiments, the second end wall is provided with a second recess, and at least a part of the electrical connection position between the conductive part and the second end wall is located in the second recess.

In the above technical solution, arranging the second recess on the second end wall may achieve the pre-positioning of the conductive part via the second recess, which is beneficial to accurately finding the position to achieve the electrical connection and improving manufacture efficiency.

In some embodiments, the housing is provided with a mounting hole, and the first post terminal is mounted in the mounting hole; in the axial direction of the first post terminal, the depth H3 of the second accommodating groove is greater than or equal to the minimum distance H4 from the post terminal outer end surface to the mounting hole.

In the above technical solution, as the depth of the second accommodating groove in the axial direction of the first post terminal is greater than or equal to the minimum distance from the post terminal outer end surface to the mounting hole, the volume of the first post terminal can be fully utilized, such that the second accommodating groove has a greater depth, which is conducive to accommodating more conductive parts, thereby reducing the space occupied by the conductive parts in the housing to a greater extent, further improving the energy density of the battery cell, and further reducing the redundancy of the conductive parts in the housing. In addition, due to the greater depth, the second accommodating groove can accommodate the gas produced by the battery cell assembly to improve the reliability and stability of the battery cell, and can also accommodate more electrolyte to prolong the service life of the battery cell.

In some embodiments, the housing assembly further includes a first cover plate, the first cover plate fits the first post terminal and closes the opening of the second accommodating groove, and the first cover plate is electrically connected to the first post terminal.

In the above technical solution, arranging the first cover plate to close the opening of the second accommodating groove can prevent the leakage of the electrolyte in the housing through the opening of the second accommodating groove. Also, since the first cover plate closes the opening of the second accommodating groove and is electrically connected to the first post terminal, the first cover plate may be used to easily achieve an indirect electrical connection between the first post terminal and the busbar component of the battery and is beneficial to increasing the connection area at the electrical connection, thereby helping reduce the resistance of the electrical connection.

In some embodiments, the first cover plate includes a first conductive member and a second conductive member made of different materials, the first conductive member fits and is electrically connected to the first post terminal, and the second conductive member fits and is electrically connected to the first conductive member.

In the above technical solution, the composite configuration of the first cover plate and the same material of the first conductive member and the first post terminal facilitate the electrical connection between the first conductive member and the first post terminal. Also, since the second conductive member is made of a different material from the first conductive member, the second conductive member may be used to electrically connect to the busbar component of the battery with a material different from that of the first post terminal.

In some embodiments, the first conductive member is provided with a second groove, the second conductive member is embedded in the second groove, and an opening of the second groove is formed on the surface of the first conductive member distal to the second accommodating groove, such that the second conductive member is exposed at the opening of the second groove.

In the above technical solution, embedding the second conductive member in the first conductive member can reduce the difficulties in assembling the first conductive member and the second conductive member, improve the stability and convenience of the fit of the first conductive member and the second conductive member, reduce the thickness of the first cover plate, and reduce the space occupied by the first cover plate, so as to improve the space utilization of the battery cell. Also, since the second conductive member can be exposed from the surface of the first conductive member on the side distal to the second accommodating groove through the opening of the second groove, it is conductive to achieving the electrical connection between the second conductive member and the busbar component of the battery outside the first post terminal. In addition, since the opening of the second groove is formed on the surface of the first conductive member on the side distal to the second accommodating groove, the first conductive member is arranged between the second accommodating groove and the second conductive member for separation, so as to prevent the electrolyte entering the second groove from contacting the second conductive member, thereby reducing the leakage of the electrolyte.

In some embodiments, the first cover plate is embedded in the opening of the second accommodating groove.

In the above technical solution, embedding the first cover plate in the second accommodating groove can reduce the difficulties in assembling the first cover plate and the first post terminal, improve the stability of the assembly of the first cover plate and the first post terminal and the reliability and convenience of the connection, and reduce the space occupied by the first cover plate outside the first post terminal. Moreover, since the first cover plate is embedded in the opening of the second accommodating groove, there is sufficient space in the second accommodating groove to accommodate the conductive part.

In some embodiments, the wall surface at the opening of the second accommodating groove formed on the first post terminal is an inclined guiding surface, and the inclined guiding surface is configured to guide the first cover plate to fit the opening of the second accommodating groove.

In the above technical solution, processing the wall surface at the opening of the second accommodating groove into an inclined surface with guidance functionality can reduce the difficulties in assembling the first cover plate and the second accommodating groove, and improve the assembly efficiency of the first cover plate and the second accommodating groove.

In some embodiments, the second accommodating groove includes a first groove segment and a second groove segment located on the side of the first groove segment proximal to the post terminal outer end surface, the cross-sectional area of the second groove segment is greater than the cross-sectional area of the first groove segment, so as to form a step surface between the first groove segment and the second groove segment, and the first cover plate is embedded in the second groove segment and supported by the step surface.

In the above technical solution, setting the second accommodating groove as a stepped groove form can stably fit the first cover plate to the opening of the second accommodating groove, thereby improving the connection stability between the first cover plate and the first post terminal. Also, limiting the groove depth of the first groove segment may provide the second accommodating groove with sufficient space to accommodate the conductive part.

In some embodiments, the first post terminal includes a first post terminal part and a second post terminal part made of different materials and electrically connected, the second post terminal part is located on the side of the first post terminal part distal to the active substance-coated part, the accommodating part is arranged on the first post terminal part or on the first post terminal part and the second post terminal part, and the conductive part is electrically connected to the first post terminal part.

In the above technical solution, by configuring the first post terminal as a composite form composed of different materials, the first post terminal part located on the inner side is fitted in a receiving manner and electrically connected to the conductive part, and the second post terminal part located on the outer side is electrically connected to the busbar component of the battery and the like, which is conductive to realizing the assembly and electrical connection of the first post terminal to related components, reducing the mutual interference between the electrical connection position of the post terminal and the conductive part, and the electrical connection position of the post terminal and the busbar component of the battery, and improving the reliability and stability of the battery cell.

In some embodiments, the accommodating part is provided with a fourth accommodating groove, the surface of the first post terminal on the side distal to the active substance-coated part is a post terminal outer end surface, an opening of the fourth accommodating groove is formed on the post terminal outer end surface, the fourth accommodating groove is in communication with the interior of the housing through a second perforation, the conductive part is provided in the second perforation in a penetrating manner, and the electrical connection position between the conductive part and the first post terminal is located on a wall of the second perforation formed on the accommodating part.

In the above technical solution, arranging the fourth accommodating groove can easily achieve the electrical connection between the conductive part and the wall of the second perforation. Furthermore, in some cases, the sealing of the second perforation can be achieved by utilizing the electrical connection between the conductive part and the first post terminal.

In some embodiments, the battery cell further includes: a support, located in the housing and on the side of the active substance-coated part proximal to the first post terminal, where the support is provided with a clearance hole configured to provide clearance for the conductive part, and the conductive part is suitable for extending to the side of the support distal to the active substance-coated part through the clearance hole.

In the above technical solution, arranging the fourth accommodating groove can easily achieve the electrical connection between the conductive part and the wall of the second perforation. Furthermore, in some cases, the sealing of the second perforation can be achieved by utilizing the electrical connection between the conductive part and the first post terminal.

In some embodiments, the support is provided with a guiding part, and the guiding part defines, in an enclosing manner, at least a part of the clearance hole and at least partially extends to the accommodating part.

In the above technical solution, since the support is provided with the guiding part that at least partially extends into the accommodating part, and the guiding part defines, in an enclosing manner, at least a part of the clearance hole, at least a part of the conductive part can be easily accommodated in the accommodating part, thereby improving the assembly efficiency of the conductive part. Also, through the arrangement of the guiding part, the fits between the support and the post terminal, and between the support and the conductive part become tighter and more reliable, such that the structure of the battery cell becomes more compact, which is more conducive to improving the energy density of the battery cell.

In some embodiments, the edge of the support distal to the housing cover is provided with a housing entry guiding surface, and the housing entry guiding surface includes an arc-shaped surface and/or an inclined surface. In the above technical solution, the housing entry guiding surface plays a guiding role, such that the support can be easily mounted into the housing body. The support enters the housing first and the active substance-coated part enters the housing later, reducing the problem of the housing scratching the active substance-coated part.

In some embodiments, the support is of an integrated structure; or, the support is of a split-type structure and comprises a first support and a second support separable from the first support, and the first support and the second support define the clearance hole therebetween.

In the above technical solution, an integrated structure may provide the support with ease to process, good reliability, and ease to assemble the support with the housing assembly, thereby improving the assembly efficiency and fit stability. When the support is of the split-type structure, the clearance hole is defined through the cooperation of the first support and the second support. When the support and the battery cell assembly are assembled, it is not necessary to pass the conductive part from one end of the clearance hole to the other end. Instead, the first support and the second support can be assembled at the position of the conductive part to clamp the conductive part, such that the clearance hole surrounds the conductive part, thereby facilitating the assembly of the support and the battery cell assembly and improving the assembly efficiency.

In some embodiments, the battery cell further includes: an inner insulating member, located in the housing, wrapped outside the active substance-coated part, and connected to the support.

In the above technical solution, enclosing the inner insulating member outside the active substance-coated part can improve the insulation reliability between the active substance-coated part and the housing, reduce or prevent the corrosion of the housing caused by the contact between the active substance-coated part and the housing, and reduce the leakage of the electrolyte caused by the corrosion of the housing, thereby improving the reliability of the battery cell. Also, connecting the inner insulating member to the support can reduce the difficulties in fixing the inner insulating member and improve the reliability of the inner insulating member enclosed outside the active substance-coated part.

In some embodiments, the housing assembly includes at least one first post terminal riveted to the housing body.

In the above technical solution, since the first post terminal is connected to the housing body by riveting, it may not be easy to weld a thin housing body, while riveting the first post terminal to the housing body may be easier. That is, connecting the first post terminal to the housing body by riveting may feature ease to mount and operate. In addition, riveting the first post terminal to the housing body is conducive to reducing the thickness and weight of the housing body, thereby reducing the weight of the battery cell. In the case of given dimensions of the battery cell, riveting the first post terminal may facilitate the thinning of the housing body, and may be also beneficial to increasing the internal space of the housing body and improving the energy density of the battery cell.

In some embodiments, a mounting hole is arranged on the housing body, the first post terminal includes a post terminal body, a first limiting stage, and a second limiting stage that are integrally formed, the post terminal body is provided in the mounting hole in a penetrating manner, the first limiting stage and the second limiting stage are arranged at the two ends of the post terminal body in the axial direction of the mounting hole, and the first limiting stage is in limiting fit with the outer side of the housing body, and the second limiting stage is in limiting fit with the inner side of the housing body, such that the first post terminal is riveted to the housing body.

In the above technical solution, the first limiting stage and the second limiting stage separately extend along the radial direction of the mounting hole to the radial outer side of the circumferential wall of the mounting hole. The first limiting stage can limit the movement of the first post terminal relative to the housing body in the direction toward the inner side of the housing body, and the second limiting stage can limit the movement of the first post terminal relative to the housing body in the direction toward the outer side of the housing body, such that the first post terminal can be easily and reliably mounted at the mounting hole through the first limiting stage and the second limiting stage, which is conducive to the riveting of the first post terminal to the housing body, and convenient for the assembly of the first post terminal and the housing body. This configuration requires no additional connections between the first post terminal and the housing body, or in other words, facilitates the reliable connection of the first post terminal and the housing body, which is conducive to simplifying the structure of the housing assembly and simplifying the assembly process of the housing assembly. Also, the post terminal body, the first limiting stage, and the second limiting stage of the first post terminal are integrally formed, which can save components and costs and ensure the strength of the first post terminal, such that after the first post terminal is fitted to the housing, the battery cell will not be easily detached from the housing due to vibration or external pulling during the charging and discharging process or easily cracked or damaged due to vibration or external pulling, which can improve the stability and reliability of the battery cell.

In some embodiments, the dimension of the first post terminal in a first direction is greater than the dimension of the first post terminal in a second direction, the first direction is perpendicular to the second direction, and the first direction and the second direction are both perpendicular to the axial direction of the mounting hole.

In the above technical solution, on the plane formed by the first direction and the second direction, the shape of the orthographic projection of the first post terminal can be non-circular, which is conducive to achieving a good fit between the first post terminal and the wall of the housing body where the first post terminal is arranged in the first direction and the second direction. The configuration can also increase the cross-sectional area of the first post terminal that may be arranged on the above wall of the housing body to a certain extent, which is conducive to increasing the current passage area of the first post terminal within a limited arrangement area on the above wall, improving the current passage capacity of the first post terminal, improving the heat dissipation capacity of the first post terminal, and thus improving the charging speed of the battery cell using the housing assembly.

In some embodiments, the housing body is provided with a second wall part and a third wall part arranged opposite to each other, and the second wall part and the third wall part are both provided with at least one first post terminal.

In the above technical solution, the first post terminals may be arranged on two opposite side surfaces of the housing body. When two opposite side surfaces of the housing body are each provided with the first post terminal, the conductive part can extend from the position of the active substance-coated part proximal to the first post terminal on each side, and the conductive part is cooperatively connected to the first post terminal on the adjacent side, thereby alleviating the problem that the tab part is pulled by the first post terminal on the same side that results in the cracking of the connection between the tab part and the active substance-coated part, thereby improving the reliability of the battery cell. It is worth noting that the first post terminals on the two sides may be the same or different, and the connection methods between the first post terminals on the two sides and the conductive part may be the same or different, which is not limited here.

In some embodiments, the housing body is provided with a plurality of wall parts, some of the plurality of wall parts is a first set wall part, the area of the first set wall part is greater than the area of each of the other wall parts, and the first post terminal is arranged on the first set wall part.

In the above technical solution, the first post terminal is riveted to the largest wall of the housing body. Since the area of the wall part connected to the first post terminal is the greatest, it is easier to operate when riveting the first post terminal, which can improve the assembly efficiency and increase the yield of battery cells.

In some embodiments, the housing body is provided with a plurality of wall parts, at least one of the plurality of wall parts is a second set wall part, the battery cell further includes a pressure relief part, the pressure relief part is arranged on the second set wall part, and the first post terminal is arranged on the other wall parts than the second set wall part.

In the above technical solution, the first post terminal and the pressure relief part are arranged on different wall parts. When thermal runaway occurs in the battery cell, the high-temperature medium will be discharged through the pressure relief part and will not contact the first post terminal, thus reducing the probability of fire in the battery circuit caused by the contact with the high-temperature medium.

In some embodiments, the battery cell further includes a pressure relief part, the pressure relief part is arranged on the housing cover, and the pressure relief part and the housing cover are integrally formed.

In the above solution, the number of components of the battery cell can be reduced by integrally forming the pressure relief part and the housing cover, thereby reducing the welding procedures between the pressure relief part and the housing body. That is, there is no procedure of connecting a pressure relief part after or before the housing cover is connected to the housing body. This configuration can improve the assembly efficiency of the battery cell, reduce the welding process cost, reduce the possibility of failure at the welding position, and improve the reliability of the battery cell.

In some embodiments, the housing body is provided with a plurality of wall parts, at least one of the plurality of wall parts is a first wall part, the first post terminal is riveted to the first wall part, and the thickness of the first wall part is greater than the thickness of each of the other wall parts.

In the above technical solution, the first wall part serves as the housing wall for connecting the first post terminal, and the thickness of the first wall part is greater than that of each of the other wall parts. Due to the relatively greater thickness of the first wall part, the overall strength of the housing body can be improved, thereby improving the reliability of the battery cell during daily use. The relatively greater thickness of the first wall part may also improve the reliability of the first post terminal during riveting, thereby improving the yield of the battery cells. In addition, in the condition of ensuring the reliability of the riveting of the first post terminal, the first wall part may have a normal wall thickness, while the thickness of the other wall parts may be reduced. In this way, the space inside the housing body is maximized in a given outer contour size of the housing body and can thus accommodate a larger active substance-coated part, which is beneficial to improving the energy density of the battery cell.

In some embodiments, the thickness of the housing cover is smaller than the thickness of the first wall part.

In the above technical solution, since the first post terminal is riveted to the first wall part, and the housing cover is not necessarily connected to the first post terminal, the strength requirement of the housing cover is relatively lower, and its thickness may be smaller than the thickness of the first wall part. This configuration can save materials. Similarly, in a given outer contour size of the housing, a smaller thickness of the housing cover may increase the space inside the housing and thus allow the housing to accommodate a larger active substance-coated part, which is beneficial to improving the energy density of the battery cell.

In some embodiments, the thickness of the housing cover is greater than the thickness of each of the other wall parts that are close to the housing cover than the first wall part.

In the above technical solution, considering that the housing cover shall close on the opening and requires proper strength, the housing cover is configured to have a greater thickness than that of each of the other wall parts than the first wall part and adjacent to the housing cover. In this way, after the housing cover closes the opening, the housing features a good overall strength, which may reduce the probability of damage to the housing and improve the reliability of the battery cell.

In some embodiments, the opening is arranged at the bottom of the housing body.

In the above technical scheme, since the opening of the housing body in the related art is set at the top, and the housing cover is mounted to the opening at the top of the housing body, a housing body of this structure will possess a process chamfer at the bottom of the internal space of the housing body during processing. Then, when the active substance-coated part is mounted into the housing, due to the presence of the process chamfer, the bottom of the active substance-coated part (which may refer to the end of the active substance-coated part distal to the conductive part) and the process chamfer inside the housing body do not contact, and a certain space is left between the two. A partition will be arranged in the space to separate the active substance-coated part and the housing cover, which leads to a waste of space inside the housing body. It should be noted that, in the present application, since the opening is arranged at the bottom of the housing body, and the first post terminal is riveted to the housing body, in such a housing structure, after the active substance-coated part enters the housing, no process chamfer is present between the bottom of the active substance-coated part and the housing cover. In other words, the partition between the bottom of the active substance-coated part and the housing cover can be eliminated, and the gap between the bottom of the active substance-coated part and the housing cover can be greatly reduced, which is beneficial to increasing the size of the active substance-coated part and improving the energy density of the battery cell. Also, due to the absence of process chamfers near the bottom of the active substance-coated part, the probability of damage due to accidental contact between the active substance-coated part and the process chamfer can be greatly reduced, thereby reducing the loss of the active substance coating and improving the performance of the battery cell, while reducing the stress concentration at the corners of the active substance-coated part.

Also, since the housing cover is arranged at the bottom of the housing body, when the battery cells are assembled into a battery, the bottom of the housing is generally fixed to the bottom of the case of the battery. In this case, when vibration occurs in use, since the housing cover is connected to the bottom of the case, the amplitude of vibration at the connection between the housing cover and the housing body is relatively lower, which can further reduce the probability of cracking of the housing cover and the housing body.

In some embodiments, the active substance-coated part is provided with a first end surface proximal to the housing cover, and the battery cell further includes an inner insulating member, the inner insulating member is wrapped around the battery cell assembly, at least a part of the inner insulating member is arranged between the first end surface and the housing cover, and the inner insulating member is provided with a first surface and a second surface opposite to each other, the first surface is in contact with the first end surface, and the second surface is in contact with the housing cover.

In the above technical solution, the first surface of the inner insulating member is in contact with the first end surface, and the second surface is in contact with the housing cover. In other words, the present application, while ensuring the insulation between the active substance-coated part and the housing cover, does not require the support plate in the related art between the active substance-coated part and the housing cover, which is beneficial to saving space in the housing body, increasing the size of the active substance-coated part, and further improving the energy density of the battery cell.

In some embodiments, the housing body is provided with a first wall part opposite to the housing cover, and the first post terminal is arranged on the first wall part.

In the above technical solution, the battery cell assembly enters through the opening in this way, and the conductive part is directly arranged opposite to the first post terminal, such that the conductive part can be connected to the first post terminal relatively easier, thereby improving the assembly efficiency of the battery cell.

In a second aspect, the embodiments of the present application further provide a battery including the above battery cell.

In the above technical solution, in the battery, since the first post terminals of any adjacent battery cells are connected to each other, when the battery vibrates or deforms, the first post terminals of any adjacent battery cells will be pulled by each other. At this time, since the first post terminals are arranged on the housing body, the force applied to the first post terminals will be preferentially transmitted to the housing body, rather than directly acting on the housing cover. Such a configuration increases the transmission distance of the force to the connection position between the housing body and the housing cover and reduces the stress at the connection position between the housing body and the housing cover since the housing body will first deform, thus effectively reducing the probability of cracking between the housing cover and the housing body during the use of the battery and improving the reliability of the battery cells.

In a third aspect, the embodiments of the present application further provide an electric device, including the above battery cell or battery.

In the above technical solution, the electric device adopts the above battery or battery cell, thus featuring a low probability of cracking between the housing cover and the housing body of the battery cell in use, improved reliability of the battery, and improved performance.

In a fourth aspect, the embodiments of the present application further provide a method for assembling a battery cell, where the battery cell includes a housing assembly and a battery cell assembly, the housing assembly includes a housing and a first post terminal, the housing includes a housing body and a housing cover, and the battery cell assembly includes an active substance-coated part and a conductive part; the method includes: mounting the battery cell assembly into the housing body, connecting the conductive part to the first post terminal, welding the conductive part from the exterior of the housing body to the first post terminal, and lidding the housing body with the housing cover.

In the above technical solution, when the battery cells of the present application are assembled, only the battery cell assembly is housed, thus reducing the number and overall weight of the housed components (in the related art, the battery cell assembly, the housing cover and the post terminal are assembled before housing). Therefore, it is easier to house the battery cell assembly, while it is also convenient to connect the conductive part to the first post terminal, thus featuring high assembly efficiency. Since the internal space of the housing body is limited, welding the conductive part from the exterior of the housing body to the first post terminal will facilitate the welding operations and improve the efficiency of component assembly. Welding from the exterior can effectively prevent metal foreign matters generated during welding from entering the battery cell, thus reducing the possibility of internal short circuits in the battery cell due to the metal foreign matters. It is also easy to clean up metal foreign matters generated during welding. Finally, the housing body is lidded with the housing cover to complete the assembly.

In addition, the method of the present application only requires the steps of mounting the battery cell assembly into the housing body, connecting the conductive part to the first post terminal, welding the conductive part from the exterior of the housing body to the first post terminal, and lidding the housing body with the housing cover to complete the assembly of the battery cell, features relatively few overall assembly procedures, and can thus simplify the assembly process, reduce the assembly time, and thus help reduce the manufacturing cost of the battery cell.

In some embodiments, the battery cell further includes a support, and the edge of the support is provided with a housing entry guiding surface; mounting the battery cell assembly into the housing body includes: mounting the support on the side of the active substance-coated part proximal to the first post terminal, such that the housing entry guiding surface is located on the side of the support distal to the active substance-coated part; and mounting the battery cell assembly into the housing body with the guidance of the housing entry guiding surface.

In the above technical solution, the support and the battery cell assembly can be pre-assembled together during assembly, and then the pre-assembled assembly can be mounted into the housing. During the mounting, the support is located at the front of the active substance-coated part, or in other words, the support enters the housing before the active substance-coated part, which can reduce the difficulty for the support entering the housing via the housing entry guiding surface and protect the active substance-coated part via the support, thereby reducing the probability of scratches and damages between the active substance-coated part and the housing and improving the assembly efficiency and product yield. Moreover, the contact area between the support and the active substance-coated part can be increased, and the stress concentration problem can be reduced, thus saving additional structural components.

In some embodiments, the battery cell further includes a support, and the support is provided with a clearance hole; connecting the conductive part to the first post terminal includes: passing the conductive part through the clearance hole; and connecting the conductive part to the first post terminal.

In the above technical solution, the active substance-coated part is separated from the housing by the support, which is beneficial to improving the reliability of the battery cell. Also, providing the clearance hole on the support can guide and constrain the conductive part to pass through the clearance hole and fit the first post terminal, such that during the assembly process of the battery cell, there is no need for the conductive part to bypass the edge of the support to approach the first post terminal, which not only simplifies the arrangement of the conductive part, saves the material of the conductive part, and reduces the cost, but also supports and guides the conductive part to cooperate with the first post terminal by the support, reduces the risk of short-circuit connection between the conductive part and the active substance-coated part, thus further improving the reliability of the battery cell.

In some embodiments, the first post terminal is provided with a first accommodating groove, the surface of the first post terminal on the side proximal to the active substance-coated part is a post terminal inner end surface, and an opening of the first accommodating groove is formed on the post terminal inner end surface; connecting the conductive part to the first post terminal includes: extending the conductive part into the first accommodating groove; and connecting the conductive part to the wall of the first accommodating groove.

In the above technical solution, during the connection of the conductive part to the first post terminal, since the first post terminal is provided with the first accommodating groove, it is relatively easy to accurately align the conductive part to the first post terminal. As such, when the conductive part is welded to the first post terminal from the exterior of the housing body, the stability of the conductive part on the first post terminal and the welding quality can be improved, thus helping improve the performance of the battery cell.

In some embodiments, the first post terminal is provided with a second accommodating groove, the surface of the first post terminal on the side distal to the active substance-coated part is a post terminal outer end surface, an opening of the second accommodating groove is formed on the post terminal outer end surface, and the second accommodating groove is in communication with the interior of the housing through a first perforation; connecting the conductive part to the first post terminal includes: passing the conductive part through the first perforation such that the conductive part is at least partially accommodated in the second accommodating groove; and connecting the conductive part to the wall of the second accommodating groove and/or the wall of the first perforation.

In the above technical solution, the second accommodating groove can expose the connection part of the conductive part and the first post terminal to the outer side of the housing, making it convenient to weld the conductive part and the first post terminal from the exterior, featuring ease to operate, and helping improve the assembly efficiency.

In some embodiments, the battery cell further includes a first cover plate; after welding the conductive part to the first post terminal, the method further includes: welding the first cover plate to the first post terminal to close the opening of the second accommodating groove.

In the above technical solution, arranging the first cover plate to close the opening of the second accommodating groove can prevent the leakage of the electrolyte in the housing through the opening of the second accommodating groove. Also, since the first cover plate closes the opening of the second accommodating groove and is electrically connected to the first post terminal, the first cover plate may be used to easily achieve an indirect electrical connection between the first post terminal and the busbar component and is beneficial to increasing the connection area at the electrical connection, thereby helping reduce the resistance of the electrical connection. In addition, the first cover plate can separate the welding part of the conductive part and the first post terminal from the welding part of the first post terminal and the busbar component, thereby reducing the influence of the welding part of the conductive part and the first post terminal on the welding part of the first post terminal and the busbar component and improving the quality of the welding of the first post terminal and the busbar component.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a structural schematic view of a vehicle according to some embodiments of the present application;
FIG. 2 is an exploded view of a battery according to some embodiments of the present application;
FIG. 3 is a structural schematic view of a battery cell according to some embodiments of the present application;
FIG. 4 is a cross-sectional view of the internal structure of FIG. 3 in the A-A direction;
FIG. 5 is a partial enlarged schematic view of I in FIG. 4;
FIG. 6 is a structural schematic view of a battery cell according to some embodiments of the present application;
FIG. 7 is an orthographic projection view of a battery cell according to some embodiments of the present application;
FIG. 8 is a cross-sectional view along the line A-A in FIG. 7;
FIG. 9 is a structural schematic view of a battery cell according to some embodiments of the present application;
FIG. 10 is an assembly schematic of a second post terminal, a battery cell assembly, and a housing according to some embodiments of the present application;
FIG. 11 is a partial cross-sectional schematic view of a battery cell according to some embodiments of the present application;
FIG. 12 is a partial cross-sectional schematic view of a battery cell according to some embodiments of the present application;
FIG. 13 is a partial cross-sectional schematic view of a battery cell according to some embodiments of the present application;
FIG. 14 is a partial cross-sectional schematic view of a battery cell assembly according to some embodiments of the present application;
FIG. 15 is a diagram of various tab gathering solutions of a battery cell assembly according to some embodiments of the present application;
FIG. 16 is a partial cross-sectional schematic view of a battery cell according to some embodiments of the present application;
FIG. 17 is a partial cross-sectional schematic view of a battery cell according to some embodiments of the present application;
FIG. 18 is a partial cross-sectional schematic view of a battery cell according to some embodiments of the present application;
FIG. 19 is a partial cross-sectional schematic view of a battery cell according to some embodiments of the present application;
FIG. 20 is a partial cross-sectional schematic view of a battery cell according to some embodiments of the present application;
FIG. 21 is a partially enlarged view of the portion B in FIG. 6;
FIG. 22 is an orthographic projection view of various first post terminals according to some embodiments of the present application;
FIG. 23 is a partial cross-sectional schematic view of a battery cell according to some embodiments of the present application;
FIG. 24 is a partial cross-sectional schematic view of a battery cell according to some embodiments of the present application;
FIG. 25 is a partial cross-sectional schematic view of a battery cell according to some embodiments of the present application;
FIG. 26 is an exploded view of a battery cell according to some embodiments of the present application;
FIG. 27 is a partial cross-sectional schematic view of a housing assembly according to some embodiments of the present application;
FIG. 28 is an exploded view of the housing assembly shown in FIG. 27;
FIG. 29 is an exploded view of the first cover plate shown in FIG. 28;
FIG. 30 is a partial cross-sectional schematic view of a battery cell according to some embodiments of the present application;
FIG. 31 is an exploded view of the battery cell shown in FIG. 30;
FIG. 32 is a partial cross-sectional schematic view of a battery cell according to some embodiments of the present application;
FIG. 33 is a partial cross-sectional schematic view of a battery cell according to some embodiments of the present application;
FIG. 34 is a partial cross-sectional schematic view of a battery cell according to some embodiments of the present application;
FIG. 35 is a partial cross-sectional schematic view of a battery cell according to some embodiments of the present application;
FIG. 36 is a partial cross-sectional schematic view of a battery cell according to some embodiments of the present application;
FIG. 37 is a fit schematic of a battery cell assembly and a support according to some embodiments of the present application;
FIG. 38 is a cross-sectional view along the line C-C in FIG. 37;
FIG. 39 is a structural schematic view of an integrated support according to some embodiments of the present application;
FIG. 40 is a structural schematic view of a split-type support according to some embodiments of the present application;
FIG. 41 is a partial cross-sectional schematic view of a battery cell assembly and a support according to some embodiments of the present application;
FIG. 42 is an exploded view of a battery cell assembly, a support, and a housing assembly according to some embodiments of the present application;
FIG. 43 is an exploded view of a first post terminal, a housing, and a sealing gasket according to some embodiments of the present application;
FIG. 44 is an assembly schematic of the first post terminal, the housing, and the sealing gasket shown in FIG. 43;
FIG. 45 is a structural schematic view of a first post terminal according to some embodiments of the present application;
FIG. 46 is an assembly schematic of the first post terminal, the housing, and the sealing gasket shown in FIG. 45;
FIG. 47 is an exploded view of the first post terminal shown in FIG. 45;
FIG. 48 is an orthographic projection view of a battery cell according to some embodiments of the present application;
FIG. 49 is an orthographic projection view of a battery cell according to some embodiments of the present application;
FIG. 50 is a cross-sectional view along the line D-D in FIG. 49;
FIG. 51 is a cross-sectional schematic view of a housing assembly according to some embodiments of the present application;
FIG. 52 is a cross-sectional schematic view of a housing assembly according to some embodiments of the present application;
FIG. 53 is an orthographic projection view of a battery cell according to some embodiments of the present application;
FIG. 54 is a cross-sectional view along the line E-E in FIG. 53;
FIG. 55 is a partial cross-sectional schematic view of a battery cell according to some embodiments of the present application;
FIG. 56 is a structural schematic view of a housing cover according to some embodiments of the present application;
FIG. 57 is a second structural schematic view of a battery cell according to some embodiments of the present application;
FIG. 58 is a third structural schematic view of a battery cell according to some embodiments of the present application;
FIG. 59 is a partial enlarged schematic view of II in FIG. 4;
FIG. 60 is a top view of a battery cell according to some embodiments of the present application;
FIG. 61 is a first flowchart of a method for assembling a battery cell according to some embodiments of the present application;
FIG. 62 is a second flowchart of a method for assembling a battery cell according to some embodiments of the present application;
FIG. 63 is a third flowchart of a method for assembling a battery cell according to some embodiments of the present application;
FIG. 64 is a fourth flowchart of a method for assembling a battery cell according to some embodiments of the present application;
FIG. 65 is a fifth flowchart of a method for assembling a battery cell according to some embodiments of the present application; and
FIG. 66 is a sixth flowchart of a method for assembling a battery cell according to some embodiments of the present application.

### Reference numerals:

electric device 1000; battery 100; controller 200; motor 300;
first direction Z; second direction X; third direction Y;
axial direction R of first post terminal;
battery cell 10; case 20; first case 201; second case 202;
housing assembly 1;
housing 11; first wall surface 110; housing body 111; opening 111a; wall part 1111; first wall part 1112; second wall part 1113; third wall part 1114; wall part 1115; first set wall part 1116; housing cover 112; liquid storage groove 112a; first groove part 1121; second groove part 1122; third groove part 1123; protrusion part 112b; mounting hole 113;
first post terminal 12;
accommodating part 121;
first accommodating groove 12110; first end wall 12111; first recess 12112; first side wall 12113;
second accommodating groove 12120; second end wall 12121; second recess 12122; second side wall 12123;
first groove segment 12124; second groove segment 12125; inclined guiding surface 12126; step surface 12127;
first perforation 12130; third accommodating groove 12140; fourth accommodating groove 12150;
second perforation 12160; third perforation 12170; post terminal inner end surface 122; post terminal outer end surface 123;
first post terminal part 124; second post terminal part 125;
first groove 126; spacer part 127;
stopper part 1281; penetration part 1282; flange part 1283;
first part 1291; second part 1292;
first cover plate 13; first conductive member 131; second groove 1311; second conductive member 132; stress relief groove 133;
second cover plate 14; second post terminal 15; pressure relief part 16; clearance groove 18;
first sealing gasket 191; second sealing gasket 192;
battery cell assembly 2; electrode assembly 2a;
active substance-coated part 21; first end surface 21a; current collector 211; active substance layer 212; conductive part 22;
tab part 221; tab plate 2211; first gathering part 2212; second gathering part 2213; adapting piece 222;
support 3; clearance hole 31; first hole segment 311; second hole segment 312;
guiding part 32; first support 33; second support 34; housing entry guiding surface 35;
body part 36; extending part 37; third groove 38; positioning groove 39;
inner insulating member 4; body part 41; connecting part 42; first surface 4a; second surface 4b;
sealing member 6; groove cover 7.

### DETAILED DESCRIPTION

To make the objectives, technical solutions, and advantages of the embodiments of the present application clearer, the technical solutions in the embodiments of the present application will be clearly and completely described below with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the descriptions of the above drawings are intended to cover a non-exclusive inclusion. The terms "first", "second", and the like in the specification and claims of the present application and the above drawings are defined to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality" used in the present application refers to two or more (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and soft-pack battery cells, which are not limited in the embodiments of the present application.

The battery mentioned in the embodiments of the present application refers to a single physical module including one or more battery cells to provide higher voltage and capacity. For example, the battery mentioned in the present application may be a battery module, a battery pack, or the like. When the battery is a battery module, the battery module is composed of a plurality of battery cells. When the battery is a battery pack, the battery pack may be directly composed of a case and a plurality of battery cells arranged in the case; or the battery cells may first form a battery module, which is then arranged in the case. The case can prevent liquid or other foreign matters from affecting the charging or discharging of the battery cells.

For example, the battery cell may generally include a housing, an electrode assembly, and an electrolyte. The housing is configured to accommodate the electrode assembly and the electrolyte, and at least one positive electrode post terminal and at least one negative electrode post terminal are arranged on the housing. The electrode assembly consists of a positive electrode plate, a negative electrode plate, and a separation film. The material of the separation film is not limited, such as polypropylene or polyethylene.

The positive electrode plate may generally include a positive electrode current collector and a positive electrode active substance layer. The positive electrode active substance layer is directly or indirectly applied to the positive electrode current collector. The positive electrode current collector that is not coated with the positive electrode active substance layer protrudes from the positive electrode current collector coated with the positive electrode active substance layer. The positive electrode current collector that is not coated with the positive electrode active substance layer serves as a positive electrode tab plate.

The negative electrode plate may generally include a negative electrode current collector and a negative electrode active substance layer. The negative electrode active substance layer is directly or indirectly applied on the negative electrode current collector, the negative electrode current collector not coated with the negative electrode active substance layer protrudes from the negative electrode current collector coated with the negative electrode active substance layer, and the negative electrode current collector not coated with the negative electrode active substance layer serves as a negative electrode tab plate.

The electrode assembly may be of a wound structure or a stacked structure. During processing, the positive electrode plate, the negative electrode plate, and the separation film are wound or stacked in sequence to give the electrode assembly. In the electrode assembly, a plurality of positive electrode tab plates are stacked together and electrically connected to the positive electrode post terminal, and a plurality of negative electrode tab plates are stacked together and electrically connected to the negative electrode post terminal.

A battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, lithium manganate, etc., the material of the negative electrode current collector may be copper, and the material of the negative electrode active substance layer may be carbon, silicon, etc. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

In the related art, during the manufacturing of a battery cell, the active substance layer is applied to the current collector, which is then cut to give electrode plates consisting of a current collector coated with the active substance layer (referred to as the active substance-coated part) and a current collector that is not coated with the active substance layer (referred to as the tab plate). The positive and negative electrode plates and a separation film are then stacked or wound in sequence to give the battery cell assembly. In the electrode assembly, a plurality of tab plates are stacked to form a tab part. The tab part is connected to an adapting piece to form a conductive part, or the tab part itself forms a conductive part; the active substance-coated part and the conductive part form a battery cell assembly. The housing of the battery cell is provided with a post terminal. During the manufacture of the battery cell, the conductive part is usually welded to the post terminal to ensure the normal charging and discharging operations.

However, the inventors found that in the related art, the housing is provided with an opening at the top, the post terminal is arranged on the housing cover, and the opening is lidded with the housing cover and is welded to the housing, where the weld seam is at the topmost end of the battery cell. However, when the battery cells are assembled into a battery, the bottom of the housing should be fixed, and the post terminals of adjacent battery cells are connected by conductive components (such as a busbar). Since the post terminals are arranged on the housing cover, when the battery vibrates or deforms in use, the conductive components will pull the post terminals. The pulling force of the conductive components to the post terminals can be easily transmitted to the weld seams between the housing cover and the housing, causing material fatigue and cracking at the weld seams between the housing cover and the housing, thereby affecting the reliability of the battery cells.

Based on the above considerations, to improve the reliability of the battery cell, the inventors have found that by changing the mounting position of the post terminal and providing the post terminal on the housing, the housing cover in the battery cell will not be directly connected to the post terminal. As such, when the battery cells are pulled against each other due to the vibration or deformation in the use of the battery, since the first post terminals are arranged on the housing body, the force applied to the first post terminals will be preferentially transmitted to the housing body, rather than directly acting on the housing cover. Such a configuration increases the transmission distance of the force to the weld seam between the housing body and the housing cover and reduces the stress at the weld seam between the housing body and the housing cover since the housing body will first deform, thus effectively reducing the probability of cracking at the weld seams of the housing body and the housing cover during the use of the battery and improving the reliability of the battery cells.

The embodiments of the present application provide an electric device using the battery cell disclosed herein as a power source. The electric device may be, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

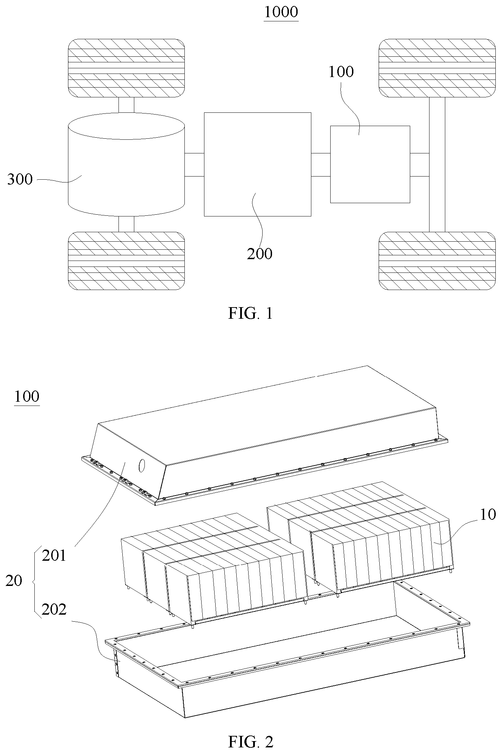

For ease of description, the present application is illustrated by taking a vehicle as an example of the electric device according to an embodiment of the present application. Referring to FIG. 1, FIG. 1 is a structural schematic view of an electric device 1000 according to some embodiments of the present application as a vehicle. The vehicle may be a fuel vehicle, a gas vehicle, or a new energy vehicle. The new energy vehicle may be a pure electric vehicle, a hybrid vehicle, an extended-range vehicle, or the like. A battery 100 is arranged inside the vehicle, and the battery 100 may be arranged at the bottom, head, or tail of the vehicle. The battery 100 may be used for powering the vehicle. For example, the battery 100 may serve as an operation power source for the vehicle. The vehicle may further include a controller 200 and a motor 300. The controller 200 is configured to control the battery 100 to power the motor 300, e.g., for operation power needed by the vehicle for start-up, navigation, and driving. In some embodiments of the present application, the battery 100 may not only serve as the operation power source for the vehicle, but also as a driving power source for the vehicle to, instead of or in part instead of fuel or natural gas, provide driving power for the vehicle.

Referring to FIG. 2, FIG. 2 illustrates an exploded view of a battery cell 10 used in the battery 100 according to some embodiments of the present application. The battery 100 includes a case 20 and a plurality of battery cells 10, and the battery cells 10 are accommodated in the case 20. The case 20 is configured to provide an assembly space for the battery cell 10, and the case 20 may be in various structures. In some embodiments, the case 20 may include a first case 201 and a second case 202. The first case 201 and the second case 202 are lidded with each other. The first case 201 and the second case 202 jointly define an assembly space for accommodating the battery cell 10. The second case 202 may be of a hollow structure with one end open, and the first case 201 may be of a plate structure. The open side of the second case 202 is lidded with the first case 201, such that the first case 201 and the second case 202 jointly define the assembly space. The first case 201 and the second case 202 may also be of a hollow structure with one side open, and the open side of the second case 202 is lidded with the open side of the first case 201. Certainly, the case 20 formed by the first case 201 and the second case 202 can have various shapes, such as a cylinder, a cuboid, etc.

In the battery 100, the plurality of battery cells 10 may be connected in series, in parallel, or in series-parallel. The series-parallel connection means that both series connection and parallel connection are present for the connection among the plurality of battery cells 10. The plurality of battery cells 10 can be directly connected in series, in parallel, or in a mixed connection, and then the whole formed by the plurality of battery cells 10 is accommodated in the case 20. Certainly, the battery 100 may also be in a form where a plurality of battery cells 10 are first connected in series, in parallel, or in a mixed connection to give a battery module, and then a plurality of battery modules are connected in series, in parallel, or in a mixed connection to form a whole and accommodated in the case 20. The battery 100 may further include additional structures. For example, the battery 100 may further include a busbar member for achieving the electrical connection between the plurality of battery cells 10.

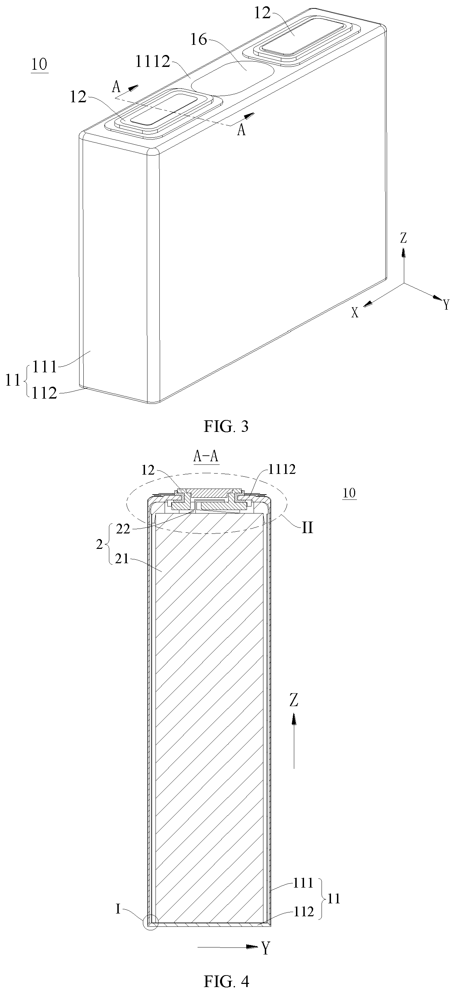

Referring to FIG. 3, FIG. 3 illustrates a schematic view of a battery cell 10 according to some embodiments of the present application. The battery cell 10 is in the shape of a cuboid, and the height direction of the battery cell 10 is a first direction Z, the thickness direction of the battery cell 10 is a second direction X, and the length direction of the battery cell is a third direction Y. The first direction Z, the second direction X, and the third direction Y are perpendicular to each other, which is, however, not limiting. In other embodiments of the present application, the battery cell 10 may also be cylindrical, flat, or in other shapes.

As shown in FIGs. 3 to 6, the battery cell 10 includes a housing assembly 1 and a battery cell assembly 2.

The housing assembly 1 includes a housing 11 and a first post terminal 12, where the housing 11 includes a housing body 111 and a housing cover 112, the housing body 111 is provided with an opening 111a; the opening 111a is lidded with the housing cover 112, and the housing body 111 is provided with the first post terminal 12. The battery cell assembly 2 includes an active substance-coated part 21 and a conductive part 22, where the active substance-coated part 21 is accommodated in the housing body 111, and the conductive part 22 electrically connects the active substance-coated part 21 to the first post terminal 12.

The housing 11 is provided with post terminals for electrical connection to the battery cell assembly 2 to ensure normal charging and discharging operations of the battery cell 10. Generally, the number of post terminals is at least two, specifically at least one positive electrode post terminal and at least one negative electrode post terminal. For example, when the number of post terminals is two, one is a positive electrode post terminal and the other is a negative electrode post terminal, and the two are electrically connected to the positive and negative output positions of the battery cell assembly 2, respectively; for another example, when the number of post terminals is four, two may be positive electrode post terminals and two may be negative electrode post terminals. At least one of the plurality of post terminals is a first post terminal 12, and the first post terminal 12 may serve as either a positive electrode post terminal or a negative electrode post terminal.

In the embodiments of the present application, the battery cell assembly 2 includes an active substance-coated part 21 and a conductive part 22. The active substance-coated part 21 is accommodated in the housing 11. The active substance-coated part 21 is a part of the battery cell assembly 2 coated with the active substance and can assist in the deintercalation of metal ions during the charging and discharging process of the battery cell 10. The conductive part 22 is a metal structure that electrically connects the active substance-coated part 21 and the post terminal, and is not coated with the active substance. The electrical connection between the active substance-coated part 21 and the conductive part 22 enables the charging and discharging operations of the battery cell 10.

The active substance-coated part 21 is divided into a positive electrode active substance-coated part and a negative electrode active substance-coated part. The positive electrode active substance-coated part includes a part in which the positive electrode current collector is coated with a positive electrode active substance layer, and the negative electrode active substance-coated part includes a part in which the negative electrode current collector is coated with a negative electrode active substance layer. The conductive part 22 is divided into a positive electrode conductive part and a negative electrode conductive part. The positive electrode conductive part electrically connects the positive electrode active substance-coated part and the positive electrode post terminal, and the negative electrode conductive part electrically connects the negative electrode active substance-coated part and the negative electrode post terminal.

In the above technical solution, in the battery 100, since the first post terminals 12 of any adjacent battery cells 10 are connected to each other, when the battery 100 vibrates or deforms, the first post terminals 12 of any adjacent battery cells 10 will be pulled by each other. At this time, since the first post terminals 12 are arranged on the housing body 111, the force applied to the first post terminals 12 will be preferentially transmitted to the housing body 111, rather than directly acting on the housing cover 112. Such a configuration increases the transmission distance of the force to the weld seam between the housing body 111 and the housing cover 112 and reduces the stress at the weld seam between the housing body 111 and the housing cover 112 since the housing body 111 will first deform, thus effectively reducing the probability of cracking at the weld seams of the housing cover 112 and the housing body 111 during the use of the battery and improving the reliability of the battery cells 10.

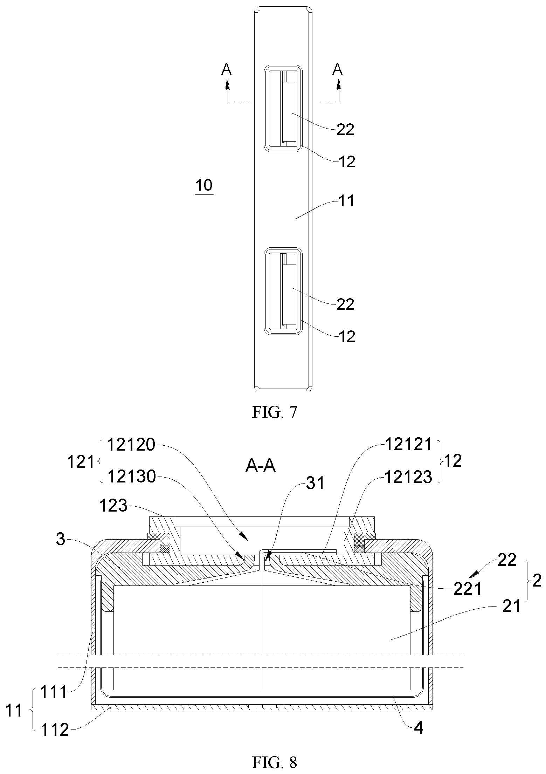

In the embodiments of the present application, referring to FIGs. 7 and 8, the first post terminal 12 is provided with an accommodating part 121, and at least a part of the conductive part 22 is accommodated in the accommodating part 121.

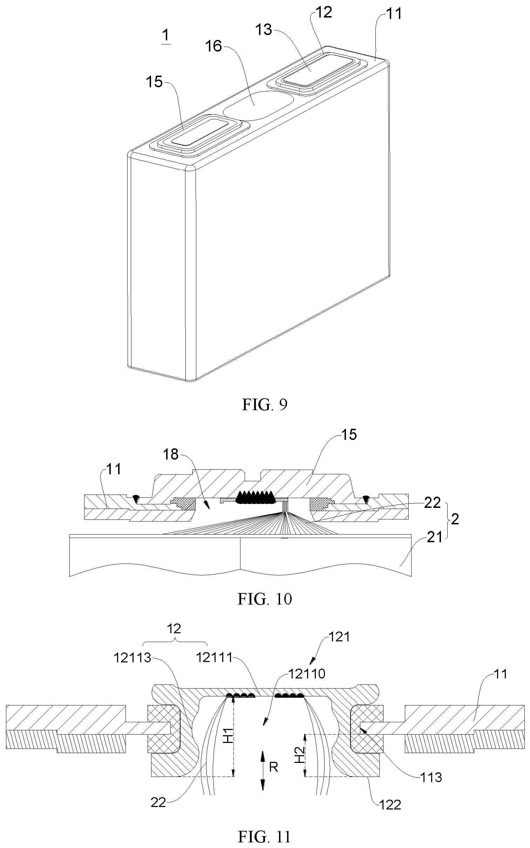

Referring to the foregoing, a plurality of post terminals may be present, and at least one of the plurality of post terminals is the first post terminal 12. The first post terminal 12 is a post terminal provided with an accommodating part 121 formed therein. The accommodating part 121 is of a hollow structure with an accommodating space, and may be of a groove structure, a hole structure, or a composite groove/hole structure. That is, all the post terminals on the housing 11 may be the first post terminals 12 having the accommodating parts 121 formed therein, or a part of the post terminals on the housing 11 may be the first post terminals 12 having the accommodating parts 121 formed therein. When part of the post terminals on the housing 11 are the first post terminals 12 having the accommodating parts 121 formed therein, the remaining post terminals on the housing 11 are second post terminals 15 without the accommodating parts 121 (referring to FIGs. 9 and 10). As used herein, the "at least a part" means that the conductive part 22 may be completely accommodated in the accommodating part 121, or only a part of the conductive part 22 may be accommodated in the accommodating part 121. Since the first post terminal 12 is provided with the accommodating part 121, the hollow structure of the accommodating part 121 can reduce the weight of the post terminal 12 to a certain extent, so as to improve the gravimetric energy density of the battery cell 10 and the battery 100.

Furthermore, the conductive part 22 is partially or completely accommodated in the accommodating part 121, such that a part of the conductive part 22 located in the accommodating part 121 can occupy the space in the first post terminal 12, which can thereby reduce the space occupied by the conductive part 22 in the housing 11. When the dimension of the housing 11 is fixed, some space can be saved in the housing 11 to accommodate a larger active substance-coated part 21, thereby improving the volumetric energy density of the battery cell 10. For example, when the conductive part 22 is led out from the side of the active substance-coated part 21 proximal to the first post terminal 12, the space occupied by the conductive part 22 between the active substance-coated part 21 and the first post terminal 12 can be saved, such that the dimension of the active substance-coated part 21 in the direction in which the conductive part 22 is led out can be increased, and the spacing between the active substance-coated part 21 and the first post terminal 12 can be reduced, thereby improving the energy density of the battery cell 10.

In addition, the accommodation of at least a part of the conductive part 22 in the accommodating part 121 can reduce the space occupied by the battery cell 10, so as to accommodate a greater number of battery cells 10 in a battery 100 of a given volume and improve the volumetric energy density of the battery 100. Moreover, the accommodation of at least a part of the conductive part 22 in the accommodating part 121 to occupy the space in the first post terminal 12 can reduce the redundancy of the conductive part 22 in the housing 11 to a certain extent, reduce the probability of short circuit between the conductive part 22 and the active substance-coated part 21, and reduce the probability of short circuit of the battery cell 10, thus further improving the working reliability and stability of the battery cell 10 and the battery 100. The accommodation of at least a part of the conductive part 22 in the accommodating part 121 of the first post terminal 12 may also facilitate the connection of the conductive part 22 to the first post terminal 12.

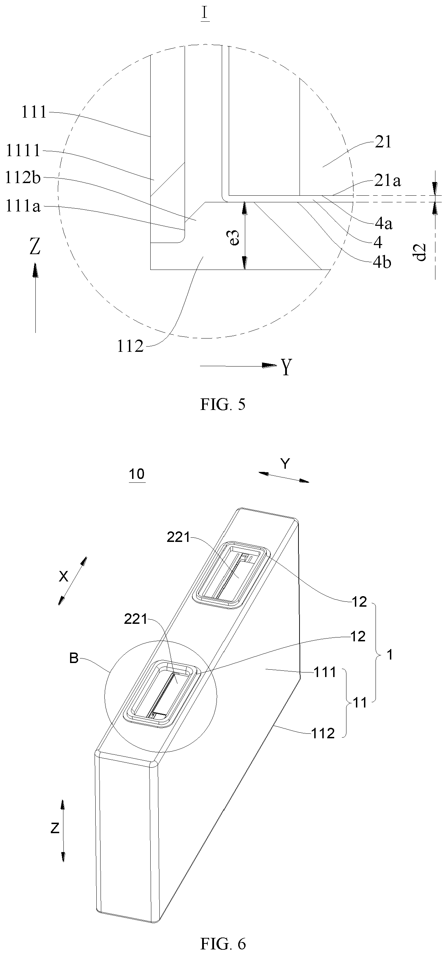

In some optional embodiments of the present application, referring to FIGs. 6-8, each of the plurality of post terminals on the housing assembly 1 is a first post terminal 12 with an accommodating part 121. As such, more conductive parts 22 can be accommodated in all the first post terminals 12 to better improve the volumetric energy density of the battery cell 10.

In some other optional embodiments of the present application, referring to FIGs. 9 and 10, at least one of the plurality of post terminals on the housing assembly 1 is a first post terminal 12 with an accommodating part 121, while at least one is a second post terminal 15 without an accommodating part 121. As such, the first post terminal 12 and the second post terminal 15 can be flexibly selected and combined according to actual needs such as energy density and cost to improve the applicability of the battery cell 10.

In some optional embodiments, referring to FIGs. 9 and 10, the second post terminal 15 and the housing 11 define a clearance groove 18 therebetween, and at least a part of the conductive part 22 is accommodated in the clearance groove 18. As such, the space occupied by the conductive part 22 in the housing 11 can also be reduced to a certain extent, which is conducive to improving the energy density and mitigating the problems such as short circuit caused by the redundancy of the conductive part 22.

In order to simplify the description, the following description is mainly made with all the post terminals on the housing 11 being the first post terminals 12 which have the accommodating parts 121 formed therein as an example. In addition, illustratively, in some embodiments of the present application, only one post terminal may be arranged on the housing assembly 1, and the post terminal is the first post terminal 12. The first post terminal 12 includes two parts insulated from each other, which serve as the positive electrode post terminal and the negative electrode post terminal, respectively.

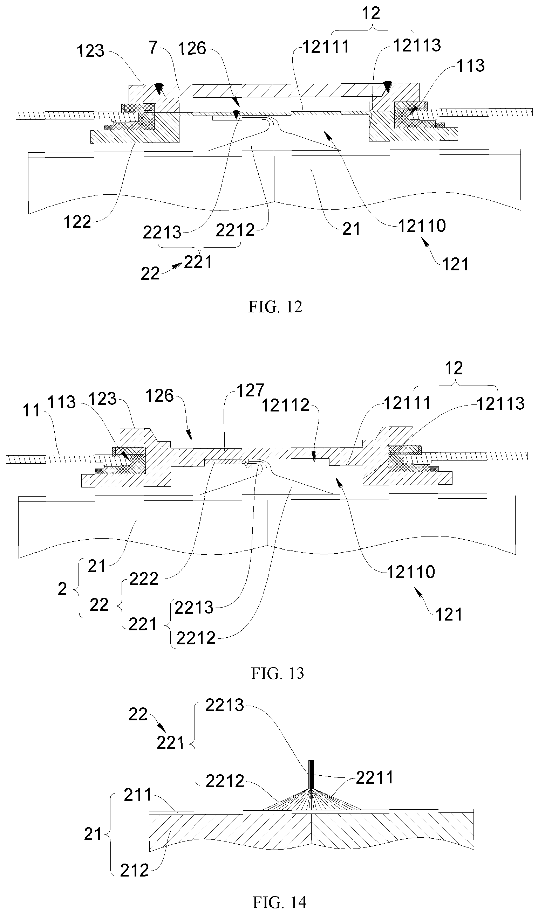

In the embodiments of the present application, the accommodating part 121 may be located on the side of the first post terminal 12 proximal to the active substance-coated part 21, or may be located on the side of the first post terminal 12 distal to the active substance-coated part 21. Illustratively, referring to FIGs. 11 and 12, when the accommodating part 121 is located on the side of the first post terminal 12 proximal to the active substance-coated part 21, the accommodating part 121 is provided with a first accommodating groove 12110, the surface of the first post terminal 12 on the side proximal to the active substance-coated part 21 is a post terminal inner end surface 122, an opening of the first accommodating groove 12110 is formed on the post terminal inner end surface 122, and at least a part of the conductive part 22 is accommodated in the first accommodating groove 12110.

Illustratively, the first accommodating groove 12110 may be a groove body, which is a groove-shaped structure with a certain depth. For example, when the first post terminal 12 is arranged on the upper end wall of the housing 11 and the post terminal inner end surface 122 is the lower surface of the first post terminal 12, the first accommodating groove 12110 is formed as an accommodating groove with an opening open downward and a wall recessed upward. For another example, when the first post terminal 12 is arranged on the lower end wall of the housing 11 and the post terminal inner end surface 122 is the upper surface of the first post terminal 12, the first accommodating groove 12110 is formed as an accommodating groove with an opening open upward and a wall recessed downward.

In the above technical solution, the provision of the first accommodating groove 12110 on the first post terminal 12 can reduce the weight of the first post terminal 12 to a certain extent, so as to improve the gravimetric energy density of the battery cell 10 and the battery 100. Also, as the opening of the first accommodating groove 12110 is formed on the post terminal inner end surface 122 and the post terminal inner end surface 122 is the surface of the first post terminal 12 on the side proximal to the active substance-coated part 21, the first accommodating groove 12110 can be open toward the active substance-coated part 21, thereby facilitating the conductive part 22 to extend into the first accommodating groove 12110 and improving the assembly efficiency. Moreover, the first accommodating groove 12110 in this type facilitates processing and thus improves production efficiency.

Furthermore, it is easy to process the first accommodating groove 12110 to have a relatively large volume, such that more conductive parts 22 can be accommodated. Meanwhile, since the first accommodating groove 12110 is open toward the active substance-coated part 21, the first accommodating groove 12110 can also serve as a buffering and temporary storage structure for the electrolyte, such that more electrolyte can be accommodated in the housing 11. As the electrolyte will be consumed during the charging and discharging processes of the battery cell 10, a greater amount of electrolyte can prolong the service life of the battery cell 10. Also, since the first accommodating groove 12110 is open toward the active substance-coated part 21, the first accommodating groove 12110 can also serve as an accommodating and buffering structure for gases produced in the battery cell assembly 2, reducing the expansion of the battery cell 10 and improving the reliability and stability of the battery cell 10.

In addition, as the first accommodating groove 12110 is located on the inner side of the first post terminal 12, external foreign matters and impurities can hardly enter the first accommodating groove 12110, thereby reducing the impact of external foreign matters and impurities on the battery cell assembly 2, improving the working stability and reliability of the battery cell assembly 2, and further improving the stability and reliability of the battery cell 10 and the battery 100. Moreover, the location of the first accommodating groove 12110 on the inner side of the first post terminal 12 and the accommodation of at least a part of the conductive part 22 in the first accommodating groove 12110 will facilitate the limitation of the conductive part 22 inside the first post terminal 12 and facilitate the connection of the conductive part 22 to the first post terminal 12.

Referring to FIG. 11, in the embodiments of the present application, the connection manner between the first post terminal 12 and the housing 11 is not limited. For example, the connection manner may be welding or riveting. For example, when the two are combined by riveting, the housing 11 is provided with a mounting hole 113, and the first post terminal 12 is mounted by riveting at the mounting hole 113. Certainly, it will be appreciated that when the first post terminal and the housing are fitted by welding or in other means, the housing 11 may also be provided with the mounting hole 113, and the first post terminal 12 is mounted at the mounting hole 113. It should be noted that the mounting hole 113 may be specifically arranged on the housing body 111.

Optionally, referring to FIG. 11, the first accommodating groove 12110 can be arranged corresponding to the position of the mounting hole 113, or in other words, on a projection plane perpendicular to the axial direction R of the first post terminal 12, the orthographic projection of the first accommodating groove 12110 is located within the range of orthographic projection of the mounting hole 113, such that the first accommodating groove 12110 can have a large depth to accommodate more conductive parts 22, thereby reducing the space occupied by the conductive part 22 in the housing 11 to a greater extent.

In some embodiments, referring to FIG. 11, when the mounting hole 113 is arranged on the housing 11 and the first post terminal 12 is mounted in the mounting hole 113, in the axial direction R of the first post terminal 12, the depth H1 of the first accommodating groove 12110 is greater than or equal to the minimum distance H2 from the post terminal inner end surface 122 to the mounting hole 113.

It should be noted that the specific shape of the first accommodating groove 12110 is not limited, and may be a regular shape or an irregular shape, e.g., a cylindrical groove with a rectangular, elliptical, or oblong cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. Therefore, the depth H1 of the first accommodating groove 12110 refers to: the maximum depth of the first accommodating groove 12110 in the axial direction R of the first post terminal 12.

Since in the axial direction R of the first post terminal 12, the depth H1 of the first accommodating groove 12110 is greater than or equal to the minimum distance H2 from the post terminal inner end surface 122 to the mounting hole 113, the volume of the first post terminal 12 can be fully utilized, such that the first accommodating groove 12110 has a larger depth, which is conducive to accommodating more conductive parts 22, and then can reduce the space occupied by the conductive parts 22 in the housing 11 to a greater extent, further improve the energy density of the battery cell 10, and further reduce the redundancy of the conductive part 22 in the housing 11. Meanwhile, since the first accommodating groove 12110 has a larger depth, gases produced by the battery cell assembly 2 can also be accommodated, which ensures the reliability and stability of the battery cell 10, and can also accommodate more electrolyte to ensure the service life of the battery cell 10.

It should be noted that the volume of the first accommodating groove 12110 is not limited. For example, in some specific examples, the volume of the first accommodating groove 12110 that can be used for accommodating the conductive part 22 (referred to as a first volume V1) may be greater than or equal to 298 mm³, such that the first accommodating groove 12110 may have sufficient space to accommodate the conductive part 22 and facilitate welding of the conductive part 22 to the first post terminal 12. However, when the first volume V1 of the first accommodating groove 12110 is less than 298 mm³, the accommodating capacity of the first accommodating groove 12110 for the conductive part 22 is relatively weakened, and the welding difficulty of the conductive part 22 with the first post terminal 12 is increased.

It is worth noting that the first volume V1 of the first accommodating groove 12110 is: the difference between the total volume V2 of the first accommodating groove 12110 and the volume of other components required to be accommodated by the first accommodating groove 12110 except the conductive part 22 (referred to as a second volume V3), that is, V1 = V2 - V3. It can be understood that when the first accommodating groove 12110 does not need to accommodate other components except the conductive part 22, the second volume V3 may be 0 mm³. For example, the first volume V1 of the first accommodating groove 12110 may be 300 mm³-1500 mm³, for example, 300 mm³, 400 mm³, 500 mm³, 600 mm³, 700 mm³, 800 mm³, 1000 mm³, 1200 mm³, 1400 mm³, 1500 mm³, and the like.

Referring to FIGs. 11 and 12, in order to ensure the stability and reliability of the electrical connection between the active substance-coated part 21 and the first post terminal 12, in some embodiments of the present application, the electrical connection position between the conductive part 22 and the first post terminal 12 may be located on the wall of the first accommodating groove 12110. Illustratively, the conductive part 22 and the first post terminal 12 may be electrically connected by welding, and the electrical connection position is the welding position of the conductive part 22 and the first post terminal 12. Meanwhile, the welding method for the conductive part 22 and the first post terminal 12 is not limited, which may be laser welding, for example. Moreover, depending on factors such as the position, angle, or structure of the welding part, vertical welding or inclined welding, and overlap welding or edge sealing welding can be selected. In other embodiments of the present application, the conductive part 22 and the first post terminal 12 may be electrically connected by other means instead of welding, such as by providing conductive adhesive or conductive nails. In order to simplify the description, the following description will take an example that the conductive part 22 is welded to the first post terminal 12 to form an electrical connection, and that the welding position is the electrical connection position of the conductive part 22 and the first post terminal 12.

Referring to FIGs. 11 and 12, more specifically, the first post terminal 12 specifically includes a first end wall 12111 and a first side wall 12113, the first end wall 12111 is located on the side of the first side wall 12113 distal to the active substance-coated part 21, the first end wall 12111 and the first side wall 12113 define, in an enclosing manner, the first accommodating groove 12110, and the electrical connection position between the conductive part 22 and the first post terminal 12 is located on the first end wall 12111 and/or the first side wall 12113. That is, the conductive part 22 may be welded to at least one of the first end wall 12111 and the first side wall 12113.

In the above technical solution, by arranging the electrical connection position of the conductive part 22 and the first post terminal 12 on at least one of the first end wall 12111 and the first side wall 12113, not only does the first accommodating groove 12110 have a function of accommodating at least a part of the conductive part 22, but also the wall of the first accommodating groove 12110 has a function of achieving an electrical connection to the conductive part 22, which can simplify the structure of the first post terminal 12, facilitate processing of the first post terminal 12, simplify the structure of the conductive part 22, reduce the redundancy of the conductive part 22, and reduce the costs of the conductive part 22. Moreover, utilizing the wall of the first accommodating groove 12110 to achieve the electrical connection to the conductive part 22 may allow a relatively greater area of the electrical connection between the conductive part 22 and the first post terminal 12, which not only reduces the difficulty of electrical connection, but also improves the reliability and stability of the electrical connection, thereby improving the performance of the battery cell 10. When the electrical connection position between the conductive part 22 and the first post terminal 12 is located on the first end wall 12111, it may be convenient to connect the conductive part 22 and the first end wall 12111 from the exterior.

In addition, since the electrical connection position of the conductive part 22 and the first post terminal 12 is located in the first accommodating groove 12110, not only can the electrical connection position be prevented from protruding out of the first post terminal 12 and occupying the space outside the first post terminal 12, but also the electrical connection position can be protected by the first post terminal 12, thereby improving the reliability and stability of the electrical connection between the conductive part 22 and the first post terminal 12.

In addition, in the embodiments of the present application, the first end wall 12111 is configured as a closed structure without any perforations, such that the first accommodating groove 12110 is isolated from the space outside the housing 11, thereby avoiding the problem of the electrolyte in the housing 11 leaking from the first accommodating groove 12110.

Referring to FIGs. 11 and 12, in some optional embodiments, the conductive part 22 and the first end wall 12111 match in partial shape, and are arranged in fit and electrically connected, such that the electrical connection position between the conductive part 22 and the first end wall 12111 extends in the length or width direction of the first end wall 12111. For example, when the first end wall 12111 is flat, a part of the conductive part 22 may also be flat and fit the first end wall 12111, and the fitting position is electrically connected, such as welded. As such, the area of the electrical connection can be increased, and the reliability and stability of the electrical connection can be improved.

In addition, when the electrical connection between the conductive part 22 and the first end wall 12111 is welding, since the first end wall 12111 is located on the side of the first accommodating groove 12110 distal to the active substance-coated part 21, a welding operation is convenient. For example, welding may be performed from the side of the first post terminal 12 distal to the active substance-coated part 21.

It is worth noting that the shape of the first end wall 12111 is not limited, for example, to a flat-plate shape, and an arc-plate shape. When the first end wall 12111 is of a flat plate structure, the first end wall 12111 is arranged at an included angle to the axial direction R of the first post terminal 12. For example, the first end wall may be of a flat plate structure perpendicular to the axial direction R of the first post terminal 12, or an inclined plate structure that is not perpendicular to the axial direction R of the first post terminal 12, but the inclination direction is not limited.

Certainly, in other embodiments of the present application, the electrical connection position of the conductive part 22 and the first end wall 12111 may not extend in the length or width direction of the first end wall 12111, and may be, for example, a plurality of discretely arranged spots. For example, the conductive part 22 is provided with a plurality of parts that are spaced apart from each other and separately welded to the first end wall 12111, which will not be described in detail herein.

Referring to FIG. 13, in some embodiments of the present application, when the conductive part 22 is electrically connected to the first end wall 12111, a first recess 12112 may be arranged on the first end wall 12111, and the recess direction of the first recess 12112 is away from the active substance-coated part 21. At least a part of the electrical connection position between the conductive part 22 and the first end wall 12111 is located in the first recess 12112. Illustratively, at least a part of the conductive part 22 may be arranged within the first recess 12112 and connected to a portion of the first end wall 12111 configured to define the first recess 12112.

In the above technical solution, in one aspect, the first recess 12112 can be used to realize pre-positioning and limiting of the electrical connection position of the conductive part 22, which is not only conducive to accurately finding the position to achieve the electrical connection and improve the production efficiency, but also conducive to improving the stability and reliability of the conductive part 22 and ensuring the stability and reliability of the battery cell 10 during the charging and discharging processes. In another aspect, by arranging the first recess 12112 on the first end wall 12111, the local wall thickness of the first end wall 12111 can be locally reduced, which is not only conducive to welding, but also conducive to reducing the weight of the first post terminal 12 and improving the gravimetric energy density of the battery cell 10.

In some optional embodiments, a part of the conductive part 22 is configured to match the first side wall 12113 in shape and arranged in fit with same. For example, when the first side wall 12113 is a curved surface, a part of the conductive part 22 may also be a curved surface and fit the first side wall 12113, and the fitting position may be electrically connected (e.g., welded), such that the electrical connection position of the conductive part 22 and the first side wall 12113 extends along the first side wall 12113. As such, the area of the electrical connection can be increased, thereby improving the reliability and stability of the electrical connection.

Certainly, the present application is not limited to this. In other embodiments of the present application, the electrical connection position between the conductive part 22 and the first side wall 12113 may not extend along the first side wall 12113, but may be, for example, a plurality of discretely arranged points. For example, the conductive part 22 is provided with a plurality of spaced-apart portions that are separately welded to the first side wall 12113, which will not be recited herein.

It should be noted that the number of first side walls 12113 is not limited and may be determined according to the shape of the first accommodating groove 12110, as long as the end of each first side wall 12113 distal to the opening of the first accommodating groove 12110 is connected to the first end wall 12111. Illustratively, when the cross-sectional shape of the first accommodating groove 12110 is circular or elliptical, the first end wall 12111 is circular or elliptical. The number of the first side wall 12113 is one, and the first side wall is annular and arranged around the circumferential edge of the first end wall 12111. Also illustratively, when the cross-sectional shape of the first accommodating groove 12110 is rectangular or oblong, the first end wall 12111 is rectangular or oblong, and the number of first side walls 12113 is four, each being connected to one of the four sides of the first end wall 12111.

It should be further noted that the first accommodating groove 12110 is not limited to the form defined by the first end wall 12111 and the first side wall 12113. For example, in some embodiments, the first end wall 12111 may not be present. In this case, the end of each first side wall 12113 distal to the opening of the first accommodating groove 12110 converges together, such that the first accommodating groove 12110 is defined only by a plurality of first side walls 12113. In this case, the conductive part 22 may be electrically connected to the first side wall 12113 to ensure normal charging and discharging processes of the battery cell 10.

In addition, it is worth noting that in other embodiments of the present application, the electrical connection position of the conductive part 22 and the first post terminal 12 may not be located in the first accommodating groove 12110. For example, the electrical connection position between the conductive part 22 and the first post terminal 12 may also be located on the post terminal inner end surface 122.

Referring to FIGs. 12 and 13, in the embodiments of the present application, the first post terminal 12 may also be provided with a first groove 126 as required, and the first groove 126 is located on the side of the first post terminal 12 distal to the active substance-coated part 21. That is, the surface of the first post terminal 12 on the side distal to the active substance-coated part 21 is a post terminal outer end surface 123, and an opening of the first groove 126 is formed on the post terminal outer end surface 123.

It will be appreciated that the first groove 126 is a groove body, and the groove body is a groove-shaped structure of a certain depth. Furthermore, when the first post terminal 12 is arranged on the upper end wall of the housing 11 and the post terminal outer end surface 123 is the upper surface of the first post terminal 12, the first groove 126 is formed with the opening upward and the wall recessed downward. For another example, when the first post terminal 12 is arranged on the lower end wall of the housing 11 and the post terminal outer end surface 123 is the lower surface of the first post terminal 12, the first groove 126 is formed with the opening downward and the wall recessed upward.

In the above technical solution, since the first post terminal 12 is provided with the first groove 126, the weight of the first post terminal 12 can be further reduced, such that the gravimetric energy density of the battery cell 10 and the battery 100 can be improved. Also, the first groove 126 is located on the outer side of the first post terminal 12, that is, the first groove is open to the side of the first post terminal 12 distal to the interior of the housing 11, and the first groove 126 can be used for accommodating or mounting structural components of the battery 100 that electrically connect various battery cells 10, so as to make full use of the space in the first post terminal 12, thereby improving the space utilization and volumetric energy density of the battery 100.

In addition, since the first post terminal 12 is provided with both the first accommodating groove 12110 and the first groove 126, the first groove 126 is located on the side of the first accommodating groove 12110 distal to the active substance-coated part 21, and the first groove 126 is open in a direction away from the first accommodating groove 12110, the conductive part 22 can be laser-welded to the first end wall 12111 through the first groove 126 from the outside of the first post terminal 12, that is, the side of the first post terminal 12 distal to the active substance-coated part 21, so as to facilitate the electrical connection between the conductive part 22 and the first post terminal 12 through external welding. That is, the above structural arrangement can facilitate external welding of the first post terminal 12 to the conductive part 22 through the first groove 126, which facilitates processing and manufacture of the battery cell 10 and can save processing and manufacturing costs.

Furthermore, in order to conveniently and effectively weld the conductive part 22 to the wall of the first accommodating groove 12110 through the first groove 126 and improve the reliability of the welding of the conductive part 22 to the wall of the first accommodating groove 12110, in the embodiments of the present application, the portion between the first groove 126 and the first accommodating groove 12110 can be laser welded to the conductive part 22. That is, the spacer part 127 shown in FIG. 13 can be laser welded to the conductive part 22. The spacer part 127 of the first post terminal 12 located between the first groove 126 and the first accommodating groove 12110 is thin. The spacer part 127 isolates the first groove 126 from the first accommodating groove 12110. The wall surface of the spacer part 127 on the side proximal to the active substance-coated part 21 can be used as the first end wall 12111. When the conductive part 22 needs to be welded to the first end wall 12111, since the spacer part 127 is thin, the welding of the conductive part 22 to the first end wall 12111 can be achieved through the first groove 126, thereby improving the convenience and reliability of welding.

In some embodiments, the first accommodating groove 12110 may be configured into a shape in which the length of the cross-section is greater than the width, such as a rectangle, an ellipse, an oblong, etc. The weld mark formed by welding the conductive part 22 and the first post terminal 12 may be an elongated weld mark parallel to the length direction of the first accommodating groove 12110 to improve the welding reliability and increase the current passage performance. Illustratively, when the conductive part 22 is welded to the first end wall 12111 to form a weld mark as an elongated weld mark, the width of the weld mark may be greater than or equal to 6 mm, and the distance between the weld mark and the first side wall 12113 may be greater than or equal to 1 mm, so as to ensure the current passage capacity of the battery cell 10 while ensuring the convenience and reliability of welding.

Referring to FIG. 12, the housing assembly 1 may further include a groove cover 7, and the groove cover 7 is arranged on the first post terminal 12 and closes the opening of the first groove 126.

In the above technical solution, by providing the groove cover 7 that closes the first groove 126, the first post terminal 12 can be indirectly electrically connected to the busbar component through the groove cover 7. The electrical connection between the groove cover 7 and the busbar component can be more convenient and the electrical connection area can be larger through the arrangement of the position and structure of the groove cover 7. As such, arranging the groove cover 7 can facilitate the electrical connection between adjacent battery cells 10 in the battery 100, and since the electrical connection positions of the battery cells 10 are located at the groove cover 7, which can be separated from the electrical connection position of the conductive part 22 and the first post terminal 12 by the first groove 126, there is less interference between the two, which can further improve the stability and reliability of the battery cell 10.

It should be noted that, the specific structure of the battery cell assembly 2 in the embodiments of the present application is not limited. For example, the battery cell assembly may include but is not limited to the following two embodiments.

Referring to FIGs. 13 and 14, in a first embodiment, the active substance-coated part 21 includes a current collector 211 and an active substance layer 212 arranged on the current collector 211. The conductive part 22 includes a tab part 221 electrically connected to the current collector 211. The tab part 221 includes a plurality of tab plates 2211. The tab plates 2211 are structures electrically connected to the current collector 211 but not coated with the active substance, and may be formed by directly die-cutting the current collector 211. Parts of the plurality of tab plates 2211 proximal to the current collector 211 (i.e., gather in a direction approaching each other) converge to form a first gathering part 2212, and parts of the plurality of tab plates 2211 distal to the current collector 211 converge and are connected to form a second gathering part 2213. The first gathering part 2212 connects the second gathering part 2213 and the active substance-coated part 21. When the accommodating part 121 is provided with the first accommodating groove 12110, at least a part of the second gathering part 2213 may be accommodated in the first accommodating groove 12110.

In the above technical solution, the plurality of tab plates 2211 only converge (that is, get together in a direction toward each other) and gather but are not connected when forming the first gathering part 2212, while the plurality of tab plates 2211 not only converge and gather but are also connected into an integrated structure when forming the second gathering part 2213. For example, the plurality of tab plates 2211 may be connected into an integrated plate structure by welding (such as ultrasonic welding) to form the second gathering part 2213, but the present application is not limited thereto. For example, the plurality of tab plates 2211 may also converge and be connected to form the second gathering part 2213 by conductive adhesive bonding, etc., which will not be described in detail herein.

It should be noted that in the embodiments of the present application, the tab plates 2211 are divided into positive electrode tab plates 2211 and negative electrode tab plates 2211. The positive electrode tab plates 2211 that need to gather together are stacked together and ultrasonically pre-welded to form a second gathering part 2213 of the positive electrode, which can reduce the gap between layers and enable the plurality of fluffy positive electrode tab plates 2211 to form a plate structure of a certain rigidity. Similarly, the negative electrode tab plates 2211 that need to gather together are stacked together and ultrasonically pre-welded to form a second gathering part 2213 of the negative electrode, which can reduce the gap between layers and enable the plurality of fluffy negative electrode tab plates 2211 to form a plate structure of a certain rigidity.

In the above technical solution, the "parts of the plurality of tab plates 2211 proximal to the current collector 211 converge to form a first gathering part 2212, and parts of the plurality of tab plates 2211 distal to the current collector 211 converge and are connected to form a second gathering part 2213" is intended to illustrate that: in the extension direction of the tab plates 2211, the first gathering part 2212 and the second gathering part 2213 are sequentially arranged in a direction away from the current collector 211, and the specific positions of the first gathering part 2212 and the second gathering part 2213 are not limited, that is, it is not required how close the first gathering part 2212 is to the current collector 211, or how far the second gathering part 2213 is from the current collector 211. In some optional examples, the current collector 211 and the tab plates 2211 may be an integrated member, such as an integrally formed aluminum foil for the positive electrode plates, and an integrally formed copper foil for the negative electrode plates.

In the above technical solution, since the tab part 221 includes the second gathering part 2213 formed by converging and connecting the plurality of tab plates 2211, at least a part of the second gathering part 2213 is accommodated in the first accommodating groove 12110, which facilitates the connection between the conductive part 22 and the first post terminal 12, and can make full use of the space of the first post terminal 12, thereby improving the volumetric energy density of the battery cell 10.

Referring to FIGs. 12-14, in the first embodiment, at least a part of the first gathering part 2212 is accommodated in the first accommodating groove 12110. In the above technical solution, at least a part of the first gathering part 2212 and at least a part of the second gathering part 2213 of the tab part 221 are both accommodated in the first accommodating groove 12110, such that the space in the first post terminal 12 can be more fully utilized, and the space occupied by the tab part 221 in the housing 11 can be further reduced, so as to accommodate a larger active substance-coated part 21, thereby improving the volumetric energy density of the battery cell 10. Moreover, the redundancy of the tab part 221 in the housing 11 can be better reduced, and the probability of short circuit between the tab part 221 and the active substance-coated part 21 can be further reduced.

In this embodiment, the second gathering part 2213 is electrically connected to the first post terminal 12 directly or indirectly. For example, referring to FIG. 12, when the second gathering part 2213 is directly electrically connected to the first post terminal 12, for example, when the second gathering part 2213 is welded (e.g., by laser welding) to the first post terminal 12, the configuration of the battery cell assembly 2 can be simplified, thus reducing the number of components, simplifying the assembly process, and improving the assembly efficiency. The method and position of direct electrical connection between the second gathering part 2213 and the first post terminal 12 are not limited. For example, the electrical connection position of the second gathering part 2213 and the first post terminal 12 may be located at the first end wall 12111 and/or the first side wall 12113. Further, the electrical connection position of the second gathering part 2213 and the first end wall 12111 may extend in the length direction or the width direction of the first end wall 12111. Yet further, the first end wall 12111 is provided with the first recess 12112, and the electrical connection position of the second gathering part 2213 and the first end wall 12111 may be located in the first recess 12112, and the like. The corresponding technical effects can refer to the introduction of the above embodiments and will not be described in detail herein.

As an optional solution, the conductive part 22 may also be provided with an adapting piece 222 as required. In this case, the second gathering part 2213 is electrically connected to the first post terminal 12 indirectly. Specifically, referring to FIG. 13, when the conductive part 22 includes the adapting piece 222, the adapting piece 222 is connected to the second gathering part 2213, and the conductive part 22 is electrically connected to the first post terminal 12 via the adapting piece 222. In this case, at least a part of the adapting piece 222 is accommodated in the first accommodating groove 12110. In this example, at least a part of the second gathering part 2213 is also accommodated in the first accommodating groove 12110, but the first gathering part 2212 may be accommodated in the first accommodating groove 12110 or may not be accommodated in the first accommodating groove 12110.

In the above technical solution, the active substance-coated part 21 can be electrically connected to the first post terminal 12 through the first gathering part 2212, the second gathering part 2213, and the adapting piece 222 in sequence. The electrical connection position of the conductive part 22 and the first post terminal 12 is located on the adapting piece 222. For example, the electrical connection can be achieved by welding (for example, laser welding) the adapting piece 222 to the first post terminal 12. In addition, the adapting piece 222 and the tab plate 2211 are two separate components and are connected by welding (such as ultrasonic welding) or the like.

In the above technical solution, by accommodating at least a part of the second gathering part 2213 and at least a part of the adapting piece 222 in the first accommodating groove 12110, the space in the first post terminal 12 can be more fully utilized, and the space occupied by the conductive part 22 in the housing 11 can be further reduced, so as to improve the volumetric energy density of the battery cell 10. When at least a part of the first gathering part 2212, at least a part of the second gathering part 2213, and at least a part of the adapting piece 222 are all accommodated in the first accommodating groove 12110, the space in the first post terminal 12 can be further fully utilized, and the space occupied by the conductive part 22 in the housing 11 can be more effectively reduced, so as to further improve the volumetric energy density of the battery cell 10.

Also, by using the adapting piece 222 to achieve the indirect electrical connection between the second gathering part 2213 and the first post terminal 12, the adapting piece 222 may be welded to the first post terminal 12 in a portion providing clearance for the second gathering part 2213 to make the welding between the adapting piece 222 and the first post terminal 12 firm, thus reducing the risk of welding cracking and further improving the reliability and stability of the battery cell 10. In addition, by electrically connecting the first post terminal 12 and the tab plates 2211 through the adapting piece 222, the structure of the tab plates 2211 may also be simplified.

The method and position of direct electrical connection between the adapting piece 222 and the first post terminal 12 are not limited. For example, the adapting piece 222 is electrically connected to the first post terminal 12 by welding. For example, the electrical connection position of the adapting piece 222 and the first post terminal 12 may be located at the first end wall 12111 and/or the first side wall 12113. Further, the electrical connection position of the adapting piece 222 and the first end wall 12111 may extend in the length direction or the width direction of the first end wall 12111. Yet further, the first end wall 12111 is provided with the first recess 12112, and the electrical connection position of the adapting piece 222 and the first end wall 12111 may be located in the first recess 12112, and the like. The corresponding technical effects can refer to the introduction of the above embodiments and will not be described in detail herein. When the electrical connection position of the adapting piece 222 and the first post terminal 12 is located at the first end wall 12111 and/or the first side wall 12113, since at least a part of the adapting piece 222 is accommodated in the first accommodating groove 12110, the structure of the adapting piece 222 can be simplified, thereby reducing the redundancy and lowering the costs.

Referring to FIGs. 13 and 14, in a second embodiment, the active substance-coated part 21 includes a current collector 211 and an active substance layer 212 arranged on the current collector 211. The conductive part 22 includes a tab part 221 and an adapting piece 222. The tab part 221 includes a plurality of tab plates 2211 electrically connected to the current collector 211. Parts of the plurality of tab plates 2211 proximal to the current collector 211 converge to form a first gathering part 2212, and parts of the plurality of tab plates 2211 distal to the current collector 211 converge and are connected to form a second gathering part 2213. The adapting piece 222 is electrically connected to the second gathering part 2213. When the accommodating part 121 is provided with the first accommodating groove 12110, at least a part of the adapting piece 222 may be accommodated in the first accommodating groove 12110 and electrically connected to the first post terminal 12.

In the above technical solution, compared with the solution including the adapting piece 222 in the first embodiment, in the second embodiment, at least a part of the adapting piece 222 is accommodated in the first accommodating groove 12110, but the relative positions of the tab part 221 and the first accommodating groove 12110 are not limited, that is, at least a part of the tab part 221 may be accommodated in the first accommodating groove 12110, and the tab part 221 may also be completely located outside the first accommodating groove 12110, thereby meeting different structural design requirements.

In the above technical solution, by accommodating at least a part of the adapting piece 222 in the first accommodating groove 12110, the adapting piece 222 can occupy the space in the first post terminal 12, such that the space occupied by the adapting piece 222 in the housing 11 can be reduced, so as to accommodate a larger active substance-coated part 21, thereby improving the volumetric energy density of the battery cell 10. Moreover, the probability of short circuit between the adapting piece 222 and the active substance-coated part 21 can be reduced, and the risk of short circuit of the battery cell assembly 2 can be reduced, thereby improving the stability and reliability of the battery cell 10.

Also, by using the adapting piece 222 to achieve the indirect electrical connection between the second gathering part 2213 and the first post terminal 12, the adapting piece 222 may be welded to the first post terminal 12 in a portion providing clearance for the second gathering part 2213 to make the welding between the adapting piece 222 and the first post terminal 12 firm, thus reducing the risk of welding cracking and further improving the reliability and stability of the battery cell 10. In addition, by electrically connecting the first post terminal 12 and the tab plates 2211 through the adapting piece 222, the structure of the tab plates 2211 may also be simplified.

For example, in some optional embodiments, in the first embodiment above or the third embodiment below, when the second gathering part 2213 is electrically connected to the first post terminal 12 directly, the conductive part 22 may consist only of the positive electrode tab and the negative electrode tab in each electrode assembly 2a. For example, in other embodiments, for example, in the first or second embodiment above or the third or fourth embodiment below, when the second gathering part 2213 is electrically connected to the first post terminal 12 indirectly via the adapting piece 222, the conductive part 22 may consist simultaneously of the positive electrode tab and the negative electrode tab in each electrode assembly 2a and each adapting piece 222.

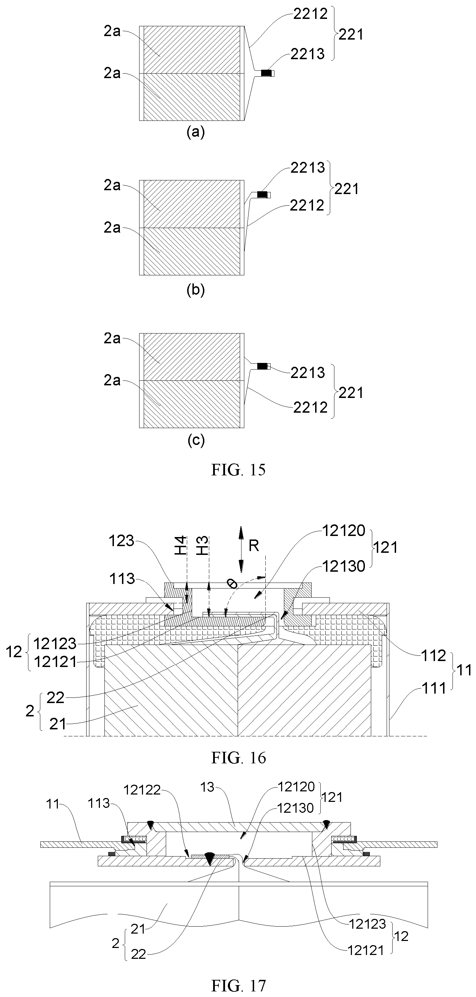

In some embodiments, when the battery cell assembly 2 includes two electrode assemblies 2a, the tab plates 2211 of the two electrode assemblies 2a may be gathered together, and the gathering position is located at the center position between the two electrode assemblies 2a to form a symmetrical gathering form (for example, as shown in FIGs. 14 and 15(a)). Alternatively, in other embodiments, when the tab plates 2211 of the two electrode assemblies 2a are gathered together, the gathering position may also be closer to one of the electrode assemblies 2a to form an asymmetrical gathering form (for example, as shown in FIGs. 15(b) and 15(c)). In addition, the electrode assembly 2a may be in a full-tab form (for example, as shown in FIG. 15(a)) or a half-tab form (for example, as shown in FIGs. 14, 15(b), and 15(c)).

Certainly, this is not limiting herein, and the tab plates 2211 of the same polarity of the two electrode assemblies 2a may not be gathered together. For example, the tab plates 2211 of each electrode assembly 2a are separately gathered according to the positive and negative electrodes, that is, the positive electrode tabs of one electrode assembly 2a are gathered, and the positive electrode tabs of another electrode assembly 2a are also gathered, which will not be described in detail herein.

It should be noted that the accommodating part 121 in the embodiments of the present application is not limited to the above forms in which the first accommodating groove 12110 must be provided. For example, other optional embodiments will be given later.

Illustratively, referring to FIG. 16, in some embodiments of the present application, the accommodating part 121 may also be configured to include a second accommodating groove 12120, the surface of the first post terminal 12 on the side distal to the active substance-coated part 21 is a post terminal outer end surface 123, an opening of the second accommodating groove 12120 is formed on the post terminal outer end surface 123, the second accommodating groove 12120 is in communication with the interior of the housing 11 through a first perforation 12130, and the conductive part 22 is provided in the first perforation 12130 in a penetrating manner and is at least partially accommodated in the second accommodating groove 12120.

It can be understood that the second accommodating groove 12120 is a groove body, and the groove body is a groove-shaped structure of a certain depth. For example, when the first post terminal 12 is arranged on the upper end wall of the housing 11 and the post terminal outer end surface 123 is the upper surface of the first post terminal 12, the second accommodating groove 12120 is formed as an accommodating groove with an opening open upward and a wall recessed downward. For another example, when the first post terminal 12 is arranged on the lower end wall of the housing 11 and the post terminal outer end surface 123 is the lower surface of the first post terminal 12, the second accommodating groove 12120 is formed as an accommodating groove with an opening open downward and a wall recessed upward.

In the above technical solution, referring to FIG. 16, the first post terminal 12 is provided with the second accommodating groove 12120, which can reduce the weight of the first post terminal 12 to a certain extent, so as to improve the gravimetric energy density of the battery cell 10 and the battery 100. Also, since the opening of the second accommodating groove 12120 is formed on the post terminal outer end surface 123 and the post terminal outer end surface 123 is the surface of the first post terminal 12 on the side distal to the active substance-coated part 21, the second accommodating groove 12120 can be open in a direction away from the active substance-coated part 21. In this way, when at least a part of the conductive part 22 is accommodated in the second accommodating groove 12120, the accommodation and arrangement of the conductive part 22 can be easily achieved through the opening of the second accommodating groove 12120, and the electrical connection operation between the conductive part 22 and the first post terminal 12 can be easily achieved through the opening of the second accommodating groove 12120, etc., thereby reducing the difficulty in producing the battery cell 10 and improving the production efficiency of the battery cell 10.

Meanwhile, since the second accommodating groove 12120 can be in communication with the interior of the housing 11 through the first perforation 12130, the second accommodating groove 12120 can also serve as a buffering and temporary storage structure for the electrolyte, such that more electrolyte can be accommodated in the housing 11. As the electrolyte will be consumed during the charging and discharging processes of the battery cell 10, a greater amount of electrolyte can prolong the service life of the battery cell 10. It is also due to the fact that the second accommodating groove 12120 can be in communication with the interior of the housing 11 through the first perforation 12130, that the second accommodating groove 12120 can also serve as an accommodating and buffering structure for gases produced in the battery cell assembly 2, reducing the expansion of the battery cell 10 and improving the reliability and stability of the battery cell 10.

It is worth noting that when the accommodating part 121 is provided with the second accommodating groove 12120 and the conductive part 22 is provided in the first perforation 12130 in a penetrating manner and is at least partially accommodated in the second accommodating groove 12120, the electrical connection position of the conductive part 22 and the first post terminal 12 is not limited.

Illustratively, when the conductive part 22 is provided in the first perforation 12130 in a penetrating manner and is at least partially accommodated in the second accommodating groove 12120, in some embodiments of the present application, the electrical connection position of the conductive part 22 and the first post terminal 12 is located on the wall of the first perforation 12130 formed on the first post terminal 12.

In the above technical solution, the arrangement of the electrical connection position of the conductive part 22 and the first post terminal 12 on the wall of the first perforation 12130 facilitates the electrical connection operation between the conductive part 22 and the first post terminal 12 through the second accommodating groove 12120. In addition, when the electrical connection area between the conductive part 22 and the first post terminal 12 is large, the sealing of the first perforation 12130 can be achieved by utilizing the electrical connection between the conductive part 22 and the first post terminal 12, so as to save sealing costs, reduce electrolyte leakage, and save sealing parts.

Specifically, the conductive part 22 may be welded to the wall of the first perforation 12130 at a position of the first perforation 12130 connected to the second accommodating groove 12120, so as to facilitate the operation. In addition, by controlling a weld mark, the first perforation 12130 can be sealed by utilizing the weld mark and the conductive part 22, so as to mitigate the problem of the electrolyte in the housing 11 leaking from the first perforation 12130.

Further illustratively, when the conductive part 22 is provided in the first perforation 12130 in a penetrating manner and is at least partially accommodated in the second accommodating groove 12120, in other embodiments of the present application, the electrical connection position of the conductive part 22 and the first post terminal 12 may also be located on the wall of the second accommodating groove 12120 formed on the first post terminal 12. As such, the electrical connection operation is facilitated. For example, when the conductive part 22 is welded to the wall of the second accommodating groove 12120 formed on the first post terminal 12, the conductive particles generated by welding can be prevented from entering the housing 11, which may otherwise cause short circuit and other problems.

Specifically, referring to FIGs. 16 and 17, the first post terminal 12 includes a second end wall 12121 and a second side wall 12123, the second end wall 12121 is located on the side of the second side wall 12123 proximal to the active substance-coated part 21, the second end wall 12121 and the second side wall 12123 define, in an enclosing manner, the second accommodating groove 12120, the first perforation 12130 is arranged on the second end wall 12121, and the electrical connection position between the conductive part 22 and the first post terminal 12 is located on the second end wall 12121 and/or the second side wall 12123.

More specifically, the conductive part 22 and the first post terminal 12 may be electrically connected by welding. Therefore, the welding position is the electrical connection position of the conductive part 22 and the first post terminal 12. In other embodiments of the present application, the conductive part 22 and the first post terminal 12 may be electrically connected by other means instead of welding, such as by providing conductive adhesive or conductive nails, which will not be described in detail herein.

In order to simplify the description, the following description will take an example that the conductive part 22 is welded to the first post terminal 12 to form an electrical connection, and that the welding position is the electrical connection position of the conductive part 22 and the first post terminal 12. For example, in some embodiments, the electrical connection position of the conductive part 22 and the first post terminal 12 is located on the second end wall 12121 and/or the second side wall 12123, and the conductive part 22 may be welded to at least one of the second end wall 12121 and the second side wall 12123.

In the above technical solution, by arranging the electrical connection position of the conductive part 22 and the first post terminal 12 on at least one of the second end wall 12121 and the second side wall 12123, not only does the second accommodating groove 12120 have a function of accommodating at least a part of the conductive part 22, but also the wall of the second accommodating groove 12120 has a function of achieving an electrical connection to the conductive part 22, which can simplify the structure of the first post terminal 12 and facilitate processing of the first post terminal 12. In addition, since the first perforation 12130 is formed on the second end wall 12121, the conductive part 22 can easily extend into the second accommodating groove 12120 through the first perforation 12130, thereby simplifying the structure of the conductive part 22, reducing the redundancy of the conductive part 22, and lowering the cost of the conductive part 22. Furthermore, the opening direction of the opening of the second accommodating groove 12120 enables the electrical connection operation on the conductive part 22 and the wall of the second accommodating groove 12120 to be easily performed through the opening of the second accommodating groove 12120, thereby reducing the difficulty of electrical connection. Furthermore, by utilizing the wall of the second accommodating groove 12120 to achieve electrical connection to the conductive part 22, the electrical connection region of the conductive part 22 and the first post terminal 12 may be relatively large, thereby improving the reliability and stability of the electrical connection, and further improving the performance of the battery cell 10.

In addition, since the electrical connection position of the conductive part 22 and the first post terminal 12 is located in the second accommodating groove 12120, not only can the electrical connection position be prevented from protruding out of the first post terminal 12 and occupying the space outside the first post terminal 12, but also the electrical connection position can be protected by the first post terminal 12, thereby improving the reliability and stability of the electrical connection between the conductive part 22 and the first post terminal 12.

Referring to FIGs. 16 and 17, in some embodiments, the conductive part 22 and the second end wall 12121 match in partial shape, and are arranged in a fit and electrically connected, such that the electrical connection position between the conductive part 22 and the second end wall 12121 extends in the length or width direction of the second end wall 12121. For example, when the second end wall 12121 is flat, a part of the conductive part 22 may also be flat and fit the second end wall 12121, and the fitting position is electrically connected, such as welded. As such, the area of the electrical connection can be increased, and the reliability and stability of the electrical connection can be improved.

It is worth noting that the shape of the second end wall 12121 is not limited. For example, the second end wall may be of a flat plate structure or an arc plate structure. When the second end wall 12121 is of a flat plate structure, the second end wall 12121 is arranged at an included angle to the axial direction R of the first post terminal 12. For example, the second end wall may be of a flat plate structure perpendicular to the axial direction R of the first post terminal 12, or an inclined flat plate structure that is not perpendicular to the axial direction R of the first post terminal 12, but the inclination direction is not limited.

For example, referring to FIGs. 16 and 17, when the second end wall 12121 is of a flat structure, the included angle θ between the second end wall 12121 and the axial direction R of the first post terminal 12 is equal to 90°. That is, in the direction from the first perforation 12130 to the second side wall 12123, the second end wall 12121 and the active substance-coated part 21 are equidistant. As such, the welding of the conductive part 22 to the second end wall 12121 can be facilitated.

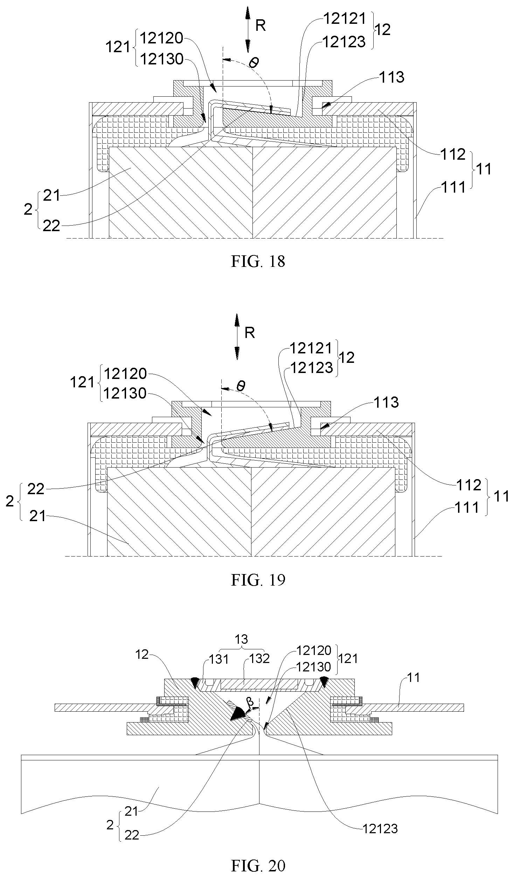

For another example, referring to FIG. 18, the included angle θ between the second end wall 12121 and the axial direction R of the first post terminal 12 is greater than 90°, that is, in the direction from the first perforation 12130 to the second side wall 12123, the second end wall 12121 extends obliquely in a direction toward the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the first post terminal 12 may be 90°-145°, for example, 100°, 110°, 120°, 130°, 140°, etc. Such a configuration makes the second end wall 12121 easy to process and facilitates the electrical connection to the conductive part 22, while adequately utilizing the space in the first post terminal 12 to accommodate the conductive part 22.

For yet another example, referring to FIG. 19, the included angle θ between the second end wall 12121 and the axial direction R of the first post terminal 12 is less than 90°, that is, in the direction from the first perforation 12130 to the second side wall 12123, the second end wall 12121 extends obliquely in a direction away from the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the first post terminal 12 may be 45°-90°, for example, 50°, 60°, 70°, 80°, etc. Such a configuration makes the second end wall 12121 easy to process and facilitates the electrical connection to the conductive part 22, while adequately utilizing the space in the first post terminal 12 to accommodate the conductive part 22.

Certainly, the present application is not limited to this. In other embodiments of the present application, the electrical connection position between the conductive part 22 and the second end wall 12121 may not extend in the length or width direction of the second end wall 12121, but may be a plurality of discretely arranged points. For example, the conductive part 22 is provided with a plurality of spaced-apart portions that are separately welded to the second end wall 12121, which will not be recited herein.

Referring to FIG. 17 again, no matter what the specific value of the included angle θ between the second end wall 12121 and the axial direction R of the first post terminal 12 is, in the embodiments of the present application, when the conductive part 22 is electrically connected to the second end wall 12121, a second recess 12122 may be arranged on the second end wall 12121 as required. The second recess 12122 is a groove formed by a part of the second end wall 12121 recessed toward the end proximal to the active substance-coated part. At least a part of the electrical connection position between the conductive part 22 and the second end wall 12121 is located in the second recess 12122.

In the above technical solution, the part of the conductive part 22 located in the second recess 12122 is arranged to match the second recess 12122 in shape, and is arranged in fit with same to achieve the electrical connection, such that the second recess 12122 can be configured to pre-position and limit the electrical connection position of the conductive part 22, which is conducive to accurately finding the position to achieve the electrical connection, thereby improving the production efficiency and improving the stability and reliability of the electrical connection position, so as to ensure the reliability and stability of charging and discharging operations of the battery cell 10.

It should be noted that, in the embodiments of the present application, a part of the conductive part 22 may also be configured to match the second side wall 12123 in shape and arranged in fit with same. For example, when the second side wall 12123 is a curved surface, the part of the conductive part 22 may also be a curved surface and fit the second side wall 12123, and the fitting position may be electrically connected (for example, welded), such that the electrical connection position of the conductive part 22 and the second side wall 12123 extends along the second side wall 12123. As such, the area of the electrical connection can be increased, thereby improving the reliability and stability of the electrical connection.

It should be further noted that, in other embodiments of the present application, the electrical connection position of the conductive part 22 and the second side wall 12123 may not extend along the second side wall 12123, and may be, for example, a plurality of discretely arranged spots. For example, the conductive part 22 is provided with a plurality of parts that are spaced apart from each other and separately welded to the second side wall 12123, which will not be described in detail herein.

It will be appreciated that the number of second side walls 12123 is not limited and may be determined according to the shape of the second accommodating groove 12120, as long as the end of each second side wall 12123 distal to the opening of the second accommodating groove 12120 is connected to the second end wall 12121. Illustratively, when the cross-sectional shape of the second accommodating groove 12120 is circular or elliptical, the second end wall 12121 is circular or elliptical. The number of the second side wall 12123 is one, and the second side wall is annular and arranged around the circumferential edge of the second end wall 12121. Also illustratively, when the cross-sectional shape of the second accommodating groove 12120 is rectangular or oblong, the second end wall 12121 is rectangular or oblong, and the number of second side walls 12123 is four, each being connected to one of the four sides of the second end wall 12121.

It should be further noted that the second accommodating groove 12120 is not limited to the form defined by the second end wall 12121 and the second side wall 12123. For example, in some embodiments, referring to FIG. 20, the end of each second side wall 12123 distal to the opening of the second accommodating groove 12120 extends to the first perforation 12130, such that the second accommodating groove 12120 is defined only by a plurality of second side walls 12123. In this case, the conductive part 22 may be electrically connected to the second side walls 12123.

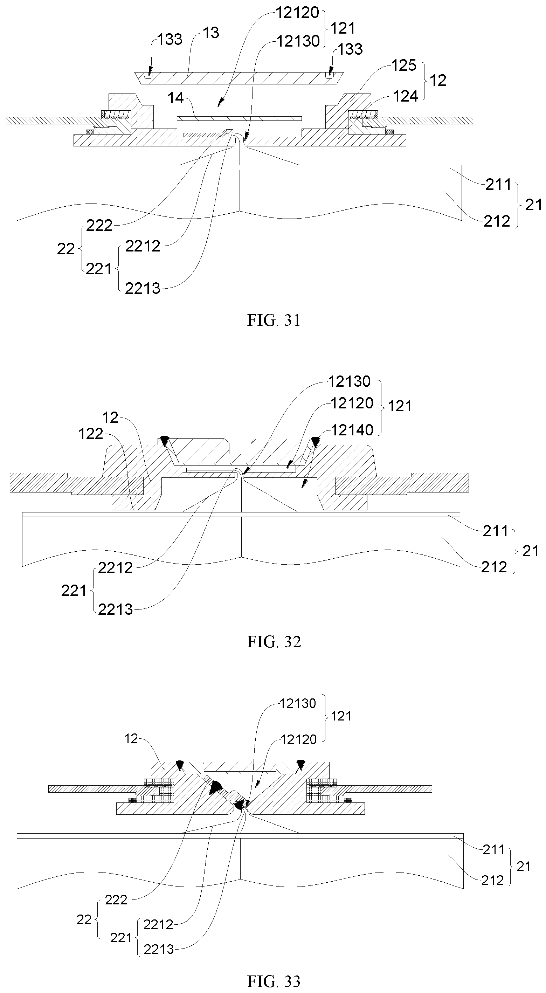

In some embodiments, referring to FIG. 32, the accommodating part 121 may be provided with both a third accommodating groove 12140 and the second accommodating groove 12120. The second accommodating groove 12120 is located on the side of the third accommodating groove 12140 distal to the active substance-coated part 21. The opening of the third accommodating groove 12140 is formed on the post terminal inner end surface 122 of the first post terminal 12 on the side proximal to the active substance-coated part 21. The opening of the second accommodating groove 12120 is formed on the post terminal outer end surface 123 of the first post terminal 12 on the side distal to the active substance-coated part 21. The third accommodating groove 12140 and the second accommodating groove 12120 are in communication through the first perforation 12130. As such, a part of the conductive part 22 is located in the third accommodating groove 12140, the conductive part 22 is also provided in the first perforation 12130 in a penetrating manner, and the remaining of the conductive part 22 is located in the second accommodating groove 12120, such that the space in the first post terminal 12 can be more adequately utilized, and the space occupied by the conductive part 22 in the housing 11 can be reduced.

It is worth noting that when the conductive part 22 is connected to the second end wall 12121 or the second side wall 12123 by laser welding, referring to FIG. 20, the included angle β between a part of the conductive part 22 used for welding and the axis of the first perforation 12130 can be set to be greater than 5°, so as to mitigate the problem of laser entering the housing 11 through the first through hole 12130, and facilitate the welding operation. In addition, when the included angle β between the part of the conductive part 22 used for welding and the axis of the first perforation 12130 is close to 5°, edge sealing welding may be used, and overlap welding may be used for the rest.

Referring to FIG. 16 again, in the embodiments of the present application, the connection manner between the first post terminal 12 and the housing 11 is not limited. For example, the connection manner may be welding or riveting. For example, when the two are combined by riveting, the housing 11 is provided with a mounting hole 113, and the first post terminal 12 is mounted by riveting at the mounting hole 113. Certainly, it will be appreciated that when the first post terminal and the housing are fitted by welding or in other means, the housing 11 may also be provided with the mounting hole 113, and the first post terminal 12 is mounted at the mounting hole 113.

Optionally, referring to FIG. 16, the second accommodating groove 12120 can be arranged corresponding to the position of the mounting hole 113, or in other words, on a projection plane perpendicular to the axial direction R of the first post terminal 12, the orthographic projection of the second accommodating groove 12120 is located within the range of orthographic projection of the mounting hole 113, such that the second accommodating groove 12120 can have a larger depth to accommodate more conductive parts 22, thereby reducing the space occupied by the conductive parts 22 in the housing 11 to a greater extent.

In some embodiments, referring to FIG. 16, when the housing 11 is provided with a mounting hole 113 and the first post terminal 12 is mounted in the mounting hole 113, in the axial direction R of the first post terminal 12, the depth H3 of the second accommodating groove 12120 is greater than or equal to the minimum distance H4 from the post terminal outer end surface 123 to the mounting hole 113.

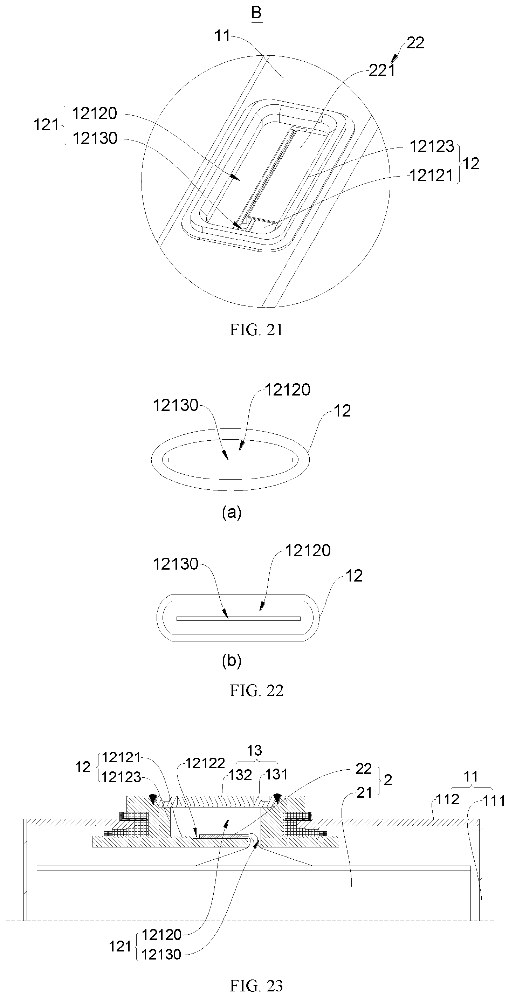

It should be noted that the specific shape of the second accommodating groove 12120 is not limited, and may be a regular shape or an irregular shape, e.g., a cylindrical groove with a rectangular, elliptical, or oblong cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. It is worth noting that the oblong shape described herein refers to a shape in which the two short sides of a rectangle are replaced by convex curves, such as the shape shown in FIG. 22(b).

Therefore, the depth H3 of the second accommodating groove 12120 refers to: the maximum depth of the second accommodating groove 12120 in the axial direction R of the first post terminal 12. Since in the axial direction R of the first post terminal 12, the depth H3 of the second accommodating groove 12120 is greater than or equal to the minimum distance H4 from the post terminal outer end surface 123 to the mounting hole 113, the volume of the first post terminal 12 can be fully utilized, such that the second accommodating groove 12120 has a larger depth, which is conducive to accommodating more conductive parts 22, and then can reduce the space occupied by the conductive parts 22 in the housing 11 to a greater extent, further improve the energy density of the battery cell 10, and further reduce the redundancy of the conductive part 22 in the housing 11. Meanwhile, since the second accommodating groove 12120 has a larger depth, gases produced by the battery cell assembly 2 can also be accommodated, which ensures the reliability and stability of the battery cell 10, and can also accommodate more electrolyte to ensure the service life of the battery cell 10.

It should be noted that the volume of the second accommodating groove 12120 is not limited. For example, in some specific examples, the volume of the second accommodating groove 12120 that can be used for accommodating the conductive part 22 (referred to as a third volume V4) may be greater than or equal to 298 mm³, such that the second accommodating groove 12120 may have sufficient space to accommodate the conductive part 22 and facilitate welding of the conductive part 22 to the first post terminal 12. However, when the third volume V4 of the second accommodating groove 12120 is less than 298 mm³, the accommodating capacity of the second accommodating groove 12120 for the conductive part 22 is relatively weakened, and the welding difficulty of the conductive part 22 with the first post terminal 12 is increased. For example, the third volume V4 of the second accommodating groove 12120 may be 300 mm³, 400 mm³, 500 mm³, 600 mm³, 700 mm³, 800 mm³, 1000 mm³, and the like.

It is worth noting that the third volume V4 of the second accommodating groove 12120 is: the difference between the total volume V5 of the second accommodating groove 12120 and the volume of other components (such as the first cover plate 13 and the second cover plate 14 described herein) required to be accommodated by the second accommodating groove 12120 except the conductive part 22 (referred to as a fourth volume V6), that is, V4 = V5 - V6. For example, in some specific examples, the total volume V5 of the second accommodating groove 12120 may be 1400 mm³-1500 mm³, such that the second accommodating groove 12120 may have more sufficient space to accommodate the conductive part 22 and other components. For example, the total volume V5 of the second accommodating groove 12120 may be 1420 mm³, 1440 mm³, 1460 mm³, 1480 mm³, 1490 mm³, and the like.

In the embodiments of the present application, the shape of the first perforation 12130, the number of the first perforation 12130, and the relative positional relationship between the first perforation 12130 and the second accommodating groove 12120 are not limited.

Illustratively, for the shape of the first perforation 12130, referring to FIGs. 21 and 22, in the embodiments of the present application, the first perforation 12130 may be in an elongated shape, so as to match the shape of the plate-like part of the conductive part 22, thereby facilitating the plate-like part of the conductive part 22 to pass through. Also, when the first perforation 12130 is in an elongated shape, the second accommodating groove 12120 may also be configured into a shape in which the length of the cross-section is greater than the width, such as a rectangle, an ellipse, an oblong, etc. As such, the length direction of the first perforation 12130 may be configured consistent with the length direction of the cross-section of the second accommodating groove 12120, such that the space can be adequately utilized. In addition, the weld mark formed by welding the conductive part 22 to the first post terminal 12 may be an elongated weld mark parallel to the length direction of the first perforation 12130, so as to improve the welding reliability and increase the current passage performance. Illustratively, when the conductive part 22 is welded to the second end wall 12121 to form a weld mark as an elongated weld mark, the width of the weld mark may be greater than or equal to 6 mm, and the distance between the weld mark and the second side wall 12123 may be greater than or equal to 1 mm, so as to ensure the current passage capacity of the battery cell 10 while ensuring the convenience and reliability of welding.

With regard to the dimension and number of the first perforations 12130, in the embodiments of the present application, the formation dimension and specific position of the first perforations 12130 on the second accommodating groove 12120 are not limited and may be designed according to the number of the formed first perforations 12130. For example, the width of the first perforation 12130 may be greater than or equal to 2 mm, which facilitates the conductive part 22 to pass through. For example, when only one first perforation 12130 is formed on the second accommodating groove 12120, in some examples, referring to FIGs. 21 and 22, the first perforation 12130 may be centered relative to the second accommodating groove 12120. In other examples, referring to FIG. 23, the first perforation 12130 may also be offset relative to the center of the second accommodating groove 12120. For example, in some embodiments, referring to FIG. 23, the first perforation 12130 may be formed at the edge of the second end wall 12121 to be arranged proximal to the second side wall 12123, such that the available area of the second end wall 12121 can be increased, thereby increasing the welding area between the conductive part 22 and the second end wall 12121.

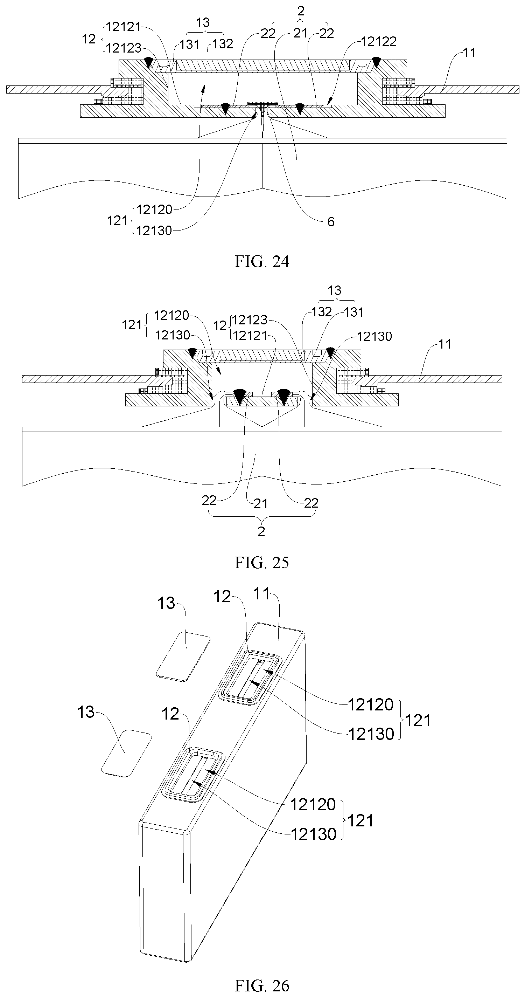

It can be understood that after passing through the first perforation 12130, the conductive part 22 will be folded to fit the second end wall 12121, but the folding direction is not limited. For example, when the first perforation 12130 is centered relative to the second accommodating groove 12120, after passing through the first perforation 12130, the conductive part 22 may be folded towards any side of the first perforation 12130 (referring to FIG. 21), such that the dimension of the second accommodating groove 12120 can be appropriately reduced, thereby enhancing the compactness and strength of the structure. Alternatively, after passing through the first perforation 12130, the conductive part 22 may also be folded towards opposite sides at the same time (referring to FIG. 24), so as to reduce the thickness at the welding position and reduce the welding heat input, thereby reducing problems such as particle splashing.

For example, when a plurality of first perforations 12130 are formed on the second accommodating groove 12120, the length directions of the plurality of first perforations 12130 are arranged in parallel or substantially in parallel to make full use of the space. In this case, the folding direction of the conductive part 22 after passing through the first perforation 12130 may be set according to the relative positional relationship of the plurality of first perforations 12130. For example, when two first perforations 12130 are formed on the second accommodating groove 12120 and are distal to each other (referring to FIG. 25), the two conductive parts 22 passing through the two first perforations 12130 may be folded in a direction toward each other; when two first perforations 12130 are formed on the second accommodating groove 12120 and are proximal to each other, the two conductive parts 22 passing through the two first perforations 12130 may be folded in a direction away from each other.

It will be appreciated that when a plurality of first perforations 12130 are formed on the second accommodating groove 12120, the number of first post terminals 12 may be appropriately reduced, so as to reduce costs and processes.

In addition, in some embodiments, referring to FIGs. 23 and 24, the first perforation 12130 may be centered relative to the active substance-coated part 21, but the position of the first perforation 12130 relative to the second accommodating groove 12120 is not limited, and may be centered or offset. Since the first perforation 12130 is centered relative to the active substance-coated part 21, the conductive part 22 may be gathered corresponding to the midline position of the active substance-coated part 21.

In some embodiments, referring to FIG. 24, a sealing member 6 may be arranged at the first perforation 12130, so as to mitigate the problem of the electrolyte in the housing 11 leaking from the first perforation 12130. The material, shape, and connection manner with the first perforation 12130 of the sealing member 6 are not limited and can be designed according to actual requirements.

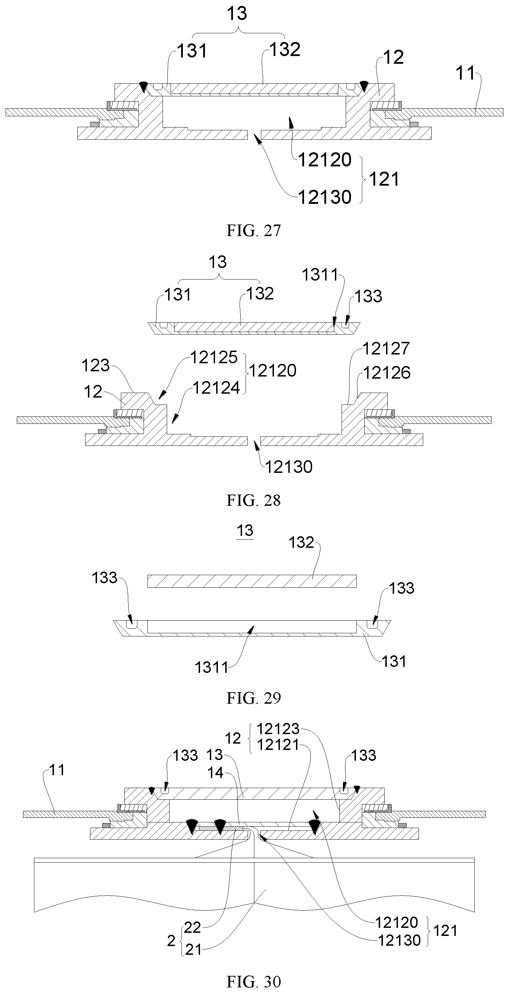

Referring to FIGs. 26 and 27, in some embodiments of the present application, when the accommodating part 121 is provided with the second accommodating groove 12120 according to any of the above embodiments, optionally, the housing assembly 1 may further include a first cover plate 13. The first cover plate 13 fits the first post terminal 12 and closes the opening of the second accommodating groove 12120, and the first cover plate 13 is electrically connected to the first post terminal 12.

In the above technical solution, arranging the first cover plate 13 to close the opening of the second accommodating groove 12120 allows to prevent the electrolyte in the housing 11 from leaking out of the opening of the second accommodating groove 12120. Moreover, since the first cover plate 13 closes the opening of the second accommodating groove 12120 and is electrically connected to the first post terminal 12, an indirect electrical connection between the first post terminal 12 and a busbar component can be easily achieved by using the first cover plate 13, and the connection area of the electrical connection can also be increased, thereby helping reduce the resistance of the electrical connection.

It is worth noting that the fitting manner and fitting position of the first cover plate 13 and the first post terminal 12 are not limited, as long as the first cover plate 13 can close the opening of the second accommodating groove 12120. For example, in some embodiments, referring to FIG. 25, the first cover plate 13 may be welded to the first post terminal 12. During processing, the conductive part 22 may be first passed through the first perforation 12130 and welded to the wall of the second accommodating groove 12120, and then the first cover plate 13 is welded to the first post terminal 12 to close the opening of the second accommodating groove 12120.

It should be further noted that the specific structure of the first cover plate 13 is not limited. For example, in some optional embodiments, referring to FIGs. 27-29, the first cover plate 13 includes a first conductive member 131 and a second conductive member 132 made of different materials, the first conductive member 131 fits and is electrically connected to the first post terminal 12, and the second conductive member 132 fits and is electrically connected to the first conductive member 131.

In the above technical solution, the first cover plate 13 is provided in a composite form, and the first conductive member 131 is set to be made of the same material as that of the first post terminal 12, so as to facilitate the electrical connection between the first conductive member 131 and the first post terminal 12. For example, the first conductive member 131 can be easy to be reliably and stably connected to the first post terminal 12 through welding. Furthermore, since the second conductive member 132 is made of a different material from that of the first conductive member 131, the electrical connection between the second conductive member 132 and a busbar component and the like made of a different material from that of the first post terminal 12 is facilitated. For example, the second conductive member 132 can be easy to be reliably and stably connected to a busbar component made of the same material as that of the second conductive member 132 through welding.

For example, when the first post terminal 12 is a negative electrode post terminal, the first post terminal 12 is a copper post, and when the busbar component is an aluminum plate, the first conductive member 131 may be made of copper, and the second conductive member 132 may be made of aluminum. In this case, the first post terminal 12 and the first conductive member 131 are made of the same material and can be effectively welded, and the second conductive member 132 and the busbar component are made of the same material and can be effectively welded, thereby effectively achieving an indirect electrical connection between the first post terminal 12 and the busbar component through the first cover plate 13. Moreover, the welding of the first post terminal 12 to the first conductive member 131 is welding between the copper materials, which has good fluidity and is not prone to cracks, thereby helping improve the sealing effect of the welding position.

Referring to FIGs. 27-29 again, in some optional embodiments, the first conductive member 131 is located between the second accommodating groove 12120 and the second conductive member 132. In the above technical solution, since the first conductive member 131 is located between the second accommodating groove 12120 and the second conductive member 132, the second accommodating groove 12120 and the second conductive member 132 can be separated. Therefore, when the electrolyte in the housing 11 enters the second accommodating groove 12120 from the first perforation 12130, the first conductive member 131 can be used to prevent the part of the electrolyte from contacting the second conductive member 132, thereby solving the problem of corrosion of the second conductive member 132 by the electrolyte.

It is worth noting that the fitting manner of the first conductive member 131 and the second conductive member 132 is not limited. For example, in some embodiments, referring to FIGs. 27-29, the first conductive member 131 is provided with a second groove 1311, the second conductive member 132 is embedded in the second groove 1311, and an opening of the second groove 1311 is formed on the surface of the first conductive member 131 distal to the second accommodating groove 12120, such that the second conductive member 132 is exposed at the opening of the second groove 1311. Alternatively, in other embodiments, the first conductive member 131 and the second conductive member 132 may be connected in a fastening connection, a snap connection, or the like.

It should be further noted that the "exposure" of the second conductive member 132 from the opening of the second groove 1311 means that the first conductive member 131 does not block the second conductive member 132 at the opening position of the second groove 1311, and the second conductive member 132 is not required to protrude from the opening of the second groove 1311. For example, the second conductive member 132 may be flush with the surface of the first conductive member 131 on the side distal to the second accommodating groove 12120, or the second conductive member 132 may protrude from the surface of the first conductive member 131 on the side distal to the second accommodating groove 12120.

In the above technical solution, embedding the second conductive member 132 in the first conductive member 131 can reduce the difficulties in assembling the first conductive member 131 and the second conductive member 132, improve the stability and convenience of the fit of the first conductive member 131 and the second conductive member 132, reduce the thickness of the first cover plate 13, and reduce the space occupied by the first cover plate 13, so as to improve the space utilization of the battery cell 10. Also, since the second conductive member 132 may be exposed from the surface of the first conductive member 131 on the side distal to the second accommodating groove 12120 through the opening of the second groove 1311, it is conducive to achieving the electrical connection between the second conductive member 132 and the busbar component outside the first post terminal 12.

In addition, since the opening of the second groove 1311 is formed on the surface of the first conductive member 131 on the side distal to the second accommodating groove 12120, it means that the second groove 1311 is open in a direction away from the active substance-coated part 21, such that the part of the first conductive member 131 configured to define the wall of the second groove 1311 is located between the second accommodating groove 12120 and the second conductive member 132, so as to separate the second accommodating groove 12120 from the second conductive member 132, thereby preventing the electrolyte entering the second groove 1311 from contacting the second conductive member 132 and reducing leakage of the electrolyte.

Certainly, in other embodiments, the first cover plate 13 may not be in a composite form composed of a plurality of materials. For example, in other embodiments of the present application, referring to FIG. 30, the first cover plate 13 as a whole may also be provided in a non-composite form made of the same material, for example, for matching the positive electrode post terminal, which will not be described in detail herein.

Referring to FIGs. 27-29 again, in some embodiments, the first cover plate 13 is also embedded in the opening of the second accommodating groove 12120. In the above technical solution, embedding the first cover plate 13 in the second accommodating groove 12120 can reduce the difficulty in assembling the first cover plate 13 and the first post terminal 12, improve the stability of assembly of the first cover plate 13 and the first post terminal 12 and the reliability and convenience of the connection, and reduce the space occupied by the first cover plate 13 outside the first post terminal 12. Moreover, since the first cover plate 13 is embedded in the opening of the second accommodating groove 12120, there is sufficient space in the second accommodating groove 12120 to accommodate the conductive part 22.

Certainly, in other embodiments of the present application, the fitting manner of the first cover plate 13 and the first post terminal 12 is not limited to being embedded in the second accommodating groove 12120. The first cover plate 13 may also be directly arranged outside the first post terminal 12 as a covering, that is, directly lids the opening of the second accommodating groove 12120, as long as it is conducive to the fit to the busbar component of the battery 100, which is not limited in the embodiments.

Referring to FIGs. 27-29 again, optionally, in the embodiments of the present application, at least a part of the wall surface at the opening of the second accommodating groove 12120 formed by the first post terminal 12 is an inclined guiding surface 12126, and the inclined guiding surface 12126 is configured to guide the first cover plate 13 to fit the opening of the second accommodating groove 12120. In the above technical solution, processing the wall surface at the opening of the second accommodating groove 12120 into an inclined surface with guidance functionality can reduce the difficulty in assembling the first cover plate 13 and the second accommodating groove 12120, and improve the assembly efficiency of the first cover plate 13 and the second accommodating groove 12120. Moreover, when the first cover plate 13 is welded to the inclined guiding surface 12126, the area at the welding position can be increased, thereby improving the reliability of the welding connection between the first cover plate 13 and the first post terminal 12 and mitigating the problem of weld pool collapse or laser penetration into the first post terminal 12 during welding.

Specifically, referring to FIGs. 27-29, the second accommodating groove 12120 includes a first groove segment 12124 and a second groove segment 12125 located on the side of the first groove segment 12124 proximal to the post terminal outer end surface 123. The cross-sectional area of the second groove segment 12125 is greater than the cross-sectional area of the first groove segment 12124, such that the second accommodating groove 12120 is in the shape of a stepped groove, and a step surface 12127 is formed at the connection position of the first groove segment 12124 and the second groove segment 12125, such that when the first cover plate 13 is embedded in the second accommodating groove 12120, the first cover plate can be specifically embedded in the second groove segment 12125 and supported by the step surface 12127.

In the above technical solution, by providing the second accommodating groove 12120 in a stepped groove form, the first cover plate 13 can stably fit the opening position of the second accommodating groove 12120, thereby improving the connection stability between the first cover plate 13 and the first post terminal 12. In addition, by defining the groove depth of the first groove segment 12124, the second accommodating groove 12120 is provided with sufficient space to accommodate the conductive part 22.

Further, when the wall surface at the opening of the second accommodating groove 12120 formed by the first post terminal 12 is the inclined guiding surface 12126, the cross-sectional area of the second groove segment 12125 may be set to gradually increase in a direction toward the post terminal outer end surface 123, such that the side wall of the second groove segment 12125 is formed as the inclined guiding surface 12126, which facilitates processing and can easily and effectively meet the guidance requirements.

Referring to FIGs. 27-29 again, in the embodiments of the present application, the first cover plate 13 may also be provided with a stress relief groove 133 as required. The stress relief groove 133 is located in the outer peripheral region of the first cover plate 13 to assist the first cover plate 13 in stress relief. In the above technical solution, by arranging the stress relief groove 133 on the first cover plate 13, the stress generated during the processing of the first cover plate 13 itself or the electrical connection between the first cover plate 13 and the first post terminal 12 can be relieved, so as to mitigate the related problems such as deformation or damage of the first cover plate 13 caused by stress.

Specifically, when the first cover plate 13 and the second accommodating groove 12120 are embedded and welded, the stress generated by welding can be relieved by utilizing the stress relief groove 133, thereby improving the lateral heat conduction and reducing the probability of damage or deformation of the first cover plate 13. Meanwhile, when the first cover plate 13 is in the above composite form including the first conductive member 131 and the second conductive member 132, the stress relief groove 133 may be arranged on the first conductive member 131 and located in the outer peripheral region of the second conductive member 132. When the first conductive member 131 and the second accommodating groove 12120 are embedded and welded, the stress generated by welding can be relieved by utilizing the stress relief groove 133, thereby improving the lateral heat conduction and reducing the probability of damage or deformation of the second conductive member 132. Moreover, when the second conductive member 132 and the first conductive member 131 are embedded and welded, the stress generated by welding can be relieved by utilizing the stress relief groove 133, thereby improving the lateral heat conduction and reducing the probability of causing the first conductive member 131 to deform that may cause the first conductive member 131 to be unable to be embedded with the second accommodating groove 12120.

Referring to FIGs. 30-31, in the embodiments of the present application, the housing assembly 1 may be further provided with a second cover plate 14 as required. The second cover plate 14 lids the first perforation 12130 and is located outside the conductive part 22 in the second accommodating groove 12120.

It is worth noting that when the housing assembly 1 includes the second cover plate 14, the housing assembly 1 may or may not include the first cover plate 13. Further, when the housing assembly 1 includes both the second cover plate 14 and the first cover plate 13, the first cover plate 13 may be in the composite form made of a plurality of materials, or may be in the non-composite form made of the same material.

In the above technical solution, at least a part of the conductive part 22 is located in the second accommodating groove 12120, and the second cover plate 14 lids the part of the conductive part 22. The second cover plate 14 also lids the first perforation 12130, such that when the electrolyte enters the second accommodating groove 12120 from the first perforation 12130, the problem of the part of the electrolyte overflowing from the first post terminal 12 can be mitigated through the second cover plate 14, thereby improving the reliability of the battery cell 10.

For example, as shown in FIGs. 30-31, when a part of the conductive part 22 is sandwiched between the second cover plate 14 and the second end wall 12121, the part of the conductive part 22, the second cover plate 14, and the second end wall 12121 can be welded together by using laser welding, so as to improve the reliability of the connection between the first post terminal 12 and the conductive part 22. Furthermore, since the second cover plate 14 can press the conductive part 22, the second cover plate 14 may be used to improve the stability of the conductive part 22 accommodated in the second accommodating groove 12120.

In the embodiments of the present application, the first post terminal 12 may be an integrally formed post terminal, or a separately formed composite post terminal. Referring to FIGs. 30-31 again, for example, the first post terminal 12 may include a first post terminal part 124 and a second post terminal part 125 made of different materials and electrically connected. The second post terminal part 125 is located on the side of the first post terminal part 124 distal to the active substance-coated part 21. The accommodating part 121 is arranged on the first post terminal part 124, or the accommodating part 121 is arranged on the first post terminal part 124 and the second post terminal part 125. The conductive part 22 is electrically connected to the first post terminal part 124.

In the above technical solution, by providing the first post terminal 12 in a composite form composed of different materials, the first post terminal part 124 located on the inner side is fitted in an accommodating manner and electrically connected to the conductive part 22, and the second post terminal part 125 located on the outer side is electrically connected to the busbar component and the like, which is conducive to realizing the assembly and electrical connection of the first post terminal 12 to related components, reducing the mutual interference between the electrical connection position of the first post terminal 12 and the conductive part 22, and the electrical connection position of the first post terminal 12 and the busbar component of the battery 100, and improving the reliability and stability of the battery cell 10.

For example, when the material of the conductive part 22 is different from that of the busbar component, the first post terminal part 124 may be set to be made of the same material as that of the conductive part 22, and the second post terminal part 125 may be set to be made of the same material as that of the busbar component, which is conducive to achieving the welding of the second post terminal part 125 to the busbar component and the welding of the first post terminal part 124 to the conductive part 22, improving the reliability and stability of the electrical connection between the conductive part 22 and the first post terminal 12, and the reliability and stability of the electrical connection between the first post terminal 12 and the busbar component.

Further, when the first post terminal 12 is in the composite form of the above embodiments and is provided with the second accommodating groove 12120 and the first perforation 12130 of any one of the above embodiments, in some embodiments, the housing assembly 1 may also include the second cover plate 14 of any one of the above embodiments. In this case, the second cover plate 14 may be made of the same material as that of the first post terminal part 124, and the first post terminal part 124 may be electrically connected to the second cover plate 14, so as to improve the reliability and stability of the electrical connection between the first post terminal part 124 and the second cover plate 14. For example, the first post terminal part 124 and the second cover plate 14 may be connected by welding.

For example, referring to FIGs. 30-31, when the first post terminal 12 is a negative electrode post terminal, the first post terminal part 124 is made of copper, the second post terminal part 125 is made of aluminum, and the busbar component is an aluminum plate, the second cover plate 14 may be made of copper, and the first cover plate 13 may be made of aluminum. As such, the second cover plate 14 and the first post terminal part 124 are made of the same material and can be effectively welded, the second post terminal part 125 and the first cover plate 13 are made of the same material and can be effectively welded, and the first cover plate 13 and the busbar component are made of the same material and can be effectively welded.

In the embodiments of the present application, when the accommodating part 121 is provided with a second accommodating groove 12120, depending on the structure of the battery cell assembly 2, the fitting condition of the battery cell assembly 2 and the second accommodating groove 12120 is not limited, and for example, may include but is not limited to the following third and fourth embodiments.

Referring to FIG. 32, in a third embodiment, the active substance-coated part 21 includes a current collector 211 and an active substance layer 212 arranged on the current collector 211. The conductive part 22 includes a tab part 221 electrically connected to the current collector 211. The tab part 221 includes a plurality of tab plates 2211. Parts of the plurality of tab plates 2211 proximal to the current collector 211 converge to form a first gathering part 2212, and parts of the plurality of tab plates 2211 distal to the current collector 211 converge and are connected to form a second gathering part 2213. The first gathering part 2212 connects the second gathering part 2213 and the active substance-coated part 21. When the accommodating part 121 is provided with the second accommodating groove 12120, at least a part of the second gathering part 2213 is accommodated in the second accommodating groove 12120.

It is worth noting that the specific structure of the battery cell assembly 2 in the third embodiment is basically the same as that of the battery cell assembly 2 in the first embodiment above, and may refer to the description of the first embodiment, and will not be described in detail herein. In the third embodiment, since the tab part 221 includes the second gathering part 2213 formed by the convergence and connection of a plurality of tab plates 2211, at least a part of the second gathering part 2213 can be easily accommodated in the second accommodating groove 12120, which facilitates the assembly of the conductive part 22 and the first post terminal 12.

In some optional examples, referring to FIG. 32, the position where the first gathering part 2212 is connected to the second gathering part 2213 can be provided corresponding to the first perforation 12130, that is, on a projection plane perpendicular to the axial direction R of the first post terminal 12, the orthographic projection of the position where the first gathering part 2212 is connected to the second gathering part 2213 is located within the range of orthographic projection of the first perforation 12130, such that the second gathering part 2213 can extend into the first perforation 12130 at a relatively short distance and enter the second accommodating groove 12120, thereby reducing the redundancy and reducing costs.

It will be appreciated that the gathering position of the tab plates 2211 may be designed according to the position of the first perforation 12130, for example, by adopting the symmetrical gathering form or the asymmetrical gathering form described above, such that the position where the first gathering part 2212 is connected to the second gathering part 2213 is arranged corresponding to the first perforation 12130, which will not be described in detail herein. In addition, referring to the above description, when the second gathering part 2213 forms a plate structure by ultrasonic pre-welding, it is convenient for the second gathering part 2213 to pass through the first perforation 12130.

Referring to FIG. 32, in the third embodiment, in addition to the second accommodating groove 12120, the accommodating part 121 may also be provided with a third accommodating groove 12140. The third accommodating groove 12140 is located on the side of the second accommodating groove 12120 proximal to the active substance-coated part 21. The surface of the first post terminal 12 on the side proximal to the active substance-coated part 21 is the post terminal inner end surface 122, and the opening of the third accommodating groove 12140 is formed on the post terminal inner end surface 122. The third accommodating groove 12140 is in communication with the second accommodating groove 12120 through the first perforation 12130. As such, at least a part of the first gathering part 2212 may be accommodated in the third accommodating groove 12140.

In the above technical solution, at least a part of the first gathering part 2212 of the tab part 221 is accommodated in the third accommodating groove 12140, and at least a part of the second gathering part 2213 is accommodated in the second accommodating groove 12120, such that the space in the first post terminal 12 can be more fully utilized, and the space occupied by the tab part 221 in the housing 11 can be further reduced, so as to accommodate a larger active substance-coated part 21, thereby improving the energy density of the battery cell 10. Moreover, the redundancy of the tab part 221 in the housing 11 can be better reduced, the probability of short circuit between the tab part 221 and the active substance-coated part 21 can be further reduced, and thus the risk of the tab part 221 being inverted toward the active substance-coated part 21 can be further reduced.

It should be noted that the specific shape of the third accommodating groove 12140 is not limited, and may be a regular shape or an irregular shape, e.g., a cylindrical groove with a rectangular, elliptical, or oblong cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. In some embodiments of the present application, the third accommodating groove 12140 may be configured into a shape in which the length of the cross-section is greater than the width, such as a rectangle, an ellipse, an oblong, etc, thus facilitating the accommodation of the first gathering part 2212.

In the third embodiment, the second gathering part 2213 is electrically connected to the first post terminal 12 directly or indirectly. For example, when the second gathering part 2213 is directly electrically connected to the first post terminal 12, such as when the second gathering part 2213 is welded to the first post terminal 12, the structure of the battery cell assembly 2 may be simplified, thereby reducing the number of components, simplifying the assembly process, and improving the assembly efficiency. The method and position of direct electrical connection between the second gathering part 2213 and the first post terminal 12 are not limited. For example, the electrical connection position of the second gathering part 2213 and the first post terminal 12 may be located on the second end wall 12121 and/or the second side wall 12123. Further, the electrical connection position of the second gathering part 2213 and the second end wall 12121 may extend in the length direction or the width direction of the second end wall 12121. Yet further, the second end wall 12121 is provided with the second recess 12122, and the electrical connection position of the second gathering part 2213 and the second end wall 12121 may be located in the second recess 12122, and the like. The corresponding technical effects can refer to the introduction of the above embodiments and will not be described in detail herein.

As an optional solution, the conductive part 22 may also be provided with an adapting piece 222 as required. In this case, the second gathering part 2213 is electrically connected to the first post terminal 12 indirectly. Specifically, referring to FIG. 33, when the conductive part 22 includes the adapting piece 222, the adapting piece 222 is connected to the second gathering part 2213, and the conductive part 22 is electrically connected to the first post terminal 12 via the adapting piece 222. In this case, at least a part of the adapting piece 222 is accommodated in the second accommodating groove 12120. In this example, at least a part of the second gathering part 2213 is also accommodated in the second accommodating groove 12120.

In the above technical solution, the active substance-coated part 21 can be electrically connected to the first post terminal 12 through the first gathering part 2212, the second gathering part 2213, and the adapting piece 222 in sequence. The electrical connection position of the conductive part 22 and the first post terminal 12 is located on the adapting piece 222. For example, the electrical connection can be achieved by welding (for example, laser welding) the adapting piece 222 to the first post terminal 12. In addition, the adapting piece 222 and the tab plate 2211 are two separate components and are connected by welding (such as ultrasonic welding) or the like.

In the above technical solution, by accommodating at least a part of the second gathering part 2213 and at least a part of the adapting piece 222 in the second accommodating groove 12120, the space in the first post terminal 12 can be more fully utilized, and the space occupied by the conductive part 22 in the housing 11 can be further reduced, so as to further improve the volumetric energy density of the battery cell 10. Furthermore, by arranging the adapting piece 222 of a sheet structure, it is convenient for the adapting piece 222 to pass through the first perforation 12130 and extend into the second accommodating groove 12120.

Also, by using the adapting piece 222 to achieve the indirect electrical connection between the second gathering part 2213 and the first post terminal 12, the adapting piece 222 may be welded to the first post terminal 12 in a portion providing clearance for the second gathering part 2213 to make the welding between the adapting piece 222 and the first post terminal 12 firm, thus reducing the risk of welding cracking and further improving the reliability and stability of the battery cell 10. In addition, by electrically connecting the first post terminal 12 and the tab plates 2211 through the adapting piece 222, the structure of the tab plates 2211 may also be simplified.

The method and position of direct electrical connection between the adapting piece 222 and the first post terminal 12 are not limited. For example, the adapting piece 222 is electrically connected to the first post terminal 12 by welding. For example, the electrical connection position of the adapting piece 222 and the first post terminal 12 may be located on the second end wall 12121 and/or the second side wall 12123. Further, the electrical connection position of the adapting piece 222 and the second end wall 12121 may extend in the length direction or the width direction of the second end wall 12121. Yet further, the second end wall 12121 is provided with the second recess 12122, and the electrical connection position of the adapting piece 222 and the second end wall 12121 may be located in the second recess 12122, and the like. The corresponding technical effects can refer to the introduction of the above embodiments and will not be described in detail herein. When the electrical connection position of the adapting piece 222 and the first post terminal 12 is located on the second end wall 12121 and/or the second side wall 12123, since at least a part of the adapting piece 222 is accommodated in the second accommodating groove 12120, the structure of the adapting piece 222 can be simplified, thereby reducing the redundancy and lowering the costs.

Referring to FIG. 33, in a fourth embodiment, the active substance-coated part 21 includes a current collector 211 and an active substance layer 212 arranged on the current collector 211. The conductive part 22 includes a tab part 221 and an adapting piece 222. The tab part 221 includes a plurality of tab plates 2211 electrically connected to the current collector 211. Parts of the plurality of tab plates 2211 proximal to the current collector 211 converge to form a first gathering part 2212, and parts of the plurality of tab plates 2211 distal to the current collector 211 converge and are connected to form a second gathering part 2213. The adapting piece 222 is electrically connected to the second gathering part 2213. When the accommodating part 121 is provided with the second accommodating groove 12120, at least a part of the adapting piece 222 may be accommodated in the second accommodating groove 12120 and electrically connected to the first post terminal 12.

In the above technical solution, compared with the solution including the adapting piece 222 in the third embodiment, in the fourth embodiment, at least a part of the adapting piece 222 is accommodated in the second accommodating groove 12120, but the relative positions of the tab part 221 and the second accommodating groove 12120 are not limited, that is, at least a part of the tab part 221 may be accommodated in the second accommodating groove 12120, and the tab part 221 may also be completely located outside the second accommodating groove 12120, thereby meeting different structural design requirements.

In the above technical solution, by accommodating at least a part of the adapting piece 222 in the second accommodating groove 12120, the adapting piece 222 can occupy the space in the first post terminal 12, such that the space occupied by the adapting piece 222 in the housing 11 can be reduced, so as to accommodate a larger active substance-coated part 21, thereby improving the energy density of the battery cell 10. Moreover, the probability of short circuit between the adapting piece 222 and the active substance-coated part 21 can be reduced, and the risk of short circuit of the battery cell assembly 2 can be reduced, thereby improving the stability and reliability of the battery cell 10.

Also, by using the adapting piece 222 to achieve the indirect electrical connection between the second gathering part 2213 and the first post terminal 12, the adapting piece 222 may be welded to the first post terminal 12 in a portion providing clearance for the second gathering part 2213 to make the welding between the adapting piece 222 and the first post terminal 12 firm, thus reducing the risk of welding cracking and further improving the reliability and stability of the battery cell 10. In addition, by electrically connecting the first post terminal 12 and the tab plates 2211 through the adapting piece 222, the structure of the tab plates 2211 may also be simplified.

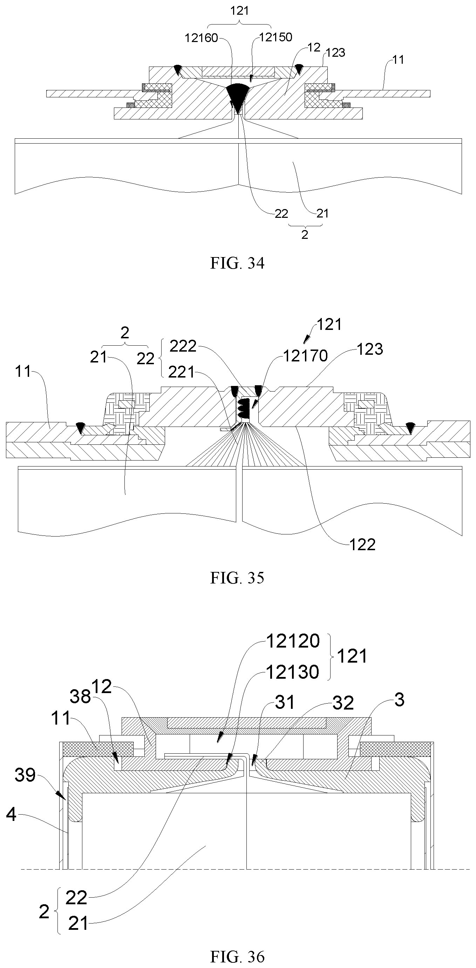

Referring to FIG. 34, in some other embodiments of the present application, the accommodating part 121 is provided with a fourth accommodating groove 12150. The surface of the first post terminal 12 on the side distal to the active substance-coated part 21 is a post terminal outer end surface 123, and an opening of the fourth accommodating groove 12150 is formed on the post terminal outer end surface 123. The fourth accommodating groove 12150 is in communication with the interior of the housing 11 through a second perforation 12160. The conductive part 22 may not be accommodated in the fourth accommodating groove 12150. For example, the conductive part 22 may be provided in the second perforation 12160 in a penetrating manner, and the electrical connection position between the conductive part 22 and the first post terminal 12 is located on a wall of the second perforation 12160 formed on the first post terminal 12.

In the above embodiments, arranging the fourth accommodating groove 12150 can easily achieve the electrical connection between the conductive part 22 and the wall of the second perforation 12160. Furthermore, in some cases, the sealing of the second perforation 12160 can be achieved by utilizing the electrical connection between the conductive part 22 and the first post terminal 12. For example, the conductive part 22 may be welded to the wall of the second perforation 12160 at a position of the second perforation 12160 connected to the fourth accommodating groove 12150, so as to facilitate the operation. In addition, by controlling a weld mark, the second perforation 12160 can be sealed by utilizing the weld mark and the conductive part 22, so as to mitigate the problem of the electrolyte in the housing 11 leaking from the second perforation 12160.

It should be noted that the specific shape of the fourth accommodating groove 12150 is not limited, and may be a regular shape or an irregular shape, e.g., a cylindrical groove with a rectangular, elliptical, or oblong cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc.

In the embodiments of the present application, the second perforation 12160 may be in an elongated shape, so as to match the shape of the plate-like part of the conductive part 22, thereby facilitating the plate-like part of the conductive part 22 to pass through. Also, when the second perforation 12160 is in an elongated shape, the fourth accommodating groove 12150 may be configured into a shape in which the length of the cross-section is greater than the width, such as a rectangle, an ellipse, an oblong, etc. As such, the length direction of the second perforation 12160 may be configured consistent with the length direction of the cross-section of the fourth accommodating groove 12150, such that the space can be adequately utilized.

It should be noted that the accommodating part 121 of the embodiments of the present application is not limited to the above forms in which at least one accommodating groove must be provided. For example, in some other embodiments of the present application, referring to FIG. 35, the accommodating part 121 may only be provided with the third perforation 12170. The surface of the first post terminal 12 on the side proximal to the active substance-coated part 21 is the post terminal inner end surface 122, and the surface of the first post terminal 12 on the side distal to the active substance-coated part 21 is the post terminal outer end surface 123. The third perforation 12170 is in the form of a through hole and passes through the post terminal inner end surface 122 and the post terminal outer end surface 123. At least a part of the conductive part 22 is provided in the third perforation 12170 in a penetrating manner. The electrical connection position of the conductive part 22 and the first post terminal 12 is not limited. For example, the electrical connection position may be located on the wall of the third perforation 12170 formed on the first post terminal 12, or the conductive part 22 may pass through the third perforation 12170, such that the electrical connection position is located on the post terminal outer end surface 123 outside the third perforation 12170. In addition, the shape of the third perforation 12170 is not limited. The third perforation may be a regular-shaped hole of constant cross-section, or a hole of variable cross-section. Moreover, the cross-sectional shape of the third perforation 12170 is not limited. For example, it may be an elongated shape, such as a rectangle, an ellipse, or an oblong, etc., to adapt to the partial sheet shape of the conductive part 22, thereby facilitating providing the sheet part of the conductive part 22 in the third perforation 12170 in a penetrating manner, which will not be recited herein.

Referring to FIGs. 36-38, in some embodiments of the present application, the battery cell 10 further includes a support 3. The support 3 is located in the housing 11 and on the side of the first post terminal 12 proximal to the active substance-coated part 21, where the support 3 is provided with a clearance hole 31 configured to provide clearance for the conductive part 22. The conductive part 22 can pass through the clearance hole 31 and extend to the side of the support 3 distal to the active substance-coated part 21 for welding to the first post terminal 12, thereby ensuring the normal charging and discharging operations of the battery cell 10.

In the above technical solution, by arranging the support 3 on the side of the active substance-coated part 21 proximal to the first post terminal 12, the active substance-coated part 21 can be separated from the housing 11 by utilizing the support 3, thereby improving the reliability of the battery cell 10. Furthermore, by arranging the clearance hole 31 on the support 3, the conductive part 22 can be guided and constrained to fit the first post terminal 12 by passing through the clearance hole 31, thereby eliminating the need for the conductive part 22 to bypass the edge of the support 3 to approach the first post terminal 12, which can not only simplify the arrangement of the conductive part 22, save the material of the conductive part 22, and reduce the cost, but also reduce the risk of short circuit connection between the conductive part 22 and the active substance-coated part 21 by the support 3 supporting and guiding the conductive part 22 to fit the first post terminal 12, so as to further improve the reliability of the battery cell 10.

Referring to FIGs. 36-38, optionally, the support 3 is provided with a guiding part 32, and the guiding part 32 defines, in an enclosing manner, at least a part of the clearance hole 31 and at least partially extends to the accommodating part 121.

It is worth noting that the guiding part 32 protrudes from the support 3 and extends into the accommodating part 121, and at least a part of the clearance hole 31 is formed in the guiding part 32, such that when the conductive part 22 is provided in the clearance hole 31 in a penetrating manner, at least a part of the conductive part 22 can be easily accommodated in the accommodating part 121, thereby improving the assembly efficiency of the conductive part 22. Meanwhile, through the arrangement of the guiding part 32, the fits between the support 3 and the first post terminal 12, and between the support 3 and the conductive part 22 become tighter and more reliable, such that the structure of the battery cell 10 becomes more compact, which is more conducive to improving the energy density of the battery cell 10.

Referring to FIGs. 36-38, optionally, the support 3 is provided with a third groove 38, and at least a part of the first post terminal 12 located in the housing 11 is accommodated in the third groove 38.

In the above technical solution, by arranging the third groove 38 on the support 3, at least a part of the part of the first post terminal 12 located in the housing 11 is accommodated in the third groove 38 of the support 3, such that the compactness of the structure can be improved, which is conducive to reducing the space occupied by the support 3 in the housing 11 and improving the volumetric energy density of the battery cell 10.

In addition, in some embodiments, the guiding part 32 may be configured to participate in defining the third groove 38, so as to simplify the structure of the support 3 and reduce the design and processing difficulties of the support 3, which is conducive to increasing the wall thickness of the guiding part 32 and improving the guiding reliability of the conductive part 32.

Referring to FIGs. 36-38, optionally, the clearance hole 31 includes a first hole segment 311 and a second hole segment 312. The second hole segment 312 is located on the side of the first hole segment 311 proximal to the active substance-coated part 21, and the cross-sectional area of the second hole segment 312 gradually increases in the direction away from the first hole segment 311. When the active substance-coated part 21 includes a current collector 211 and an active substance layer 212 arranged on the current collector 211, the conductive part 22 includes a tab part 221 electrically connected to the current collector 211, the tab part 221 includes a plurality of tab plates 2211, parts of the plurality of tab plates 2211 proximal to the current collector 211 converge to form a first gathering part 2212, parts of the plurality of tab plates 2211 distal to the current collector 211 converge and are connected to form a second gathering part 2213, and the first gathering part 2212 connects the second gathering part 2213 and the active substance-coated part 21, at least a part of the first gathering part 2212 may be accommodated in the second hole segment 312, and the second gathering part 2213 may be provided in the first hole segment 311 in a penetrating manner.

In the above technical solution, arranging the clearance hole 31 to include the second hole segment 312 that gradually expands in the direction toward the active substance-coated part 21 facilitates the second hole segment 312 to accommodate more first gathering parts 2212, so as to improve the compactness of the fit between the support 3 and the battery cell assembly 2, such that the overall volume of the battery cell 10 is smaller, and the battery 100 can accommodate a greater number of battery cells 10, thereby improving the volumetric energy density of the battery 100. In addition, in the above technical solution, the specific explanations of the first gathering part 2212 and the second gathering part 2213 have been provided in the previous embodiments and will not be repeated herein.

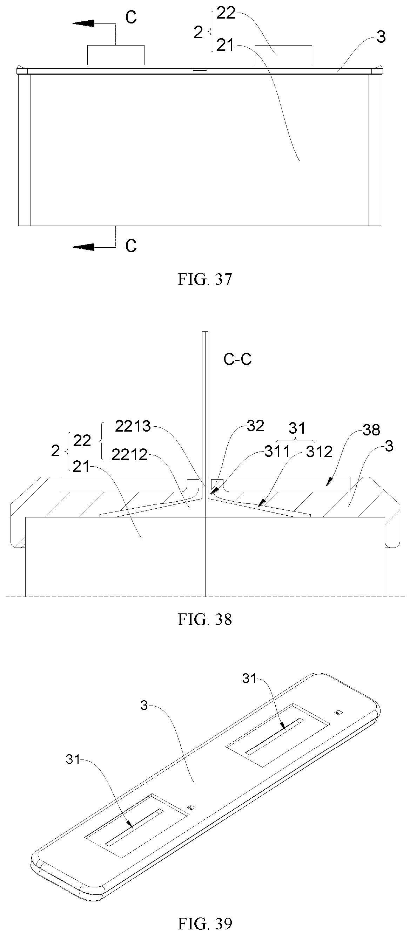

In some embodiments of the present application, the support 3 may be of an integrated structure or a split-type structure. Referring to FIG. 39, when the support 3 is of an integrated structure, the clearance hole 31 is formed in the form of a through hole through the support 3. The integrated structure of the support 3 may provide ease to process and good reliability and facilitate the assembly of the support 3 with the housing assembly 1, thereby improving the assembly efficiency and fitting stability. It will be appreciated that how to process the support 3 can be specifically selected according to the material of the support 3. For example, when the support 3 is an insulating plastic member, the support 3 of an integrated structure may be obtained by injection molding.

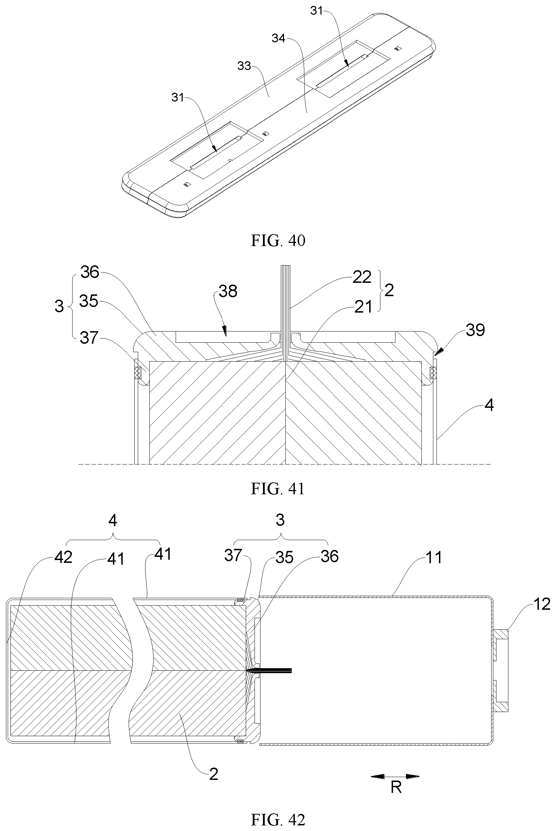

Referring to FIG. 40, when the support 3 is of the split-type structure, the support 3 includes a first support 33 and a second support 34 separable from the first support 33. Both the first support 33 and the second support 34 are of an elongated plate structure, and can be detachably connected, for example, in insertion fit or snap fit, to facilitate the assembly. Meanwhile, a half-hole structure is arranged on the side of the first support 33 proximal to the second support 34, and another half-hole structure of a matched shape is correspondingly arranged on the side of the second support 34 proximal to the first support 33. The half-hole structure of the first support 33 and the half-hole structure of the second support 34 together define, in an enclosing manner, the annular clearance hole 31. That is, the first support 33 and the second support 34 define the clearance hole 31 therebetween.

In the above technical solution, the clearance hole 31 is defined through the cooperation of the first support 33 and the second support 34. When the support 3 and the battery cell assembly 2 are assembled, it is not necessary to pass the conductive part 22 from one end of the clearance hole 31 to the other end. Instead, the first support 33 and the second support 34 can be assembled at the position of the conductive part 22 to clamp the conductive part 22, such that the clearance hole 31 surrounds the conductive part 22, thereby facilitating the assembly of the support 3 and the battery cell assembly 2 and improving the assembly efficiency.

As an optional solution, when the cross-section of the clearance hole 31 is elongated, the first support 33 and the second support 34 are separately provided on two sides of the clearance hole 31 in the width direction. For example, if the width direction of the clearance hole 31 is a leftright direction, the first support 33 and the second support 34 are located on the left and right sides of the clearance hole 31, so as to facilitate the fit of the first support 33, the second support 34, and the conductive part 22.

Referring to FIGs. 36, 41, and 42, in the embodiments of the present application, the configuration of the support 3 is not limited to this. The edge of the support 3 distal to the housing cover 112 may also be provided with a housing entry guiding surface 35. The housing entry guiding surface 35 includes an inclined surface or a curved surface. When projected in the axial direction R of the first post terminal 12, the orthographic projection of the active substance-coated part 21 is completely located within the orthographic projection range of the support 3, and the orthographic projection range of the support 3 exceeds the orthographic projection range of the active substance-coated part 21. The housing entry guiding surface 35 plays a guiding role, such that the support 3 can be easily mounted into the housing body 111. The support 3 enters the housing body 111 first and the active substance-coated part 21 enters the housing body 111 later, reducing the problem of the housing body 111 scratching the active substance-coated part 21. During assembly, the support 3 and the battery cell assembly 2 may be pre-assembled together, and then the pre-assembled assembly is mounted into the housing 11. During the mounting, the support 3 is located at the front end of the active substance-coated part 21, that is, the support 3 enters the housing 11 before the active substance-coated part 21, such that the difficulty of the support 3 entering the housing 11 can be reduced by utilizing the housing entry guiding surface 35, and the active substance-coated part 21 can be protected by utilizing the relatively large projection area of the support 3, thereby reducing the probability of scratching and damaging the active substance-coated part 21 and the housing 11, and improving the assembly efficiency and the success rate. Moreover, the contact area between the support 3 and the active substance-coated part 21 can be increased, and the stress concentration problem can be reduced, thus saving additional structural components.

Referring to FIG. 41, in some embodiments of the present application, the battery cell 10 may further include an inner insulating member 4 located in the housing 11, wrapped outside the active substance-coated part 21, and connected to the support 3. In the above embodiments, by wrapping the active substance-coated part 21 in the inner insulating member 4, the insulation reliability between the active substance-coated part 21 and the housing 11 can be improved, the corrosion of the housing 11 caused by the contact between the active substance-coated part 21 and the housing 11 can be reduced or prevented, and the leakage of the electrolyte caused by the corrosion of the housing 11 can be reduced, thereby improving the reliability of the battery cell 10. Also, connecting the inner insulating member 4 to the support 3 can reduce the difficulty of fixing the inner insulating member 4 and improve the reliability of the inner insulating member 4 wrapped outside the active substance-coated part 21.

Referring to FIG. 41, in the embodiments of the present application, the support 3 includes a body part 36 and an extending part 37. The body part 36 is located on the side of the active substance-coated part 21 proximal to the first post terminal 12, and the extending part 37 is connected to the body part 36 and is located in the outer peripheral region of the active substance-coated part 21. On one hand, the extending part 37 may be configured to limit the active substance-coated part 21, so as to use the extending part 37 to alleviate the problem of corrosion due to carbon powder falling from the edge of the active substance-coated part 21 and connecting the housing 11. On the other hand, the extending part 37 may also be configured to fix the inner insulating member 4 to improve the connection reliability between the inner insulating member 4 and the support 3, thus possessing good insulation effects.

Illustratively, referring to FIG. 41, the body part 36 and the extending part 37 may define a positioning groove 39 located on the side of the extending part 37 distal to the active substance-coated part 21, and an end part of the inner insulating member 4 is embedded in the positioning groove 39 to prevent the inner insulating member 4 from protruding from the edge of the body part 36. In this way, when entering the housing, the body part 36 can be used to protect the inner insulating member 4, thereby reducing the probability of scratching and damaging the inner insulating member 4 and the housing 11.

Specifically, referring to FIG. 42, the inner insulating member 4 may be an integrated film, and is provided with body parts 41 located on both sides of the active substance-coated part 21 in the thickness direction and a connecting part 42 connecting the two body parts 41. The connecting part 42 is located on the side of the active substance-coated part 21 distal to the first post terminal 12, and the edge of the body part 41 on the side distal to the connecting part 42 extends to the extending part 37 and is connected to the extending part 37, thereby realizing better insulation performance and facilitating the connection.

In some embodiments, the housing assembly 1 includes at least one first post terminal 12 riveted to the housing body 111.

In the above technical solution, since the first post terminal 12 is connected to the housing body 111 by riveting, it may not be easy to weld a thin housing body 111, while riveting the first post terminal 12 to the housing body 111 may be easier. That is, connecting the first post terminal 12 to the housing body 111 by riveting may feature ease to mount and operate. In addition, riveting the first post terminal 12 to the housing body 111 is conducive to reducing the thickness and weight of the housing body 111, thereby reducing the weight of the battery cell 10. In the case of given dimensions of the battery cell 10, riveting the first post terminal 12 may facilitate the thinning of the housing body 111, and may be also beneficial to increasing the internal space of the housing body 111 and improving the energy density of the battery cell 10.

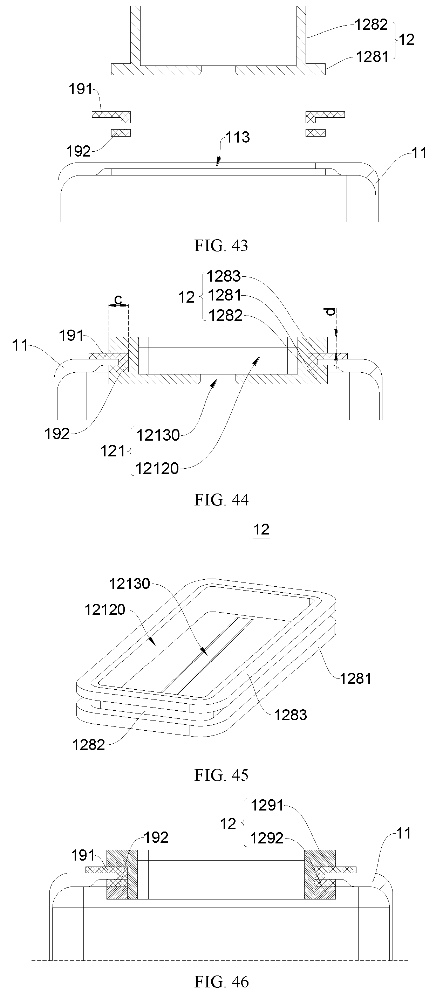

For example, in some embodiments, referring to FIGs. 43-45, the first post terminal 12 may be of an integrated structure and riveted to the housing 11, so as to improve the assembly efficiency of the first post terminal 12 and reduce the height of the first post terminal 12 protruding from the surface of the housing 11, which is beneficial to improving the energy density and compactness.

Specifically, referring to FIGs. 43-45, before riveting, the first post terminal 12 may include a stopper part 1281 and a penetration part 1282. During assembly, the stopper part 1281 is stopped inside the housing 11, and the penetration part 1282 is provided in the mounting hole 113 in a penetrating manner. Then, the part of the penetration part 1282 located outside the housing 11 is riveted to form a flange part 1283. The flange part 1283 is stopped outside the housing 11, allowing for the mounting of the first post terminal 12. It should be noted that, in this configuration, the penetration part 1282 is the post terminal body of the first post terminal 12, the flange part 1283 is the first limiting stage of the first post terminal 12, and the stopper part 1281 is the second limiting stage of the first post terminal 12.

Optionally, referring to FIGs. 43 and 44, the housing assembly 1 may include a number of sealing gaskets fitted between the housing 11 and the first post terminal 12, such as the first sealing gasket 191 and the second sealing gasket 192 shown in FIG. 43, etc. The sealing gaskets are mounted in place before riveting, and after the first post terminal 12 is riveted, the first post terminal 12 presses the sealing gaskets to form the seal, thus improving the sealing at the fit of the first post terminal 12 and the housing 11 by using the sealing gaskets. The number, positions, and materials of the sealing gaskets are not limited. For example, the material may be silica gel, plastic, etc., which is not limited herein.

Optionally, referring to FIG. 44, the length c of the flange part 1283 may be greater than or equal to 1 mm, and the thickness d may be greater than or equal to 2 mm, so as to improve the riveting strength of the first post terminal 12. When the length c of the flange part 1283 is less than 1 mm and/or the thickness d is less than 2 mm, the reliability of the first post terminal 12 and the housing 11 is reduced under strong vibration.

For yet another example, in other embodiments of the present application, referring to FIGs. 9 and 10, the first post terminal 12 may be of a split-type structure and connected by welding to be mounted in the housing 11. For example, the first post terminal 12 includes a first part 1291 and a second part 1292. At least a part of the first part 1291 is stopped outside the housing 11, and at least a part of the second part 1292 is stopped inside the housing 11. At least one of the first part 1291 and the second part 1292 is provided in the mounting hole 113 in a penetrating manner and is connected to the other one by welding (e.g., laser welding), so as to achieve the mounting of the first post terminal 12.

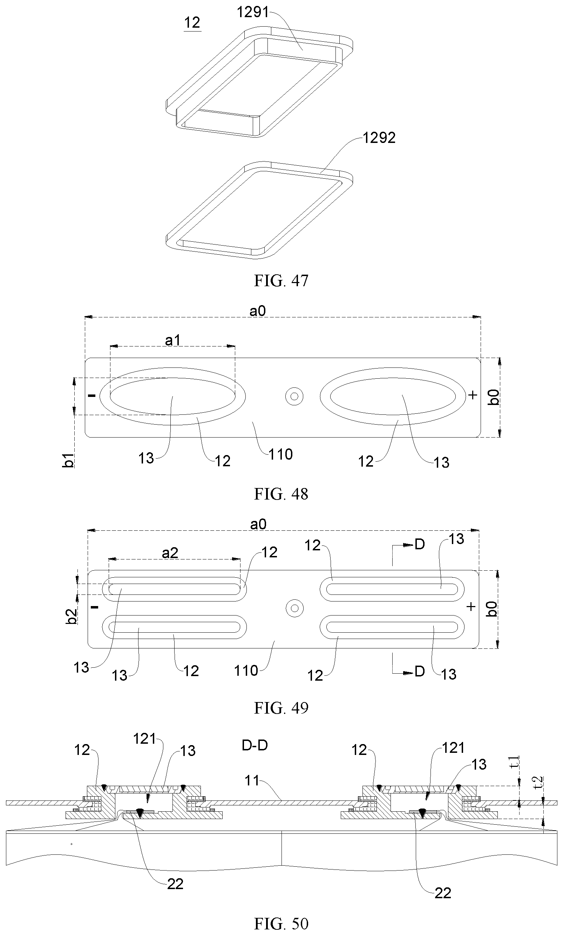

In some optional embodiments, referring to FIGs. 48-49, a plurality of first post terminals 12 are present and are all located on a surface on the same side of the housing 11, thereby facilitating mounting and improving the assembly efficiency.

It should be noted that the arrangement of the plurality of first post terminals 12 on the same side surface is not limited. For example, when the cross-section of the first post terminal 12 is of an elongated structure, e.g., the cross-sectional length is greater than or equal to three times the cross-sectional width, such as a rectangle, an ellipse, or an oblong, etc., the first post terminal 12 may have good adaptability to a thin and flat housing 11. For example, the plurality of first post terminals 12 are all arranged on a side surface (referred to as a first wall surface 110) in the height direction of the housing 11, the length direction of each first post terminal 12 is consistent with the length direction of the first wall surface 110 of the housing 11, and the plurality of first post terminals 12 are spaced apart from each other in the length direction and/or the width direction of the first wall surface 110.

For example, in the example of FIG. 48, when the first wall surface 110 is provided with two first post terminals 12, the two first post terminals 12 are spaced apart from each other in the length direction of the first wall surface 110. Optionally, referring to FIG. 48, the part of the first post terminal 12 located outside the housing 11 (referred to as the post terminal outer part) is annular. In the length direction of the first wall surface 110, the inner ring length a1 of the post terminal outer part is greater than or equal to 1/3 of the length a0 of the first wall surface 110, and in the width direction of the first wall surface 110, the inner ring width b1 of the post terminal outer part is greater than or equal to 3/4 of the width b0 of the first wall surface 110. As such, the first post terminal 12 can provide a larger area for electrical connection to the busbar component, so as to further improve the current passage capacity of the first post terminal 12. Illustratively, the inner ring length a1 of the post terminal outer part is greater than or equal to 50 mm, and the inner ring width b1 of the post terminal outer part is greater than or equal to 30 mm.

In addition, referring to FIG. 48, when the first wall surface 110 is provided with two first post terminals 12, and the two first post terminals 12 are spaced apart from each other in the length direction of the first wall surface 110, in some optional embodiments, the first post terminal 12 includes a part located inside the housing 11 (referred to as the post terminal inner part). In the length direction of the first wall surface 110, the length of the post terminal inner part is greater than or equal to 1/3 of the length of the first wall surface 110, and in the width direction of the first wall surface 110, the width of the post terminal inner part is greater than or equal to 1/4 of the width of the first wall surface 110. As such, the first post terminal 12 can provide a larger area for electrical connection to the conductive part 22, so as to further improve the current passage capacity of the first post terminal 12. Illustratively, the length of the post terminal inner part is greater than or equal to 50 mm, and the width of the post terminal inner part is greater than or equal to 30 mm.

For another example, in the example shown in FIG. 49, when the first wall surface 110 is provided with four first post terminals 12, two of the first post terminals 12 are spaced apart from each other in the width direction of the first wall surface 110 to form a group, and a total of two groups are spaced apart from each other in the length direction of the first wall surface 110. Optionally, referring to FIG. 49, the part of the first post terminal 12 located outside the housing 11 (referred to as the post terminal outer part) is annular. In the length direction of the first wall surface 110, the inner ring length a2 of the post terminal outer part is greater than or equal to 1/3 of the length a0 of the first wall surface 110, and in the width direction of the first wall surface 110, the inner ring width b2 of the post terminal outer part is greater than or equal to 1/5 of the width b0 of the first wall surface 110. As such, the first post terminal 12 can provide a larger area for electrical connection to the busbar component, so as to further improve the current passage capacity of the first post terminal 12. Illustratively, the inner ring length a2 of the post terminal outer part is greater than or equal to 50 mm, and the inner ring width b2 of the post terminal outer part is greater than or equal to 8 mm.

In addition, referring to FIG. 49, when the first wall surface 110 is provided with four first post terminals 12, two of the first post terminals 12 are spaced apart from each other in the width direction of the first wall surface 110 to form a group, and a total of two groups are spaced apart from each other in the length direction of the first wall surface 110, in some optional embodiments, the first post terminal 12 includes a part located inside the housing 11 (referred to as the post terminal inner part). In the length direction of the first wall surface 110, the length of the post terminal inner part is greater than or equal to 1/3 of the length of the first wall surface 110, and in the width direction of the first wall surface 110, the width of the post terminal inner part is greater than or equal to 1/5 of the width of the first wall surface 110. As such, the first post terminal 12 can provide a larger area for electrical connection to the conductive part 22, so as to further improve the current passage capacity of the first post terminal 12. Illustratively, the length of the post terminal inner part is greater than or equal to 50 mm, and the width of the post terminal inner part is greater than or equal to 8 mm.

In some embodiments, referring to FIGs. 48 and 49, a part of the first post terminal 12 is located inside the housing 11, and a part of the first post terminal 12 is located outside the housing 11. The orthographic projection area of the part of the first post terminal 12 located outside the housing 11 on the first wall surface 110 is greater than or equal to 5% of the area of the first wall surface 110. For example, the orthographic projection area of the part of the first post terminal 12 located outside the housing 11 on the first wall surface 110 is greater than or equal to 5%, 6%, 7%, 8%, 9%, 10%, etc., of the area of the first wall surface 110. As such, the connection area between the first post terminal 12 and the busbar component can be increased, so as to increase the effective current passage area between the first post terminal 12 and the busbar component, which is conducive to improving the charging speed of the battery cell 10.

In addition, in some embodiments, referring to FIG. 50, the vertical height t1 of the part of the first post terminal 12 protruding from the outer surface of the first wall surface 110 (referred to as the post terminal outer part) from the first wall surface 110 may be less than or equal to 3.2 mm, and the vertical height t2 of the part of the first post terminal 12 protruding from the inner surface of the first wall surface 110 (referred to as the post terminal inner part) from the first wall surface 110 may be less than or equal to 2 mm, so as to improve the volumetric energy density of the battery cell 10.

Referring to FIGs. 50-56 again, the housing 11 specifically includes a housing body 111 and a housing cover 112. The housing body 111 is of a square ring structure, one end or the two ends of which are open. When one end is open, one housing cover 112 is present and lids the open position. When the two ends are open, two housing covers 112 are present and lid the housing body 111, respectively.

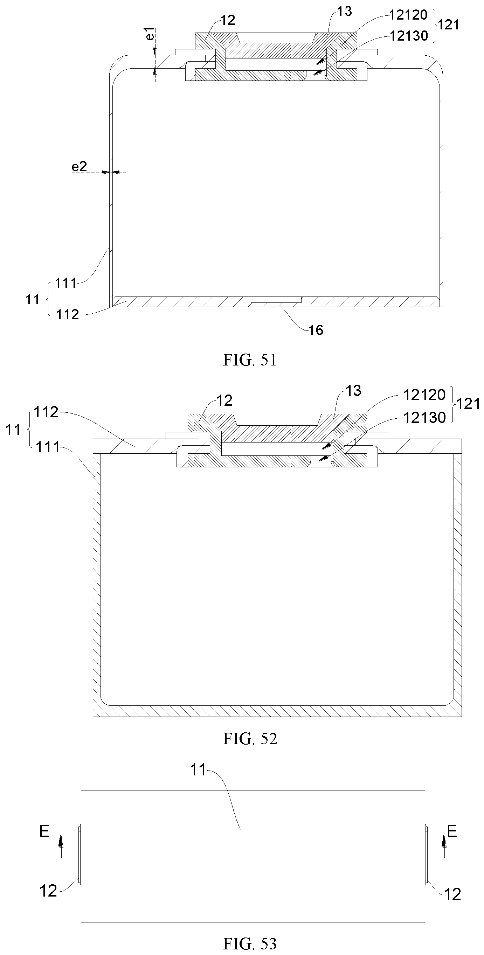

Specifically, when the housing 11 includes the housing body 111 and the housing cover 112, and one end of the housing body 111 is open, the housing body 111 is an integrally formed part, and may specifically be a square structure formed by stretching. In this case, the first post terminal 12 may be arranged on at least one of the housing body 111 or the housing cover 112. Illustratively, referring to FIG. 51, the first post terminal 12 may be specifically arranged at the end of the housing body 111 distal to the housing cover 112. When the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10 and help reduce the wall thickness of the housing body 111, thereby reducing costs and weight, and facilitating miniaturization of the battery cell 10.

As an optional solution, referring to FIG. 51 again, when a plurality of first post terminals 12 are provided, all the first post terminals 12 are arranged at the end of the housing body 111 distal to the housing cover 112. As such, when the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10. Furthermore, the wall thickness e1 of the end wall of the housing body 111 distal to the housing cover 112 may be reduced to less than or equal to 2 mm, and the wall thickness e2 of the side wall of the housing body 111 connecting the above end wall and the housing cover 112 may be reduced to less than or equal to 0.8 mm, thereby reducing costs and weight, and facilitating miniaturization of the battery cell 10.

When the first accommodating groove 12110 corresponding to the mounting hole 113 is formed on the first post terminal 12, the wall thickness of a part of the first post terminal 12 located on the side of the first accommodating groove 12110 distal to the active substance-coated part 21 is small, such that the welding of the conductive part 22 and the first post terminal 12 can be achieved from the outside of the housing 11. Referring to FIG. 51, in the case where the housing 11 includes a housing body 111 and a housing cover 112, and the housing cover 112 is arranged at the open end of the housing body 111, even if the first post terminal 12 is arranged at the closed end of the housing body 111, there is no need to worry about the difficulty in welding the conductive part 22 to the first post terminal 12 from the inside of the housing 11, because the conductive part 22 and the first post terminal 12 can be welded from the outside of the housing 11, such that the connection stability and reliability of the housing body 111 and the housing cover 112 can be improved by arranging the first post terminal 12 at the closed end of the housing body 111.

When the above second accommodating groove 12120 is formed on the first post terminal 12, since the welding of the conductive part 22 to the first post terminal 12 can be realized from the outside of the housing 11 through the opening of the second accommodating groove 12120, referring to FIG. 51, in the case where the housing 11 includes a housing body 111 and a housing cover 112, and the housing cover 112 is arranged at the open end of the housing body 111, even if the first post terminal 12 is arranged at the closed end of the housing body 111, there is no need to worry about the difficulty in welding the conductive part 22 to the first post terminal 12 from the inside of the housing 11, because the conductive part 22 and the first post terminal 12 can be welded from the outside of the housing 11, such that the connection stability and reliability of the housing body 111 and the housing cover 112 can be improved by arranging the first post terminal 12 at the closed end of the housing body 111.

Certainly, referring to FIG. 52, in other embodiments of the present application, all the first post terminals 12 may be arranged on the housing cover 112 as required. As such, the assembly of the first post terminal 12 and the housing cover 112 is facilitated, which is not limited in the embodiments.

Referring to FIGs. 6-8, 21, 26, and 27 again, the battery cell 10 according to specific embodiments of the present application is described.

Referring to FIGs. 6-8, the battery cell 10 is in the shape of a cuboid, and the height direction of the battery cell 10 is a first direction Z, the length direction of the battery cell 10 is a second direction X, and the thickness direction of the battery cell 10 is a third direction Y. The battery cell 10 includes a housing 11. The housing 11 includes a housing body 111 and a housing cover 112. The housing body 111 is a square annular structure, one end of the housing body 111 in the first direction Z is open, and the other end in the first direction Z is closed. The housing cover 112 lids the open position of the housing body 111.

Referring to FIGs. 6-8, the closed end of the housing body 111 in the first direction Z is provided with two post terminals. The two post terminals are spaced apart from each other in the second direction X and are separately a positive electrode post terminal and a negative electrode post terminal. Both post terminals are the first post terminals 12 provided with the accommodating part 121. The accommodating part 121 includes the second accommodating groove 12120. Specifically, the first post terminal 12 includes a second end wall 12121 and a second side wall 12123. The second end wall 12121 is located on the side of the second side wall 12123 proximal to the housing cover 112. The second end wall 12121 and the second side wall 12123 define, in an enclosing manner, the second accommodating groove 12120. The surface of the first post terminal 12 on the side distal to the housing cover 112 is the post terminal outer end surface 123. The opening of the second accommodating groove 12120 is formed on the post terminal outer end surface 123. The second end wall 12121 is provided with a first perforation 12130.

Referring to FIGs. 8 and 21, the battery cell 10 further includes a battery cell assembly 2. The battery cell assembly 2 includes an active substance-coated part 21 and a tab part 221. The active substance-coated part 21 is accommodated in the housing 11, and the tab part 221 passes through the first perforation 12130 to extend into the second accommodating groove 12120 and is welded to the second end wall 12121, such that the active substance-coated part 21 is electrically connected to the first post terminal 12 through the tab part 221.

Referring to FIGs. 21, 26, and 27, a first cover plate 13 is embedded in the opening of the second accommodating groove 12120, such that after the tab part 221 is welded to the second end wall 12121, the opening of the second accommodating groove 12120 is closed by the fit between the first cover plate 13 and the first post terminal 12. The first cover plate 13 is welded to the first post terminal 12 to form an electrical connection. Thereafter, when the battery cells 10 are electrically connected by using a busbar component, the busbar component may be welded to the first cover plate 13 to achieve an electrical connection to the first post terminal 12.

In the above technical solution, the first post terminal 12 is provided with the second accommodating groove 12120, which can reduce the weight of the first post terminal 12 to a certain extent, so as to improve the gravimetric energy density of the battery cell 10 and the battery 100. Also, since the opening of the second accommodating groove 12120 is formed on the post terminal outer end surface 123 and the post terminal outer end surface 123 is the surface of the first post terminal 12 on the side distal to the active substance-coated part 21, the second accommodating groove 12120 can be open in a direction away from the active substance-coated part 21. In this way, when at least a part of the tab part 221 is accommodated in the second accommodating groove 12120, the accommodation and arrangement of the tab part 221 can be easily achieved through the opening of the second accommodating groove 12120, and the welding operation between the tab part 221 and the first post terminal 12 can be easily achieved through the opening of the second accommodating groove 12120, thereby reducing the difficulty in producing the battery cell 10 and improving the production efficiency of the battery cell 10.

Furthermore, since the welding of the tab part 221 to the first post terminal 12 can be achieved from the outside of the housing 11, the first post terminal 12 can be arranged on the closed end of the housing body 111. In this way, when the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10 and help reduce the wall thickness of the housing body 111, thereby reducing costs and weight, and facilitating miniaturization of the battery cell 10.

Meanwhile, since the second accommodating groove 12120 can be in communication with the interior of the housing 11 through the first perforation 12130, the second accommodating groove 12120 can also serve as a buffering and temporary storage structure for the electrolyte, such that more electrolyte can be accommodated in the housing 11. As the electrolyte will be consumed during the charging and discharging processes of the battery cell 10, a greater amount of electrolyte can prolong the service life of the battery cell 10. It is also due to the fact that the second accommodating groove 12120 can be in communication with the interior of the housing 11 through the first perforation 12130, that the second accommodating groove 12120 can also serve as an accommodating and buffering structure for gases produced in the battery cell assembly 2, reducing the expansion of the battery cell 10 and improving the reliability and stability of the battery cell 10.

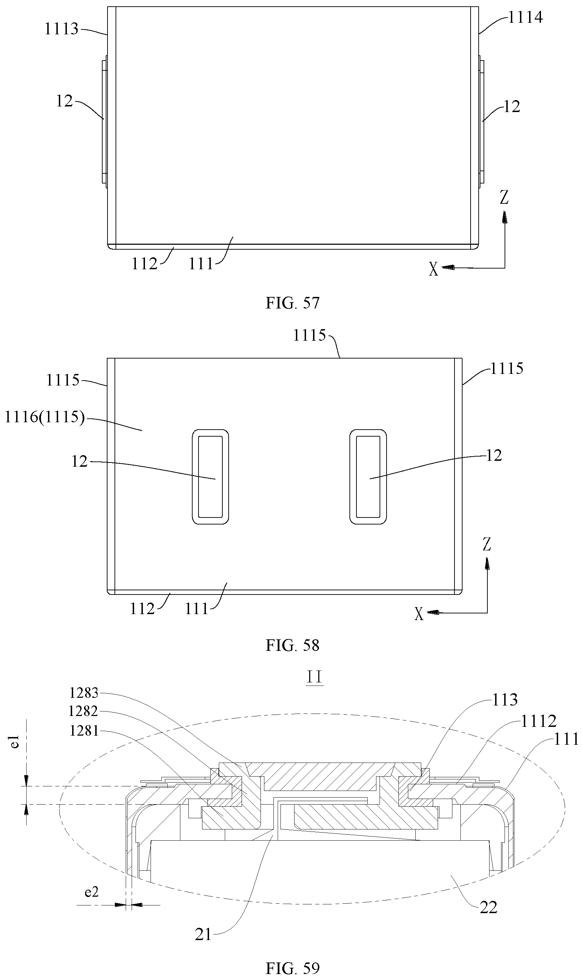

Referring to FIGs. 45 and 59, in some embodiments, the first post terminal 12 includes a post terminal body, a first limiting stage, and a second limiting stage that are integrally formed, the post terminal body is provided in the mounting hole 113 in a penetrating manner, the first limiting stage and the second limiting stage are arranged at the two ends of the post terminal body in the axial direction of the mounting hole 113, and the first limiting stage is in limiting fit with the outer side of the housing body 111, and the second limiting stage is in limiting fit with the inner side of the housing body 111, such that the first post terminal 12 is riveted to the housing body 111.

It will be appreciated that the first limiting stage and the second limiting stage separately extend along the radial direction of the mounting hole 113 to the radial outer side of the circumferential wall of the mounting hole 113. The first limiting stage can limit the movement of the first post terminal 12 relative to the housing body 111 in the direction toward the inner side of the housing body 111, and the second limiting stage can limit the movement of the first post terminal 12 relative to the housing body 111 in the direction toward the outer side of the housing body 111, such that the first post terminal 12 can be easily and reliably mounted at the mounting hole 113 through the first limiting stage and the second limiting stage, which is conducive to the riveting of the first post terminal 12 to the housing body 111, and convenient for the assembly of the first post terminal 12 and the housing body 111. This configuration requires no additional connections between the first post terminal 12 and the housing body 111, or in other words, facilitates the reliable connection of the first post terminal 12 and the housing body 111, which is conducive to simplifying the structure of the housing assembly 1 and simplifying the assembly process of the housing assembly 1. Also, the post terminal body, the first limiting stage, and the second limiting stage of the first post terminal 12 are integrally formed, which can save components and costs and ensure the strength of the first post terminal 12, such that after the first post terminal 12 is fitted to the housing 11, the battery cell 10 will not be easily detached from the housing 11 due to vibration or external pulling during the charging and discharging process or easily cracked or damaged due to vibration or external pulling, which can improve the stability and reliability of the battery cell 10.

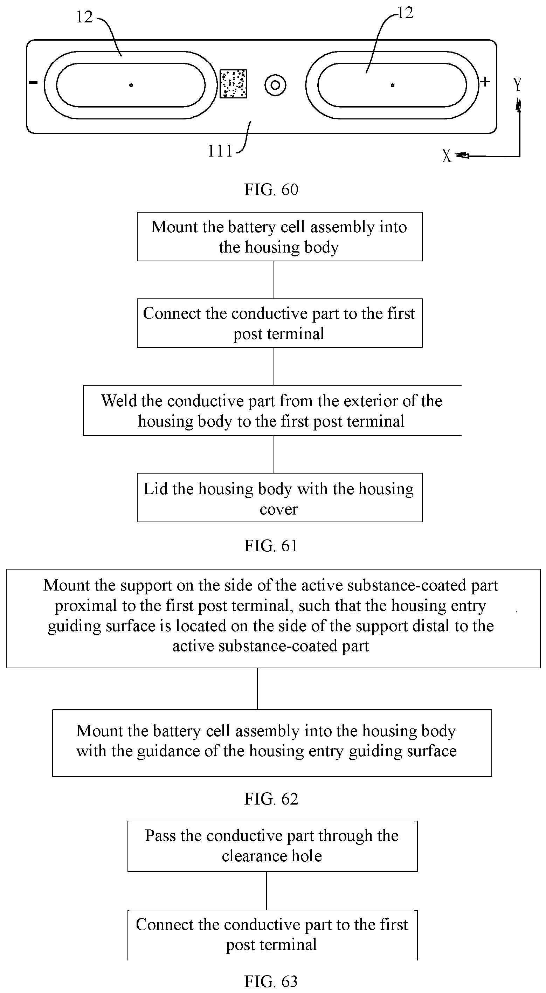

Referring to FIG. 60, in some embodiments, the dimension of the first post terminal 12 in a first direction is greater than the dimension of the post terminal 12 in a second direction, the first direction is perpendicular to the second direction, and the first direction and the second direction are both perpendicular to the axial direction of the mounting hole 113.

On the plane formed by the first direction and the second direction, the shape of the orthographic projection of the first post terminal 12 can be non-circular, which is conducive to achieving a good fit between the first post terminal 12 and the wall of the housing body 111 where the first post terminal 12 is arranged in the first direction and the second direction. The configuration can also improve the cross-sectional area of the first post terminal 12 that may be arranged on the above wall of the housing body 111 to a certain extent, which is conducive to increasing the current passage area of the first post terminal 12 within a limited arrangement area on the above wall, improving the current passage capacity of the first post terminal 12, improving the heat dissipation capacity of the first post terminal 12, and thus improving the charging speed of the battery cell 10 using the housing assembly 1.

In some embodiments, the first direction is the length direction of the cross-section of the first post terminal 12, and the second direction is the width direction of the cross-section of the first post terminal 12. In this case, the axial direction of the mounting hole 113 may refer to the height direction of the first post terminal 12 or the axial direction of the post terminal 12.

In some embodiments, on the cross-section of the first post terminal 12, the dimension of the first post terminal 12 in the first direction is greater than three times the dimension of the first post terminal 12 in the second direction, and the first direction, the second direction and the axial direction of the mounting hole 113 are perpendicular to each other, which is conducive to achieving a good fit between the first post terminal 12 and the wall on the housing body 111 where the first post terminal 12 is located in the first direction and the second direction, such that the first post terminal 12 can fully utilize the arrangement region of the wall on the housing body 111 where the first post terminal 12 is located, so as to increase the cross-sectional area of the first post terminal 12, and facilitate the configuration of the first post terminal 12 to a "super large post terminal structure", thus help further increase the current passage area, current passage capacity, and heat dissipation capacity of the first post terminal 12.

Referring to FIG. 57, in some embodiments of the present application, the housing body 111 is provided with a second wall part 1113 and a third wall part 1114 arranged opposite to each other, and the second wall part 1113 and the third wall part 1114 are both provided with at least one first post terminal 12.

The "second wall part 1113 and third wall part 1114" may refer to the end walls of the housing body 111 located on the two sides of the third direction and extending in the first direction (see FIG. 57), or may refer to the end walls of the housing body 111 located on the two sides of the third direction and extending in the second direction. Secondly, on the second wall part 1113 and the third wall part 1114, one first post terminal 12 may be arranged, or a plurality of first post terminals 12 may be arranged.

In other words, the first post terminals 12 may be arranged on two opposite side surfaces of the housing body 111 (referring to FIGs. 53-55). When two opposite side surfaces of the housing body 111 are each provided with the first post terminal 12, the conductive part 22 can extend from the position of the active substance-coated part 21 proximal to the first post terminal 12 on each side, and the conductive part 22 is cooperatively connected to the first post terminal 12 on the adjacent side, thereby alleviating the problem that the tab part 221 is pulled by the first post terminal 12 on the same side that results in the cracking of the connection between the tab part 221 and the active substance-coated part 21, thereby improving the reliability of the battery cell 10. It is worth noting that the first post terminals 12 on the two sides may be the same or different, and the connection methods between the first post terminals 12 on the two sides and the conductive part 22 may be the same or different, which is not limited here.

Referring to FIG. 58, in some embodiments, the housing body 111 is provided with a plurality of wall parts 1115. Some of the plurality of wall parts 1115 is a first set wall part 1116. The area of the first set wall part 1116 is greater than the area of each of the other wall parts 1115. The first post terminal 12 is arranged on the first set wall part 1116.

The "first set wall part 1116" may refer to the one among the plurality of wall parts 1115 with the largest area. In other words, the first post terminal 12 is riveted to the largest wall of the housing body 111. Since the area of the wall part 1115 connected to the first post terminal 12 is the greatest, it is easier to operate when riveting the first post terminal 12, which can improve the assembly efficiency and increase the yield of battery cells 10.

For another example, in some optional embodiments of the present application, the first post terminal 12 may be located on the top surface of the housing body 111, and so on. When the first post terminal 12 is located on the top surface of the housing body 111, the accommodating part 121 may be used to accommodate an electrolyte, thereby increasing the cycle life of the battery cell 10. In addition, when the first post terminal 12 is located on the top surface of the housing body 111 and the support 3 is located at the bottom of the active substance-coated part 21, the contact area between the support 3 and the active substance-coated part 21 can be increased, thus alleviating the stress concentration problem and saving additional supporting structural members.

In some embodiments, the housing body 111 is provided with a plurality of wall parts 1115, and at least one of the plurality of wall parts 1115 is a second set wall part. The pressure relief part 16 is arranged on the second set wall part, and the first post terminal 12 is arranged on the other wall parts 1115 than the second set wall part. The specific structure of the pressure relief part 16 is not limited. For example, it may be an explosion-proof valve or a weak part, etc., which can be used to relieve the pressure when the pressure in the battery cell 10 is excessive, thereby improving the reliability of the battery cell 10.

The first post terminal 12 and the pressure relief part 16 are arranged on different wall parts 1115. When thermal runaway occurs in the battery cell 10, the high-temperature medium will be discharged through the pressure relief part 16 and will not contact the first post terminal 12, thus reducing the probability of fire in the battery circuit caused by the contact with the high-temperature medium.

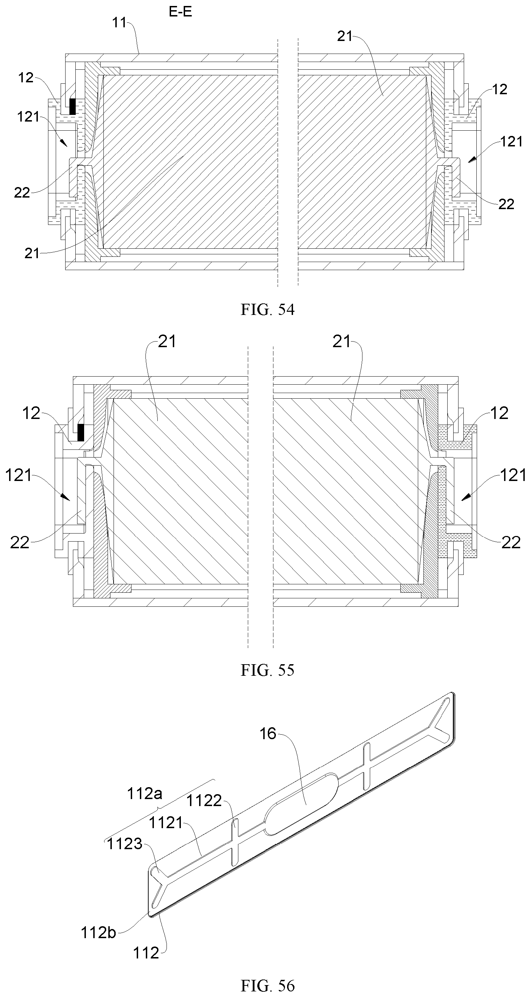

For example, the plurality of wall parts 1115 may refer to an upper wall part, a left wall part, a right wall part, a front wall part, and a rear wall part of the housing body 111. Among them, the second set wall part can refer to the upper wall part, and the first post terminal 12 is arranged on one or more of the left wall part, the right wall part, the front wall part, and the rear wall part. Similarly, the second set wall part 1117 can also refer to one of the left wall part, the right wall part, the front wall part, and the rear wall part, and the first post terminal 12 is arranged on other wall parts 1115. Referring to FIG. 56, in some embodiments of the present application, the pressure relief part 16 is arranged on the housing cover 112, and the pressure relief part 16 and the housing cover 112 are integrally formed.

In the above solution, the number of components of the battery cells 10 can be reduced by integrally forming the pressure relief part 16 and the housing cover 112, thereby reducing the welding procedures between the pressure relief part 16 and the housing body 111. That is, there is no procedure of connecting a pressure relief part 16 after or before the housing cover 112 is connected to the housing body 111. This configuration can improve the assembly efficiency of the battery cell 10, reduce the welding process cost, reduce the possibility of failure at the welding position, and improve the reliability of the battery cell 10.

Optionally, the integral formation of the pressure relief part 16 and the housing cover 112 may refer to forming on the housing cover by engraving. That is, the pressure relief part 16 is a weak component on the housing cover 112, At a certain pressure, the weak component may crack to release pressure. By engraving the pressure relief part 16 integrally on the housing cover 112, the housing cover 112 is not prone to deformation during the process of forming the pressure relief part 16, and the forming process of the housing cover 112 is relatively simple, which can improve the yield of the battery cell 10 and reduce costs.

Referring to FIGs. 4 and 59, in some embodiments, the housing body 111 is provided with a plurality of wall parts 1111, at least one of the plurality of wall parts 1111 is a first wall part 1112, the first post terminal 12 is riveted to the first wall part 1112, and the thickness of the first wall part 1112 is greater than the thickness of each of the other wall parts 1111.

The first wall part 1112 serves as the housing wall for connecting the first post terminal 12, and the thickness of the first wall part 1112 is greater than that of each of the other wall parts 1111. Due to the relatively greater thickness of the first wall part 1112, the overall strength of the housing body 111 can be improved, thereby improving the reliability of the battery cell 10 during daily use. The relatively greater thickness of the first wall part 1112 may also improve the reliability of the first post terminal 12 during riveting, thereby improving the yield of the battery cells 10.

In the condition of ensuring the reliability of the riveting of the first post terminal 12, the first wall part 1112 may have a normal wall thickness, while the thickness of the other wall parts 1111 may be reduced. In this way, the space inside the housing body 111 is maximized in a given outer contour size of the housing body 111 and can thus accommodate a larger active substance-coated part 21, which is beneficial to improving the energy density of the battery cell 10.

With reference to FIG. 3, in some embodiments of the present application, the pressure relief part 16 is arranged on the first wall part 1112. In other words, the pressure relief part 16 and the first post terminal 12 may be located on the same side surface of the housing body 111. As such, processing and assembly can be facilitated. Alternatively, the pressure relief part 16 and the first post terminal 12 may also be arranged on two opposite sides of the housing body 111. Such a configuration can save space, increase the volume of the first post terminal 12, and reduce the disadvantageous effects of the pressure relief part 16 on the first post terminal 12 when the pressure is relieved.

Referring to FIGs. 51 and 56, in some embodiments of the present application, the housing body 111 is provided with a pressure relief part 16, and the pressure relief part 16 is arranged on the housing cover 112. As such, the pressure relief part 16 features ease to process and good pressure relief reliability. It is worth noting that in the embodiments, the first post terminal 12 may be arranged on the housing body 111 or the housing cover 112, which is not limited herein. For example, the pressure relief part 16 may be integrally formed with the housing cover 112, thereby facilitating processing, simplifying assembly, improving production efficiency, and reducing costs.

In some embodiments, the thickness ratio of the first wall part 1112 to any one of the other wall parts 1111 is d1, where 1 < d1 ≤ 7.5.

An excessive or insufficient thickness ratio d1 of the first wall part 1112 to any one of the other wall parts 1111 may not be proper. If d1 is less than 1, the thickness of the first wall part 1112 is less than the thickness of each of the other wall parts 1111, and cannot improve the supporting strength to the first tab 12. If d1 is greater than 7.5, the excessive thickness ratio of the first wall part 1112 to the other wall parts 1111 may result in excessive thicknesses of all the wall parts 1111 and an excessive thickness of the first wall part 1112. Despite the satisfied strength requirements, it is not conducive to reducing the weight of the battery cell 10. Therefore, the maximum value of d1 is 7.5. For example, d1 may be 1.2, 1.4, 1.5, 2.0, 2.5, 3.0, 3.5, 4.0, 4.5, 5.0, 5.5, 6.0, 6.5, 7.0, 7.5, etc.

In some embodiments, 1 < d1 ≤ 2.5. As described above, considering the reduced thickness and weight of the housing body 111 and to maximize the space inside the housing in a given outer contour size of the housing body 1111, a d1 greater than 2.5 can provide good strength for the housing body 111, but may compromise the space inside the housing, which is not conducive to improving the energy density of the battery cell 10. Therefore, setting d1 to a range of greater than 1 and less than or equal to 2.5 can ensure the strength of the housing body 111 can be taken into account, while in a given outer contour size of the housing body 111, providing a large space inside the housing body 111, which is conducive to maximizing the size of the active substance-coated part 21 and improving the energy density of the battery cell 10.

In some embodiments, as shown in FIGs. 51 and 59, the thickness of the first wall part 1112 is e1, where 1.5 mm ≤ e1 ≤ 2.5 mm, and/or the thickness of the other wall parts 1111 than the first wall part 1112 is e2, where 0.3 mm ≤ e2 ≤ 0.6 mm.

In the case that the thickness of the first wall part 1112 is greater than the thickness of each of the other wall parts 1111, the thickness e1 of the first wall part 1112 may be 1.5 mm, 1.6 mm, 1.7 mm, 1.8 mm, 1.9 mm, 2.0 mm, 2.1 mm, 2.2 mm, 2.3 mm, 2.4 mm, 2.5 mm, etc. In other words, if e1 is less than 1.5 mm, the reduced thickness of the first wall part 1112 will lead to insufficient strength, which is not conducive to riveting to the first post terminal 12; if e1 is greater than 2.5 mm, the excessive thickness of the first wall part 1112 may lead to a thick housing body 111 and increased costs, and reduced space inside the housing body 111 in a given outer contour size of the housing body 111, which may in turn result in a relatively smaller size of the active substance-coated part 21 and thus reduced energy density of the battery cell 10.

Alternatively, in the case that the thickness of the first wall part 1112 is greater than the thickness of each of the other wall parts 1111, the thickness e2 of the other wall parts 1111 than the first wall part 1112 may be 0.3 mm, 0.35 mm, 0.4 mm, 0.45 mm, 0.5 mm, 0.55 mm, 0.6 mm, etc. It will be appreciated that if e2 is less than 0.3 mm, the thickness of the other wall parts 1111 than the first wall part 1112 is relatively smaller. Even if the first wall part 1112 has relatively good strength, the strength of the other wall parts 1111 is insufficient, which will lead to insufficient strength of the housing body 111 and thus susceptibility to damage. If e2 is greater than 0.6 mm, the thickness of the other wall parts 1111 than the first wall part 1112 will be relatively greater, which may ensure the strength but increase the costs, thus, in a given outer contour size of the housing body 111, reducing the space inside the housing body 111, the size of the active substance-coated part 21, and the energy density of the battery cell 10.

Certainly, when the thickness of the first wall part 1112 is greater than the thickness of each of the other wall parts 1111, the following conditions may be satisfied simultaneously: the thickness of the first wall part 1112 is e1, where 1.5 mm ≤ e1 ≤ 2.5 mm, and the thickness of the other wall parts 1111 than the first wall part 1112 is e2, where 0.3 mm ≤ e2 ≤ 0.6 mm.

In some embodiments, 1.8 mm ≤ e1 ≤ 2.2 mm. Specifically, e1 may be 1.8 mm, 1.85 mm, 1.9 mm, 1.95 mm, 2.0 mm, 2.1 mm, 2.2 mm, etc. The value of e1 should have a certain safety margin. An e1 less than 1.8 mm may meet the strength requirement of the first wall part 1112 but lead to a relatively smaller thickness of the first wall part 1112, resulting in increased process costs and a first wall part 1112 prone to damage in extreme working conditions; an e1 greater than 2.2 mm, while meeting the strength requirement of the first wall part 1112, may consume more materials and increase the costs and thereby, in a given outer contour size of the housing body 111, reduce the internal space of the housing body 111, thus reducing the size of the active substance-coated part 21 and the energy density of the battery cell 10.

In some embodiments, 0.4 mm ≤ e2 ≤ 0.55 mm. Specifically, e2 may be 0.4 mm, 0.42 mm, 0.44 mm, 0.46 mm, 0.48 mm, 0.5 mm, 0.52 mm, 0.55 mm, etc. The value of e2 should have a certain safety margin. An e2 less than 0.4 mm may meet the strength requirement of the other wall parts 1111 than the first wall part 1112 but lead to a relatively smaller thickness of the other wall parts 1111, resulting in increased process costs and wall parts 1111 prone to damage in extreme working conditions; an e2 greater than 0.55 mm, while meeting the strength requirement of the other wall parts 1111, may consume more materials and thus increase the costs and thereby, in a given outer contour size of the housing body 111, reduce the internal space of the housing body 111, thus reducing the size of the active substance-coated part 21 and the energy density of the battery cell 10.

In some embodiments, the thickness of the housing cover 112 is smaller than the thickness of the first wall part 1112. Since the first post terminal 12 is riveted to the first wall part 1112, and the housing cover 112 is not necessarily connected to the first post terminal 12, the strength requirement of the housing cover 112 is relatively lower, and its thickness may be smaller than the thickness of the first wall part 1112. This configuration can save materials. Similarly, in a given outer contour size of the housing 11, a smaller thickness of the housing cover 112 may increase the space inside the housing 11 and thus allow the housing 11 to accommodate a larger active substance-coated part 21, which is beneficial to improving the energy density of the battery cell 10.

In some embodiments, the thickness of the housing cover 112 is greater than the thickness of each of the other wall parts 1111 adjacent to the housing cover 112 than the first wall part 1112.

For example, the housing cover 112 may be connected to the housing body 111 by welding. In this embodiment, the thickness of the housing cover 112 may be greater than the thickness of the wall part 1111 welded to the housing cover 112. Considering that the housing cover 112 shall close on the opening 111a and requires proper strength, the housing cover 112 is configured to have a greater thickness than that of the other wall parts 1111 than the first wall part 1112 and adjacent to the housing cover 112. In this way, after the housing cover 112 closes the opening 111a, the housing 11 features a good overall strength, which may reduce the probability of damage to the housing 11 and improve the reliability of the battery cell 10.

It should be noted that the thickness of the first wall part 1112 described above may be the average thickness of the major structure of the first wall part 1112. For example, the first wall part 1112 may be stepped and be provided with a number of regions with different thicknesses. In this case, the thickness of the first wall part 1112 may refer to the thickness of the region where the first post terminal 12 is riveted. Similarly, the thickness of the housing cover 112 may also refer to the average thickness of the major structure of the housing cover 112, and the thickness of the wall part 1111 may refer to the average thickness of the major structure of the wall part 1111.

Referring to FIG. 5, in some embodiments, the thickness of the housing cover 112 is e3, where 1.0 mm ≤ e3 ≤ 1.5 mm. In other words, if e3 is less than 1.0 mm, the reduced thickness of the housing cover 112 will lead to insufficient strength and thus compromised strength of the housing 11, making the housing 11 prone to damage; if e1 is greater than 1.5 mm, the excessive thickness of the first wall part 112 may lead to a thick housing body 111, increased material consumption and costs, and smaller space inside the housing body 111 in a given outer contour size of the housing body 111, which may in turn result in a reduced size of the active substance-coated part 21 and thus reduced energy density of the battery cell 10.

In some embodiments, 1.2 mm ≤ e3 ≤ 1.4 mm. In other words, the value of e3 should have a certain safety margin. If e3 is less than 1.2 mm, the thickness of the housing cover 112 is relatively smaller. In this case, although the thickness of the housing cover 112 may meet the strength requirements, the housing cover 112 may have an increased probability of damage in accidents or long-term operation. In addition, an insufficient thickness of the housing cover 112 will also lead to higher processing requirements and increased costs. If e3 is greater than 1.4 mm, the thickness of the housing cover 112 meets the strength requirements, but the increased thickness of the housing cover 112 may increase the material consumption and the costs, and thereby, in a given outer contour size of the housing body 111, reduce the internal space of the housing body 111, thereby reducing the size of the active substance-coated part 21 and the energy density of the battery cell 10. Setting e3 within the range of greater than or equal to 1.2 mm and less than or equal to 1.4 mm may meet both the strength requirement and the volume ratio requirement.

Referring to FIGs. 4 and 5, in some embodiments, the opening 111a is disposed at the bottom of the housing body 111.

In the related art, the opening of the housing body in the related art is set at the top, and the housing cover is mounted to the opening at the top of the housing body. A housing body of this structure will possess a process chamfer at the bottom of the internal space of the housing body during processing. Then, when the active substance-coated part is mounted into the housing, due to the presence of the process chamfer, the bottom of the active substance-coated part (which may refer to the end of the active substance-coated part distal to the conductive part) and the process chamfer inside the housing body do not contact, and a certain space is left between the two. A partition will be arranged in the space to separate the active substance-coated part and the housing cover, which leads to a waste of space inside the housing body. In the present application, since the opening 111a is arranged at the bottom of the housing body 111, and the first post terminal 12 is riveted to the housing body 111, in such a housing 11 structure, after the active substance-coated part 21 enters the housing, no process chamfer is present between the bottom of the active substance-coated part 21 and the housing cover 112. The partition between the bottom of the active substance-coated part 21 and the housing cover 112 can be eliminated, and the gap between the bottom of the active substance-coated part 21 and the housing cover 112 can be greatly reduced, thus increasing the size of the active substance-coated part 21 and improving the energy density of the battery cell 10. Also, since no process chamfer is present near the bottom of the active substance-coated part 21, the active substance-coated part 21 will not be damaged due to the contact with the process chamfer, thus reducing the probability of damage to the active substance-coated part 21 and the loss of the active substance coating, improving the performance of the battery cell 10, and alleviating the stress concentration on the active substance-coated part 21.

In addition, since the housing cover 112 is arranged at the bottom of the housing body 111, when the battery cells 10 are assembled into a battery 100, the bottom of the housing 11 is generally fixed to the bottom of the case 20 of the battery 100. In this case, when vibration occurs in use, since the housing cover 112 is connected to the bottom of the case 20, the amplitude of vibration at the connection between the housing cover 112 and the housing body 111 is relatively lower, which can further reduce the probability of cracking of the housing cover 112 and the housing body 111.

Referring to FIG. 5, in some embodiments, the active substance-coated part 21 is provided with a first end surface 21a proximal to the housing cover 112, and the battery cell 10 further includes an inner insulating member 4, the inner insulating member 4 is wrapped around the battery cell assembly 2, at least a part of the inner insulating member 4 is arranged between the first end surface 21a and the housing cover 112, and the inner insulating member 4 is provided with a first surface 4a and a second surface 4b opposite to each other, the first surface 4a is in contact with the first end surface 21a, and the second surface 4b is in contact with the housing cover 112.

With reference to the description of the inner insulating member 4 above, by contacting the first surface 4a of the inner insulating member 4 with the first end surface 21a and contacting the second surface 4b with the housing cover 112, the partition arranged between the active substance-coated part and the housing cover can be eliminated while ensuring the insulation effect between the active substance-coated part 21 and the housing cover 112, which is beneficial to saving space in the housing body 111, increasing the size of the active substance-coated part 21, and further improving the energy density of the battery cell 10.

In some embodiments, as shown in FIG. 5, the thickness of the portion of the inner insulating member 4 between the first surface 4a and the second surface 4b is d2, where 0 < d2 ≤ 0.1 mm.

In other words, d2 may be 0.01 mm, 0.02 mm, 0.03 mm, 0.04 mm, 0.05 mm, 0.06 mm, 0.07 mm, 0.08 mm, 0.09 mm, 0.1 mm, etc. When the thickness of the portion of the inner insulating member 4 located between the first surface 4a and the second surface 4b is greater than 0.1 mm, the inner insulating member 4 may ensure the insulation effect between the active substance-coated part 21 and the housing cover 112, but possess a greater thickness and occupy excessive space inside the housing body 111, which is not conducive to increasing the size of the active substance-coated part 21. A thickness of the portion of the inner insulating member 4 located between the first surface 4a and the second surface 4b less than 0.1 mm can meet the insulation requirements between the active substance-coated part 21 and the housing cover 112 and help save space, thus further helping increase the size of the active substance-coated part 21 and improving the energy density of the battery cell 10.

In some embodiments, 0.02 mm < d2 ≤ 0.05 mm. In other words, d2 may specifically be 0.02 mm, 0.025 mm, 0.03 mm, 0.035 mm, 0.04 mm, 0.045 mm, 0.05 mm, etc.

In the above technical solution, the value of d2 should have a certain safety margin. That is, d2 may require a proper selection. A d2 greater than 0.05 mm may lead to an insulation effect beyond the requirements between the active substance-coated part 21 and the housing cover 112 and a waste of space inside the housing body 111. If d2 is less than 0.02 mm, the inner insulating member 4 may also meet the insulation requirements between the active substance-coated part 21 and the housing cover 112, but due to the excessively small thickness, the inner insulating member 4 may have increased manufacture difficulties and thus increased costs and susceptibility to damage during the mounting process, thus featuring increased difficulties in assembly and reduced yield. Therefore, by setting d2 to a range of greater than or equal to 0.02 mm and less than or equal to 0.05 mm, the insulation requirements between the active substance-coated part 21 and the housing cover 112 as well as the cost and assembly difficulty requirements can be met.

In some embodiments, as shown in FIG. 4, the housing body 111 is provided with a first wall part 1112 opposite to the housing cover 112, and the first post terminal 12 is arranged on the first wall part 1112.

In this technical solution, the battery cell assembly 2 enters through the opening 111a, and the conductive part 22 is directly arranged opposite to the first post terminal 12, such that the conductive part 22 can be connected to the first post terminal 12 relatively easier, thereby improving the assembly efficiency of the battery cell 10.

For example, the first wall part 1112 and the housing cover 112 may be arranged at the two ends of the third direction in FIG. 3. As in the previous embodiment, the opening 111a is arranged at the bottom of the housing body 111, the housing cover 112 is arranged at the bottom of the housing body 111, and thus the battery cell assembly 2 can be mounted into the housing body 111 from bottom to top in the third direction, such that the conductive part 22 can be easily connected to the first post terminal 12.

Referring to FIG. 56, in some embodiments of the present application, a liquid storage groove 112a is arranged on the end surface of the housing cover 112 proximal to the inner side of the housing body 111. The liquid storage groove 112a may be configured to store the electrolyte, increase the electrolyte content inside the battery cell 10, and further improve the cycle life of the battery cell 10.

Referring to FIG. 56, in some embodiments of the present application, the liquid storage groove 112a includes a first groove part 1121, and the first groove part 1121 extends in the length direction of the housing cover 112. The extension direction of the first groove part 1121 is consistent with the length direction of the housing cover 112, such that the capacity of the first groove part 1121 can be increased to store more electrolyte.

Referring to FIG. 56, in some embodiments of the present application, the liquid storage groove 112a further includes second groove parts 1122. The second groove parts 1122 are in communication with the first groove part 1121 and extend in the width direction of the housing cover 112. On the basis of the arrangement of the first groove part 1121, more electrolyte can be further stored by arranging the second groove parts 1122.

Referring to FIG. 56, optionally, the second groove parts 1122 are arranged on the two sides of the length direction of the first groove part 1121. By increasing the number of the second groove parts 1122, the capacity of the liquid storage groove 112a can be increased. For example, two second groove parts 1122 are arranged on each side of the length direction of the first groove part 1121. Certainly, this is only illustrative, and the number of the second groove parts 1122 is not limited to this, which will not be recited herein.

Referring to FIG. 56, in some embodiments of the present application, the liquid storage groove 112a further includes third groove parts 1123. The third groove parts 1123 are located at two ends of the first groove part 1121 and directed to the corners of the housing cover 112. On the basis of the arrangement of the first groove part 1121 and the second groove part 1122, the electrolyte storage capacity can be further increased by arranging the third groove parts 1123.

Referring to FIG. 56, optionally, the third groove parts 1123 are arranged on the two sides of the length direction of the first groove part 1121. By increasing the number of the third groove parts 1123, the capacity of the liquid storage groove 112a can be increased. For example, two third groove parts 1123 are arranged on each side of the length direction of the first groove part 1121. Certainly, this is only illustrative, and the number of the third groove parts 1123 is not limited to this, which will not be recited herein.

Referring to FIG. 5, in some embodiments of the present application, a protrusion part 112b is arranged on the end surface of the housing cover 112 proximal to the inner side of the housing body 111, and the circumferential end surface of the protrusion part 112b is in contact with the inner wall surface of the housing body 111.

The "protrusion part 112b" may refer to a structure protruding from the housing cover 112. The protrusion part 112b may include, but is not limited to, a boss structure and a circular rail structure, which may be specifically configured as required.

In the above solution, the end surface of the housing cover 112 proximal to the housing body 111 is in contact with the housing body 111, or in other words, the protrusion part 112b is embedded in the inner wall surface of the housing body 111. This configuration can make the connection between the housing cover 112 and the housing body 111 tighter, stronger, and more reliable, and is also beneficial to reducing the thickness of the housing cover 112 and the overall volume of the battery cell 10 and improving the energy density of the battery.

In some embodiments of the present application, the protrusion part 112b is arranged on a portion of the end surface of the housing cover 112 proximal to the inner side of the housing body 111, and the liquid storage groove 112a is arranged on the remaining portion. For example, the protrusion part 112b is in the shape of a rectangular ring, and the liquid storage groove 112a is located in the middle of the rectangular ring.

In some embodiments of the present application, the protrusion part 112b may be configured as a flat plate with a step formed to the edge of the housing cover 112, and the liquid storage groove 112a is formed on the protrusion part 112b (see FIG. 56).

In some embodiments of the present application, the housing cover 112 and the housing body 111 may be connected by welding or gluing.

According to some embodiments of the present application, the present application further provides a battery 100, and the battery 100 includes the battery cell 10 according to any one of the above embodiments.

In the above technical solution, in the battery 100, since the first post terminals 12 of any adjacent battery cells 10 are connected to each other, when the battery 100 vibrates or deforms, the first post terminals 12 of any adjacent battery cells 10 will be pulled by each other. At this time, since the first post terminals 12 are arranged on the housing body 111, the force applied to the first post terminals 12 will be preferentially transmitted to the housing body 111, rather than directly acting on the housing cover 112. Such a configuration increases the transmission distance of the force to the connection position between the housing body 111 and the housing cover 112 and reduces the stress at the connection position between the housing body 111 and the housing cover 112 since the housing body 111 will first deform, thus effectively reducing the probability of cracking between the housing cover 112 and the housing body 111 during the use of the battery 100 and improving the reliability of the battery cells 10.

According to some embodiments of the present application, the present application further provides an electric device 1000, and the electric device 1000 includes the battery cell 10 according to any one of the above embodiments, or includes the battery 100 according to any one of the above embodiments. The battery cell 10 or the battery 100 is used to power the electric device 1000.

In the above technical solution, the electric device 1000 adopts the above battery 100 or battery cell 10, thus featuring a low probability of cracking between the housing cover 112 and the housing body 111 of the battery cell 10 in use, improved reliability of the battery 100, and improved performance of the electric device 1000.

In a fourth aspect, the embodiment of the present application further provides a method for assembling a battery cell 10, where the battery cell 10 includes a housing assembly 1 and a battery cell assembly 2, the housing assembly 1 includes a housing 11 and a first post terminal 12, the housing 11 includes a housing body 111 and a housing cover 112, and the battery cell assembly 2 includes an active substance-coated part 21 and a conductive part 22.

As shown in FIG. 61, the method includes: mounting the battery cell assembly 2 into the housing body 111, connecting the conductive part 22 to the first post terminal 12, welding the conductive part 22 from the exterior of the housing body 111 to the first post terminal 12, and lidding the housing body 111 with the housing cover 112.

It will be appreciated that when the battery cells 10 of the present application are assembled, only the battery cell assembly 2 is housed, thus reducing the number and overall weight of the housed components (in the related art, the battery cell assembly, the housing cover and the post terminal are assembled before housing). Therefore, it is easier to house the battery cell assembly 2, while it is also convenient to connect the conductive part 22 to the first post terminal 12, thus featuring high assembly efficiency. Since the internal space of the housing body 111 is limited, welding the conductive part 22 from the exterior of the housing body 111 to the first post terminal 12 will facilitate the welding operations and improve the efficiency of component assembly. Welding from the exterior can effectively prevent metal foreign matters generated during welding from entering the battery cell, thus reducing the possibility of internal short circuits in the battery cell due to the metal foreign matters. It is also easy to clean up metal foreign matters generated during welding. Finally, the housing body 111 is lidded with the housing cover 112 to complete the assembly.

In addition, the method of the present application only requires the steps of mounting the battery cell assembly 2 into the housing body 111 connecting the conductive part 22 to the first post terminal 12, welding the conductive part 22 from the exterior of the housing body 111 to the first post terminal 12, and lidding the housing body 111 with the housing cover 112 to complete the assembly of the battery cell 10, features relatively few overall assembly procedures, and can thus simplify the assembly process, reduce the assembly time, and thus help reduce the manufacturing cost of the battery cell 10.

In some embodiments, as shown in FIG. 62, the battery cell 10 further includes a support 3, and the edge of the support 3 is provided with a housing entry guiding surface 35; mounting the battery cell assembly 2 into the housing body 111 includes: mounting the support 3 on the side of the active substance-coated part 21 proximal to the first post terminal 12, such that the housing entry guiding surface 35 is located on the side of the support 3 distal to the active substance-coated part 21; and mounting the battery cell assembly 2 into the housing body 111 with the guidance of the housing entry guiding surface 35.

In this technical solution, the support 3 and the battery cell assembly 2 can be pre-assembled together during assembly, and then the pre-assembled assembly can be mounted into the housing 11. During the mounting, the support 3 is located at the front of the active substance-coated part 21, or in other words, the support 3 enters the housing 11 before the active substance-coated part 21, which can reduce the difficulty for the support 3 entering the housing 11 via the housing entry guiding surface 35 and protect the active substance-coated part 21 via the support 3, thereby reducing the probability of scratches and damages between the active substance-coated part 21 and the housing 11 and improving the assembly efficiency and product yield. Moreover, the contact area between the support 3 and the active substance-coated part 21 can be increased, and the stress concentration problem can be reduced, thus saving additional structural components.

In some embodiments, as shown in FIG. 63, the battery cell 10 further includes a support 3, and the support 3 is provided with a clearance hole 31; connecting the conductive part 22 to the first post terminal 12 includes: passing the conductive part 22 through the clearance hole 31; and connecting the conductive part 22 to the first post terminal 12.

It will be appreciated that the active substance-coated part 21 is separated from the housing 11 by the support 3, which is beneficial to improving the reliability of the battery cell 10. Also, providing the clearance hole 31 on the support 3 can guide and constrain the conductive part 22 to pass through the clearance hole 31 and fit the first post terminal 12, such that during the assembly process of the battery cell 10, there is no need for the conductive part 22 to bypass the edge of the support 3 to approach the first post terminal 12, which not only simplifies the arrangement of the conductive part 22, saves the material of the conductive part 22, and reduces the cost, but also supports and guides the conductive part 22 to cooperate with the first post terminal 12 by the support 3, reduces the risk of short-circuit connection between the conductive part 22 and the active substance-coated part 21, thus further improving the reliability of the battery cell 10.

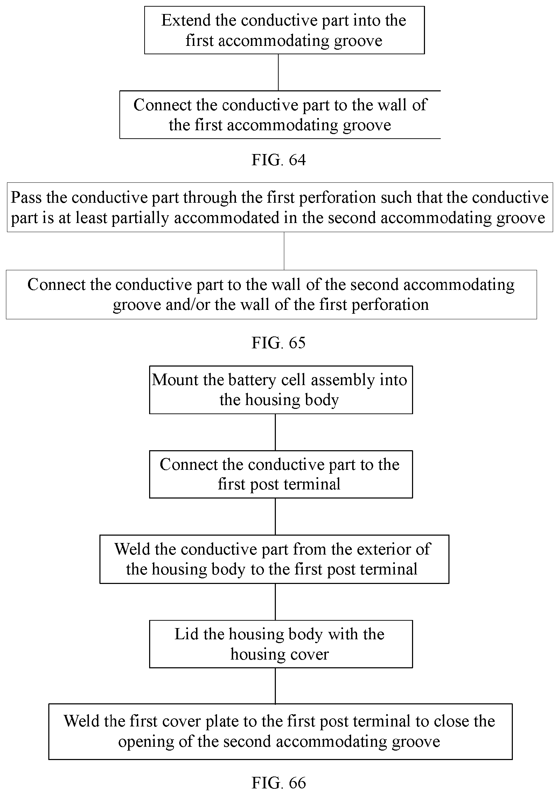

In some embodiments, as shown in FIG. 64, the first post terminal 12 is provided with a first accommodating groove 12110, the surface of the first post terminal 12 on the side proximal to the active substance-coated part 21 is a post terminal inner end surface 122, and an opening of the first accommodating groove 12110 is formed on the post terminal inner end surface 122; connecting the conductive part 22 to the first post terminal 12 includes: extending the conductive part 22 into the first accommodating groove 12110; and connecting the conductive part 22 to the wall of the first accommodating groove 12110.

In other words, during the connection of the conductive part 22 to the first post terminal 12, since the first post terminal 12 is provided with the first accommodating groove 12110, it is relatively easy to accurately align the conductive part 22 to the first post terminal 12. As such, when the conductive part 22 is welded to the first post terminal 12 from the exterior of the housing body 111, the stability of the conductive part 22 on the first post terminal 12 and the welding quality can be improved, thus helping improve the performance of the battery cell 10.

In some embodiments, as shown in FIG. 65, the first post terminal 12 is provided with a second accommodating groove 12120, the surface of the first post terminal 12 on the side distal to the active substance-coated part 21 is a post terminal outer end surface 123, an opening of the second accommodating groove 12120 is formed on the post terminal outer end surface 123, and the second accommodating groove 12120 is in communication with the interior of the housing 11 through a first perforation 12130; connecting the conductive part 22 to the first post terminal 12 includes: passing the conductive part 22 through the first perforation 12130 such that the conductive part 22 is at least partially accommodated in the second accommodating groove 12120; and connecting the conductive part 22 to the wall of the second accommodating groove 12120 and/or the wall of the first perforation 12130.

In the above technical solution, the second accommodating groove 12120 can expose the connection part of the conductive part 22 and the first post terminal 12 to the outer side of the housing 11, making it convenient to weld the conductive part 22 and the first post terminal 12 from the exterior, featuring ease to operate, and helping improve the assembly efficiency.

In some embodiments, as shown in FIG. 66, the battery cell 10 further includes a first cover plate 13; after welding the conductive part 22 to the first post terminal 12, the method further includes: welding the first cover plate 13 to the first post terminal 12 to close the opening of the second accommodating groove 12120.

In the above technical solution, arranging the first cover plate 13 to close the opening of the second accommodating groove 12120 allows to prevent the electrolyte in the housing 11 from leaking out of the opening of the second accommodating groove 12120. Moreover, since the first cover plate 13 closes the opening of the second accommodating groove 12120 and is electrically connected to the first post terminal 12, an indirect electrical connection between the first post terminal 12 and a busbar component can be easily achieved by using the first cover plate 13, and the connection area of the electrical connection can also be increased, thereby helping reduce the resistance of the electrical connection. In addition, the first cover plate 13 can separate the welding part of the conductive part 22 and the first post terminal 12 from the welding part of the first post terminal 12 and the busbar component, thereby reducing the influence of the welding part of the conductive part 22 and the first post terminal 12 on the welding part of the first post terminal 12 and the busbar component and improving the quality of the welding of the first post terminal 12 and the busbar component.

It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing assembly (1), comprising a housing (11) and a first post terminal (12), wherein the housing (11) comprises a housing body (111) and a housing cover (112), the housing body (111) is provided with an opening (111a); the opening (111a) is lidded with the housing cover (112), and the housing body (111) is provided with the first post terminal (12); and
a battery cell assembly (2), comprising an active substance-coated part (21) and a conductive part (22), wherein the active substance-coated part (21) is accommodated in the housing body (111), and the conductive part (22) electrically connects the active substance-coated part (21) to the first post terminal (12).

2. The battery cell according to claim 1, wherein the first post terminal (12) is provided with an accommodating part (121), and at least a part of the conductive part (22) is accommodated in the accommodating part (121).

3. The battery cell according to claim 2, wherein the accommodating part (121) is provided with a first accommodating groove (12110), a surface of the first post terminal (12) on a side proximal to the active substance-coated part (21) is a post terminal inner end surface (122), an opening of the first accommodating groove (12110) is formed on the post terminal inner end surface (122), and at least a part of the conductive part (22) is accommodated in the first accommodating groove (12110).

4. The battery cell according to claim 3, wherein:
the housing (11) is provided with a mounting hole (113), and the first post terminal (12) is mounted in the mounting hole (113); and
in an axial direction of the first post terminal (12), a depth H1 of the first accommodating groove (12110) is greater than or equal to a minimum distance H2 from the post terminal inner end surface (122) to the mounting hole (113).

5. The battery cell according to claim 3 or 4, wherein the accommodating part (121) comprises a first end wall (12111) and a first side wall (12113), the first end wall (12111) is located on a side of the first side wall (12113) distal to the active substance-coated part (21), the first end wall (12111) and the first side wall (12113) define the first accommodating groove (12110) in an enclosing manner, and an electrical connection position between the conductive part (22) and the first post terminal (12) is located on the first end wall (12111) and/or the first side wall (12113).

6. The battery cell according to claim 5, wherein the first end wall (12111) is provided with a first recess (12112), and at least a part of the electrical connection position between the conductive part (22) and the first end wall (12111) is located in the first recess (12112).

7. The battery cell according to any one of claims 3-6, wherein the first post terminal (12) is provided with a first groove (126), a surface of the first post terminal (12) on a side distal to the active substance-coated part (21) is a post terminal outer end surface (123), and an opening of the first groove (126) is formed on the post terminal outer end surface (123).

8. The battery cell according to claim 7, wherein the housing assembly (1) further comprises a groove cover (7), and the groove cover (7) is arranged on the first post terminal (12) and closes the opening of the first groove (126).

9. The battery cell according to claim 2, wherein the accommodating part (121) is provided with a second accommodating groove (12120), a surface of the first post terminal (12) on a side distal to the active substance-coated part (21) is a post terminal outer end surface (123), an opening of the second accommodating groove (12120) is formed on the post terminal outer end surface (123), the second accommodating groove (12120) is in communication with the interior of the housing (11) through a first perforation (12130), and the conductive part (22) is provided in the first perforation (12130) in a penetrating manner and is at least partially accommodated in the second accommodating groove (12120).

10. The battery cell according to claim 9, wherein an electrical connection position between the conductive part (22) and the first post terminal (12) is located on a wall of the first perforation (12130) formed in the accommodating part (121).

11. The battery cell according to claim 9, wherein the accommodating part (121) comprises a second end wall (12121) and a second side wall (12123), the second end wall (12121) is located on the side of the second side wall (12123) proximal to the active substance-coated part (21), the second end wall (12121) and the second side wall (12123) define, in an enclosing manner, the second accommodating groove (12120), the first perforation (12130) is arranged on the second end wall (12121), and an electrical connection position between the conductive part (22) and the first post terminal (12) is located on the second end wall (12121) and/or the second side wall (12123).

12. The battery cell according to claim 11, wherein the second end wall (12121) is provided with a second recess (12122), and at least a part of the electrical connection position between the conductive part (22) and the second end wall (12121) is located in the second recess (12122).

13. The battery cell according to any one of claims 9-12,
wherein the housing (11) is provided with a mounting hole (113), and the first post terminal (12) is mounted in the mounting hole (113); and
in the axial direction of the first post terminal (12), a depth H3 of the second accommodating groove (12120) is greater than or equal to a minimum distance H4 from the post terminal outer end surface (123) to the mounting hole (113).

14. The battery cell according to any one of claims 9-13, wherein the housing assembly (1) further comprises a first cover plate (13), the first cover plate (13) fits the first post terminal (12) and closes the opening of the second accommodating groove (12120), and the first cover plate (13) is electrically connected to the first post terminal (12).

15. The battery cell according to claim 14, wherein the first cover plate (13) comprises a first conductive member (131) and a second conductive member (132) made of different materials, the first conductive member (131) fits and is electrically connected to the first post terminal (12), and the second conductive member (132) fits and is electrically connected to the first conductive member (131).

16. The battery cell according to claim 15, wherein the first conductive member (131) is provided with a second groove (1311), the second conductive member (132) is embedded in the second groove (1311), and an opening of the second groove (1311) is formed on a surface of the first conductive member (131) distal to the second accommodating groove (12120), such that the second conductive member (132) is exposed at the opening of the second groove (1311).

17. The battery cell according to any one of claims 14-16, wherein the first cover plate (13) is embedded in the opening of the second accommodating groove (12120).

18. The battery cell according to claim 17, wherein the wall surface at the opening of the second accommodating groove (12120) formed on the first post terminal (12) is an inclined guiding surface (12126), and the inclined guiding surface (12126) is configured to guide the first cover plate (13) to fit the opening of the second accommodating groove (12120).

19. The battery cell according to claim 17 or 18, wherein the second accommodating groove (12120) comprises a first groove segment (12124) and a second groove segment (12125) located on a side of the first groove segment (12124) proximal to the post terminal outer end surface (123), a cross-sectional area of the second groove segment (12125) is greater than a cross-sectional area of the first groove segment (12124), so as to form a step surface (12127) between the first groove segment (12124) and the second groove segment (12125), and the first cover plate (13) is embedded in the second groove segment (12125) and supported by the step surface (12127).

20. The battery cell according to any one of claims 2-19, wherein the first post terminal (12) comprises a first post terminal part (124) and a second post terminal part (125) made of different materials and electrically connected, the second post terminal part (125) is located on a side of the first post terminal part (124) distal to the active substance-coated part (21), the accommodating part (121) is arranged on the first post terminal part (124) or on the first post terminal part (124) and the second post terminal part (125), and the conductive part (22) is electrically connected to the first post terminal part (124).

21. The battery cell according to claim 2, wherein the accommodating part (121) is provided with a fourth accommodating groove (12150), a surface of the first post terminal (12) on a side distal to the active substance-coated part (21) is a post terminal outer end surface (123), an opening of the fourth accommodating groove (12150) is formed on the post terminal outer end surface (123), the fourth accommodating groove (12150) is in communication with the interior of the housing (11) through a second perforation (12160), the conductive part (22) is provided in the second perforation (12160) in a penetrating manner, and an electrical connection position between the conductive part (22) and the first post terminal (12) is located on a wall of the second perforation (12160) formed on the accommodating part (121).

22. The battery cell according to any one of claims 2-21, further comprising:
a support (3), located in the housing (11) and on a side of the first post terminal (12) proximal to the active substance-coated part (21), wherein the support (3) is provided with a clearance hole (31) configured to provide clearance for the conductive part (22), and the conductive part (22) is suitable for extending to a side of the support (3) distal to the active substance-coated part (21) through the clearance hole (31).

23. The battery cell according to claim 22, wherein the support (3) is provided with a guiding part (32), the guiding part (32) defining, in an enclosing manner, at least a part of the clearance hole (31) and at least partially extending to the accommodating part (121).

24. The battery cell according to any one of claim 23, wherein an edge of the support (3) distal to the housing cover (112) is provided with a housing entry guiding surface (35), and the housing entry guiding surface (35) comprises an arc-shaped surface and/or an inclined surface.

25. The battery cell according to any one of claims 22-24, wherein:
the support (3) is of an integrated structure; or
the support (3) is of a split-type structure and comprising a first support (33) and a second support (34) separable from the first support (33), the first support (33) and the second support (34) defining the clearance hole (31) therebetween.

26. The battery cell according to any one of claims 22-25, further comprising:
an inner insulating member (4), located in the housing (11), enclosed outside the active substance-coated part (21), and connected to the support (3).

27. The battery cell according to any one of claims 1-26, wherein the housing assembly (1) comprises at least one first post terminal (12) riveted to the housing body (111).

28. The battery cell according to claim 26, wherein:
a mounting hole (113) is arranged on the housing body (111); and
the first post terminal (12) comprises a post terminal body, a first limiting stage and a second limiting stage that are integrally formed, the post terminal body provided in the mounting hole (113) in a penetrating manner, and the first limiting stage and the second limiting stage arranged at two ends of the post terminal body in an axial direction of the mounting hole (113), wherein the first limiting stage is in limiting fit with an outer side of the housing body (111), and the second limiting stage is in limiting fit with an inner side of the housing body (111), such that the first post terminal (12) is riveted to the housing body (111).

29. The battery cell according to claim 28, wherein a dimension of the first post terminal (12) in a first direction is greater than a dimension of the first post terminal (12) in a second direction perpendicular to the first direction, both the first direction and the second direction being perpendicular to the axial direction of the mounting hole (113).

30. The battery cell according to any one of claims 1-28, wherein the housing body (111) is provided with a second wall part (1112) and a third wall part (1113) arranged opposite to each other, and the second wall part (1112) and the third wall part (1113) are each provided with at least one first post terminal (12).

31. The battery cell according to any one of claims 1-28, wherein the housing body (111) is provided with a plurality of wall parts (1111), some of the plurality of wall parts (1111) is a first set wall part (1116), an area of the first set wall part (1116) is greater than an area of each of the other wall parts (1111), and the first post terminal (12) is arranged on the first set wall part (1116).

32. The battery cell according to any one of claims 1-28, wherein the housing body (111) is provided with a plurality of wall parts (1111), at least one of the plurality of wall parts (1111) is a second set wall part, the battery cell further comprises a pressure relief part (16), the pressure relief part (16) is arranged on the second set wall part, and the first post terminal (12) is arranged on the other wall parts (1111) than the second set wall part.

33. The battery cell according to any one of claims 1-32, wherein the battery cell (10) further comprises a pressure relief part (16), the pressure relief part (16) is arranged on the housing cover (112), and the pressure relief part (16) and the housing cover (112) are integrally formed.

34. The battery cell according to any one of claims 1-32, wherein the housing body (111) is provided with a plurality of wall parts (1111), at least one of the plurality of wall parts (1111) is a first wall part (1112), the first post terminal (12) is riveted to the first wall part (1112), and a thickness of the first wall part (1112) is greater than a thickness of each of the other wall parts (1111).

35. The battery cell according to claim 34, wherein a thickness of the housing cover (112) is smaller than the thickness of the first wall part (1112).

36. The battery cell according to claim 35, wherein the thickness of the housing cover (112) is greater than the thickness of each of the other wall parts (1111) that are close to the housing cover (112) than the first wall part (1112).

37. The battery cell according to any one of claims 1-36, wherein the opening (111a) is arranged at the bottom of the housing body (111).

38. The battery cell according to claim 37, wherein the active substance-coated part (21) is provided with a first end surface (21a) proximal to the housing cover (112), and the battery cell further comprises an inner insulating member (4), the inner insulating member (4) is wrapped around the battery cell assembly (2), at least a part of the inner insulating member (4) is arranged between the first end surface (21a) and the housing cover (112), and the inner insulating member (4) is provided with a first surface (4a) and a second surface (4b) opposite to each other, the first surface (4a) is in contact with the first end surface (21a), and the second surface (4b) is in contact with the housing cover (112).

39. The battery cell according to any one of claims 1-38, wherein the housing body (111) is provided with a first wall part (1112) opposite to the housing cover (112), and the first post terminal (12) is arranged on the first wall part (1112).

40. A battery, comprising the battery cell (10) according to any one of claims 1-39.

41. An electric device, comprising the battery cell (10) according to any one of claims 1-39; or comprising the battery (100) according to claim 40.

42. A method for assembling a battery cell, wherein the battery cell (10) comprises a housing assembly (1) and a battery cell assembly (2), the housing assembly (1) comprises a housing (11) and a first post terminal (12), the housing (11) comprises a housing body (111) and a housing cover (112), the housing body (111) is provided with the first post terminal (12), and the battery cell assembly (2) comprises an active substance-coated part (21) and a conductive part (22);
the method comprises:
mounting the battery cell assembly (2) into the housing body (111);
connecting the conductive part (22) to the first post terminal (12);
welding the conductive part (22) from the exterior of the housing body (111) to the first post terminal (12); and
lidding the housing body (111) with the housing cover (112).

43. The method according to claim 42, wherein the battery cell further comprises a support (3), and an edge of the support (3) is provided with a housing entry guiding surface (35), and wherein said mounting the battery cell assembly (2) into the housing body (111) comprises:
mounting the support (3) on a side of the active substance-coated part (21) proximal to the first post terminal (12), such that the housing entry guiding surface (35) is located on a side of the support (3) distal to the active substance-coated part (21); and
mounting the battery cell assembly (2) into the housing body (111) with the guidance of the housing entry guiding surface (35).

44. The method according to claim 42, wherein the battery cell further comprises a support (3), and the support (3) is provided with a clearance hole (31), wherein said connecting the conductive part (22) to the first post terminal (12) comprises:
passing the conductive part (22) through the clearance hole (31); and
connecting the conductive part (22) to the first post terminal (12).

45. The method according to claim 42, wherein:
the first post terminal (12) is provided with a first accommodating groove (12110), a surface of the first post terminal (12) on a side proximal to the active substance-coated part (21) is a post terminal inner end surface (122), and an opening of the first accommodating groove (12110) is formed on the post terminal inner end surface (122); and
wherein said connecting the conductive part (22) to the first post terminal (12) comprises:
extending the conductive part (22) into the first accommodating groove (12110); and
connecting the conductive part (22) to the wall of the first accommodating groove (12110).

46. The method according to claim 42, wherein the first post terminal (12) is provided with a second accommodating groove (12120), a surface of the first post terminal (12) on a side distal to the active substance-coated part (21) is a post terminal outer end surface (123), an opening of the second accommodating groove (12120) is formed on the post terminal outer end surface (123), and the second accommodating groove (12120) is in communication with the interior of the housing (11) through a first perforation (12130); and
wherein said connecting the conductive part (22) to the first post terminal (12) comprises:
passing the conductive part (22) through the first perforation (12130) such that the conductive part (22) is at least partially accommodated in the second accommodating groove (12120); and
connecting the conductive part (22) to the wall of the second accommodating groove (12120) and/or the wall of the first perforation (12130).

47. The method according to claim 46, wherein the battery cell further comprises a first cover plate (13), and after welding the conductive part (22) to the first post terminal (12), the method further comprises:
welding the first cover plate (13) to the first post terminal (12) to close the opening of the second accommodating groove (12120).
